# EUROPÄISCHE PATENTSCHRIFT

(11) **EP 3 248 569 B1**
(45) Veröffentlichungstag und Bekanntmachung des Hinweises auf die Patenterteilung: **21.07.2021**
(21) Anmeldenummer: 17175963.2
(22) Anmeldetag: 10.04.2014
(51) Int. Cl.: A61C 15/04, A61C 15/02

(54) **FLOSSER**
FLOSSER
PORTE-FIL DENTAIRE

(30) Priorität: 16.04.2013 EP 13405046
(43) Veröffentlichungstag der Anmeldung: 29.11.2017
(62) Teilanmeldung aus: 14718503.7
(73) Patentinhaber: Trisa Holding AG, 6234 Triengen (CH)
(72) Erfinder: ZWIMPFER, Martin, 6004 Luzern (CH); KIRCHHOFER, Roger, verstorben (CH)
(74) Vertreter: Frei Patent Attorneys

(56) Entgegenhaltungen:
- CN-U- 201 558 187
- FR-A- 552 552
- US-A1- 2012 111 348

## Beschreibung

Die Erfindung bezieht sich auf das Gebiet der Mundhygiene. Sie betrifft ein Flosser nach dem Oberbegriff des Anspruchs 1.

Flosser sind kleine Halterungen zum Einspannen von Zahnseide zur Zahnzwischenraumpflege. Flosser sollen insbesondere die Anwendung der Zahnseide erleichtern. Flosser werden meist als fertigbespanntes Einwegprodukt angeboten. Flosser sind auch unter der Bezeichnung Flossette oder Zahngeige bekannt.

So beschreibt die DE 20 2012 008 171 U1 einen Flosser mit einem Handgriff und einem Halter, welche miteinander verbunden sind. Der Halter weist zwei Schenkel auf, zwischen denen eine Zahnseide gespannt ist. Ferner ist in den Handgriff ein Zahnstocher integriert.

Die WO 2012 116451 A1 beschreibt ebenfalls einen Flosser mit einem Handgriff und einem Halter für eine Zahnseide, welche miteinander verbunden sind. Der Halter weist zwei Schenkel auf, zwischen denen die Zahnseide gespannt ist. Ferner ist im Handgriff ein Zahnstocher integriert, welcher durch Wegbiegen über ein Scharnier vom Griffkörper abgewinkelt werden kann.

Die US 2012/111348 A1 beschreibt einen Flosser mit einem Griffkörper. Der Griffkörper bildet eine Aufnahme für einen Zahnstocher aus. Der Zahnstocher ist über ein erstes und zweites Brückenglied mit dem Griffkörper verbunden. Der Zahnstocher kann über die Brückenglieder aus der Aufnahme im Griffköper in eine Gebrauchsstellung ausgeschwenkt werden.

Die CN 201 558 187 U beschreibt einen Flosser mit integriertem Zahnstocher. Der Zahnstocher ist über ein Scharnier aus dem Griffkörper des Flossers ausschwenkbar. Der in eine Funktionsposition ausgeschwenkte Zahnstocher kann über Befestigungsmittel gegen ein weiteres Schwenken am Griffkörper fixiert werden.

Bei bekannten Flossern wird die vorproduzierte Zahnseide beim Herstellungsprozess mit den Halterarmen des Halters verbunden. In der Regel wird die Zahnseide während eines Spritzgiessverfahrens an ihren Endabschnitten von der die Halterarme ausbildenden Kunststoffmasse umschlossen.

Der so entstehende Verbund zwischen Zahnseide und Halterarm ist jedoch häufig ungenügend, so dass die Zahnseide bei Benutzung vielfach aus dem Halterarm ausgerissen wird. Um dies zu vermeiden, wird versucht, durch Anbringen eines Knotens in der Zahnseide eine mechanische Verankerung im Halterarm zu erreichen. Das Einbringen von Knoten in die Zahnseide geschieht jedoch nach wie vor manuell und ist daher äusserst aufwändig. Dies verteuert die Herstellungskosten des als Einwegartikel konzipierten Flossers unverhältnismässig stark.

Neben dem Ausreissen der Zahnseide aus dem Halterarm kommt es auch immer wieder zu Fadenbrüchen am Austrittspunkt der Zahnseide aus dem Halterarm. Dies ist die Folge einer starken Steifigkeitsänderung am Austrittspunkt im Gebrauch.

Es ist eine Aufgabe der Erfindung, einen multifunktionellen Flosser mit mehreren Funktionselementen zur Erfüllung verschiedener Aufgaben im Bereich der Mundhygiene zu schaffen. Der Flosser soll im Weiteren mit möglichst wenig Materialaufwand und möglichst einfach herstellbar sein. Der Flosser soll zudem zuverlässig in seiner Anwendung sein.

Die Aufgabe wird durch die Merkmale des unabhängigen Anspruchs 1 gelöst. Vorteilhafte Weiterbildungen und Ausführungsformen der Erfindung ergeben sich aus den abhängigen Ansprüchen, der Beschreibung und den Zeichnungen.

Der Halter, bzw. dessen Halterarme können so angeordnet sein, dass das Zahnzwischenraumreinigungselement in einem rechten Winkel zum Griffkörper verläuft. Ferner können der Halter, bzw. dessen Halterarme gegenüber dem Griffkörper auch derart angeordnet sein, dass das Zahnzwischenraumreinigungselement in einem Winkel von kleiner 90° und 0° oder grösser gegenüber dem Griffkörper verläuft.

Das Zahnzwischenraumreinigungselement ist insbesondere ein Längskörper, welcher in einen Zahnzwischenraum einführbar ist. Das Zahnzwischenraumreinigungselement verbindet zwei Halterarme miteinander und ist zwischen diesen insbesondere gespannt.

Der Halter kann einen Bogenabschnitt ausbilden, über welchen die Halterarme miteinander verbunden sind. Der Griffkörper ist über den Bogenabschnitt mit dem Halter verbunden.

Die Halterarme können ferner auch bis in den Griffkörper hineinführen und diesen teilweise ausbilden. Die Halterarme können im Griffkörper beispielsweise einen Zwischenraum einschliessen. Die Halterarme können ferner im Griffkörper über Verbindungsstege miteinander verbunden sein. Ferner kann ein Verbindungssteg den Griffkörper vom eigentlichen Halter begrenzen.

Der Flosser kann in einem Übergangsabschnitt zwischen Halterarme und Griffkörper einen flexiblen, nachgiebigen Abschnitt aufweisen, welcher z. B. nachgibt, wenn das Zahnzwischenraumreinigungselement mit zu viel Druck geführt wird. So kann der Übergangsabschnitt elastisch federnd ausgebildet sein.

Der Übergangsabschnitt kann insbesondere ein Halsabschnitt zwischen Halterarmen und Griffkörper sein. Die flexible Ausgestaltung des Übergangabschnittes kann durch den Werkstoff und/oder die Geometrie erreicht werden.

Der Übergangsabschnitt kann aus einem elastischen Material bestehen oder dieses enthalten, z. B. ein gummielastischer Kunststoff. Ferner kann der Übergangsabschnitt auch ein Federelement enthalten. Dieses kann zum Beispiel als Einlegeteil im Spritzgiessverfahren in den Flosser integriert werden.

Federelastische Eigenschaften können auch durch besondere Geometrien erzielt werden. So kann der Übergangsabschnitt gegenüber dem Griffkörper eine kleinere Querschnittsgrösse aufweisen, oder Verengungsstellen bzw. Rillen enthalten.

Der Übergangsabschnitt kann so ausgebildet sein, dass dieser in Längs- und/oder Querrichtung des Flossers nachgiebig bzw. elastisch ist. Ferner kann der Übergangsabschnitt auch nachgiebig bzw. elastisch bezüglich einer Verdrehung um die Längsachse des Flossers sein.

Die Länge der Halterarme des Halters kann z.B. 10 bis 25 mm, insbesondere 14 bis 20 mm betragen. Die Breite der Halterarme kann z. B. 1 bis 3 mm, vorzugsweise 1.5 bis 2.3 mm betragen. Die Tiefe der Halterarme kann z. B. 1.5 bis 2.3 mm betragen.

Die Halterarme können einen rundlichen Querschnitt, beispielsweise kreisförmig oder oval, oder einen polygonalen Querschnitt, wie beispielsweise quadratisch oder rechteckig mit gerundeten Ecken, aufweisen.

Der Querschnittsgeometrie und die Querschnittsgrösse der Halterarme kann entlang ihrer Längserstreckung gleichbleibend ausgebildet sein oder sich ändern. Die Halterarme können sich zu ihrem freien Ende hin z. B. verjüngen.

Ferner können die Querschnittsgeometrie und/oder die Querschnittsgrösse der beiden Halterarme gleich oder unterschiedlich sein. So kann z. B. wenigstens ein Halterarm dünner ausgebildet sein, um die Zahnzwischenraumpflege auch bei Trägern von Zahnspangen zu vereinfachen.

Der Halter kann über ein integriertes Scharnier mit dem Griffkörper verbunden sein und über das Scharnier gegenüber dem Griffkörper aus einer Passivposition in eine Funktionsposition knickbar bzw. schwenkbar sein. So können Halter und Griffkörper in der Passivposition des Halters in einer gemeinsamen Ebene ausgeordnet sein. Der Halter wird über das Scharnier aus der Ebene in die Funktionsposition geschwenkt. Das Scharnier kann ein integriertes Filmscharnier sein.

Die Verwendung eines Filmscharniers weist Vorteile bei der Herstellung auf. So ist diese weniger aufwändig. Ferner ist die Ergonomie in der Anwendung besser. Weitere Funktionselemente, wie beispielsweise Zungenreiniger, Polierelement, Spiegel, Intcrdcntalbürstc, Ständer, Standfuss oder Zahnstocher, können ebenfalls über ein Filmscharnier in eine andere Position gebracht werden. Die genannten Funktionselemente können über das Filmscharnier insbesondere geschwenkt bzw. ausgeklappt werden.

Dabei ist es möglich in einem Halter mehrere verschiedene schwenk- bzw. klappbare Funktionselemente unterzubringen, dabei können mehrere Schwenkrichtungen realisiert werden. D.h. die Drehachsen der Filmscharniere sind nicht zwingend parallel.

Ferner können Verbindungsmittel, wie weiter unten beschrieben, vorgesehen sein, mittels welchen der Halter in seiner Passiv- und/oder Funktionsposition lösbar oder unlösbar am Griffkörper arretiert werden kann. So kann am Halter ein erstes und am Griffkörper ein zweites Verbindungsmittel angeordnet sein, über welche die Verbindung hergestellt wird.

Die Verbindungsmittel sind insbesondere zur Ausbildung einer reib- und/oder formschlüssigen Verbindung ausgelegt. Die Verbindungsmittel können z. B. zur Herstellung einer Schnapp- oder Rastverbindung ausgelegt sein und entsprechende Rast- bzw. Schnappmittel enthalten. Dementsprechend kann die Verbindung lösbar oder unlösbar realisiert werden.

Der Flosser besteht bevorzugt aus Kunststoff oder enthält Kunststoff. Der Flosser kann z. B. in einem ein- oder mehrstufigen Spritzgiessverfahren hergestellt sein. Einzelne Elemente des Flossers, insbesondere Funktionselemente, wie Zungenreiniger, bzw. dessen Reinigungselemente, Zahnzwischenraumreinigungselemente, Polierelemente, Spiegel, Interdentalbürste, oder Zahnstocher, können aus einem anderen Werkstoff bestehen oder einen anderen Werkstoff enthalten, als andere Elemente des Flossers, wie Halter, Halterarme oder Griffkörper.

Weiter ist es auch möglich, dass die Grundelemente des Flossers nämlich der Halter, die Halterarme und der Griffkörper in mehr als einem Spritzgiessschritt und aus mehr als einem Werkstoff hergestellt sind.

Der Flosser kann sowohl eine oder mehrere Hartkomponenten als auch eine oder mehrere Weichkomponenten enthalten. Die Weichkomponente kann z. B. ein gummielastisches Kunststoffmaterial sein.

Der Flosser ist zum Beispiel mit seinen Funktionselementen einteilig ausgebildet. Die Funktionselemente sowie allfällige Scharniere, Sollbruchstellen und Verbindungsmittel des Flossers können integral mit dem Flosser in einem Spritzgiessverfahren hergestellt werden.

So kann der Flosser zum Beispiel in einem so genannten Co-Injection-Verfahren hergestellt werden. Beim Co-Injection-Verfahren werden mindestens zwei Werkstoffkomponenten, z. B. eine Hart- und eine Weichkomponente, durch einen gemeinsamen oder durch verschiedene Anspritzpunkte gleichzeitig oder nacheinander in eine gemeinsame Werkzeugkavität gespritzt.

Die zweite Komponente kann dabei die erste Komponente durchdringen oder diese umhüllen.

So kann gemäss einer Variante, z. B. über eine Heisskanaldüse, eine erste Materialkomponente in die Werkzeugkavität gespritzt werden, wobei die Werkzeugkavität mit der ersten Materialkomponente partiell befüllt wird.
Die eingespritzte erste Materialkomponente wird anschliessend in der Werkzeugkavität abgekühlt, wobei wenigstens eine fliessfähige Seele erhalten bleibt.

Anschliessend wird durch dieselbe Heisskanaldüse eine zweite Materialkomponente in dieselbe Werkzeugkavität des Spritzgicsswcrkzcugcs gespritzt, wobei die Werkzeugkavität mit der zweiten Materialkomponente weiter gefüllt bzw. komplett gefüllt wird.

Während des Spritzgiessens der zweiten Materialkomponente wird die noch fliessfähige Seele der zuvor in die Werkzeugkavität gespritzten ersten Materialkomponente, z. B. im Bereich der Halterarme oder des Griffkörpers, in Materialfliessrichtung verdrängt, wobei die, insbesondere an die Kavitätenwand anliegende, zumindest teilweise verfestigte erste Materialkomponente die einfliessende zweite Materialkomponente wenigstens teilweise umgibt.

So können z. B. im Bereich der Halterung, z.B. in den Halterarmen, und/oder im Bereich des Griffkörpers Anspritzpunkte angeordnet sein. Bevorzugt wird ein Spritzgiessverfahren so ausgeführt, dass sich keine Fliessfronten im Zahnzwischenraumreinigungselement und/oder den Halterarmen treffen, da diese Teile im Gebrauch mechanisch hochbeansprucht sind.

Um dies zu erreichen, ist es auch möglich, die so genannte Core-Back-Technologie einzusetzen, um die Füllung der Spritzgiesskavität entsprechend zu steuern.

Bei der Core-Back-Technologie, auch Verbundspritzgiessen genannt, werden die unterschiedlichen Materialien nacheinander gespritzt. Nachdem die Kavität durch eine erste Komponente gefüllt ist, wird eine Änderung der Kavität erzeugt. Der bereits gefüllte Kavitätsbereich wird zu einem noch ungefüllten Kavitätsbereich hin geöffnet bzw. erweitert. Die Restfüllung des Bauteils erfolgt durch einen weiteren Anguss mit einer zweiten Komponente. Es können sowohl gleiche Komponente als auch unterschiedliche Komponente zum Einsatz kommen. Voraussetzung für das Core-Back-Verfahren ist eine Formteilgeometrie, die es ermöglicht, dass der Hohlraum für die zweite Komponente über entsprechende Mittel freigestellt werden kann, und dass beide Komponenten aneinander haften.

Wird das Zahnzwischenraumreinigungselement nicht spritzgegossen, so kann auch dieses vorgängig in die Werkzeugform eingelegt und vor dem Auswerfen der Flosser geschnitten werden.

So kann z. B. ein Zahnzwischenraumreinigungselement in die Werkzeugform eingelegt werden, und anschliessend, insbesondere in einem Co-Injection-Vefahren, eine erste Komponente, insbesondere ein Weichmaterial, gespritzt werden. In einem weiteren Schritt wird eine zweite Komponente, insbesondere ein Hartmaterial, gespritzt. Danach wird der Flosser entformt.

So können die Halterarme aus einem Hartmaterial bestehen oder dieses enthalten. Das Hartmaterial fixiert das Zahnzwischenraumreinigungselement. Der Griffkörper kann aus einem Weichmaterial bestehen oder diese enthalten, z. B. als aussen liegende Schicht.

Die verschiedenen Werkstoffkomponenten bilden während der Herstellung beispielsweise eine Stoff- und/oder Formschlussverbindung aus. Es kann jedoch bei gewissen Anwendungen, wie weiter unten noch erläutert, vorgesehen sein, dass die Werkstoffkomponenten sich nicht miteinander verbinden.

Es kann z. B. vorgesehen sein, dass zwischen dem Halter und dem Griffkörper ein Verbindungsabschnitt aus einer flexiblen, insbesondere elastischen Werkstoffkomponente (z.B. einer Weichkomponente) angeordnet ist, so dass Halter und Griffkörper gegeneinander bewegt werden können. Weiter kann auch vorgesehen sein, die Hartkomponente schlanker zu dimensionieren und/oder diese mit einer Weichkomponente zu überdecken, um die genannte Elastizität zu erreichen.

Der Flosser kann so ausgebildet sein, dass dieser für den Gebrauch in zwei oder mehr als zwei Teile getrennt werden kann. Dies geschieht beispielsweise durch Knicken oder Rcisscn der Teile entlang einer Sollbruchstcllc. Die Sollbruchstcllc kann eine Schwächungszone sein. Durch das Abtrennen von Teilen des Flossers, insbesondere des Griffkörpers, können Funktionselemente, wie z. B. Zahnstocher, Zungenreiniger, Polierelement, Spiegel, Interdentalbürste, etc., freigelegt werden.

Es kann vorgesehen sein, dass zwei voneinander getrennte Teile, z. B ein vom Flosser abgetrennter Standfuss, in einer anderen Position relativ zueinander wieder zusammengefügt werden können, z. B. durch Zusammenstecken. So kann es z. B. vorgesehen sein, dass der Halter vom Griffkörper abtrennbar ist und wieder zusammensteckbar ist.

Ferner können auch Funktionselemente vom Flosser abtrennbar und mit diesem wieder zusammensteckbar sein.

Im Weiteren können Funktionselemente vom Flosser ausschwenkbar bzw. ausklappbar sein.

Der Flosser kann flach ausgebildet sein und einen flachen Griffkörper enthalten. Flach bedeutet, dass die Höhe des Flossers bzw. des Griffkörpers wesentlich kleiner ist als die Länge und Breite des Flossers bzw. Griffkörpers. Der Halter kann z. B. mit seinen Halterarmen in einer Ebene mit dem Griffkörper liegen. Ferner können auch Funktionselemente zumindest in ihrer Passivposition in einer Ebene mit dem Griffkörper liegen.

Der Flosser kann auch als Volumenkörper ausgebildet sein. Volumenkörper heisst, dass die Breite und Höhe desselbigen in einem ähnlichen Grössenbereich liegen. Der Volumenkörper kann als Vollkörper oder als Hohlkörper ausgebildet sein. Ein als Hohlkörper ausgebildeter Volumenkörper kann Durchbrüche durch die Körperwand nach aussen aufweisen.

In Teilen des Flossers können Durchbrüchc durch den Körper realisiert sein, die es erlauben, den Materialaufwand erheblich zu reduzieren.

Teile des Flossers, insbesondere der Griffkörper, können z. B. (Verstärkungs-) Rippen enthalten, welche erlauben, mit möglichst wenig Materialaufwand einen stabilen und trotzdem leichten Volumenkörper herzustellen.

Ferner ist es auch möglich, durch Falten einzelner Elemente des Flossers, welche z. B. flach ausgebildet sind, einen Volumenkörper herzustellen. So kann beispielsweise aus einem flachen Grundkörper durch Falten einzelner Elemente ein Volumenkörper hergestellt werden, welcher die Handhabung des Flossers vereinfacht. Auf diese Weise kann insbesondere durch Falten und eventuell wieder Einrasten von Elementen des Flossers ein Griffkörper als Volumenkörper hergestellt werden. Der Flosser kann hierzu, insbesondere im Griffkörper, beispielsweise eine Mehrzahl gegeneinander faltbare Flächensegmente enthalten.

Das Falten der Elemente geschieht zum Beispiel entlang von Soll-Knick-Stellen, welche z. B. Filmscharniere ausbilden. Die Elemente bzw. die Flächensegmente können im gefalteten Zustand fallweise über Verbindungsmittel, wie sie im Zusammenhang mit dem Zahnstocher beschrieben sind, miteinander verbunden werden.

Durch das Falten kann auch erreicht werden, dass die Verbindungsmittel ineinander einrasten, jedoch auch ineinander bewegbar, beispielsweise geführt werden. Dadurch ist in der Funktionsposition keine oder nur eine beschränkte Bewegung möglich. Beispielsweise, dass der Körper sowohl flach als auch voluminös geformt werden kann.

Funktionselemente eines Flossers können nebeneinander oder übereinander z. B. im Griffkörper angeordnet sein. Gewisse Teile der Funktionselemente können mehrere Funktionen inne haben. So können Elemente des Zungenreinigers, z. B. eine bzw. mehrere Lamellen oder eine bzw. mehrere Noppen, ein Verbindungsmittel für eine Form- und/oder Rcibschlussvcrbindung zwischen einem Funktionselement, wie Zahnstocher oder Interdentalbürste, und dem Griffkörper ausbilden. Hierzu wird das Funktionselement über den Zungenreiniger, welcher z. B. im Griffkörper vorgesehen ist, gelegt.

Damit liegen die beiden Funktionselemente übereinander. Generell können die Verbindungselemente im Bereich einer anderen Funktionalität liegen, beispielsweise in der Funktionalität oder auf der Rückseite der besagten Funktionalität.

Das Zahnzwischenraumreinigungselement ist gemäss einer Ausführungsvariante zusammen mit den beiden Halterarmen des Flossers integral ausgebildet. Halterarme und Zahnzwischenraumreinigungselement sind insbesondere integral hergestellt. So können Halterarme und Zahnzwischenraumreinigungselement integral in einem oder mehreren Spritzgiessverfahren bzw. Spritzgiessschritten hergestellt werden. Auf diese Weise kann auf eine Zuführung und prozesstechnische Integration von Zahnseide verzichten werden, was den Herstellungsaufwand und entsprechend die Herstellungskosten erheblich reduziert.

Der Halter bzw. die Halterarme und das Zahnzwischenraumreinigungselement können in einem einzigen Spritzgiessschritt hergestellt werden, wobei Halter bzw.

Halterarme und Zahnzwischenraumreinigungselement aus demselben oder unterschiedlichen Werkstoffen bestehen.

Der Halter bzw. die Halterarme und das Zahnzwischenraumreinigungselement können auch in zwei oder mehr Spritzgiessschritten hergestellt werden, wobei Halter bzw. Halterarme und Zahnzwischenraumreinigungselement z. B. aus unterschiedlichen Werkstoffen bestehen.

So können der Halter bzw. die Halterarme und das Zahnzwischenraumreinigungselement in einem zweistufigen Spritzgiessverfahren, insbesondere in einem oben beschriebenen Co-Injection-Verfahren, hergestellt werden.

Ferner kann beispielsweise im Co-Injection-Verfahren in einem ersten Spritzgiessschritt eine erste Materialkomponente in die Werkzeugkavität gespritzt werden, welche den Halter bzw. die Halterarme sowie den Griffkörper ausbildet.

In einem zweiten Spritzgiessschritt wird die zweite Materialkomponente eingespritzt, welche das Zahnzwischenraumreinigungselement ausbildet. Dies geschieht insbesondere bevor die erste Materialkomponente vollständig erstarrt ist.

Die zweite Materialkomponente fliesst insbesondere durch die erste Materialkomponente hindurch und füllt so denn noch freien Teil der Kavität, welcher das Zahnzwischenraumreinigungselement bildet.

Die beiden Materialkomponenten können über einen gemeinsamen Anspritzpunkt in die Werkzeugkavität eingespritzt werden (Co-Injection-Verfahren). Der Anspritzpunkt kann in den Halterarmen liegen.

Dabei kann beim Spritzen der zweiten Materialkomponente ein Teil der ersten Materialkomponente in dem oder den Halterarmen verdrängt werden. D.h., die zweite Materialkomponente, welche das Zahnzwischenraumreinigungselement ausbildet, bricht im Bereich der Halterarme durch.

Eine weitere Anwendungsmöglichkeit des Co-Injection-Verfahrens liegt darin, dass für den ersten Spritzgiessschritt das Zahnzwischenraumreinigungselement bereits in die Kavität eingelegt wird. Im ersten Spritzgiessschritt wird sodann eine Weichkomponente in die Kavität eingebracht. Im zweiten Spritzgiessschritt wird eine Hartkomponente eingebracht. Durch ein entsprechendes Timing im Verfahren soll erreicht werden, dass das Zahnzwischenraumreinigungselement in der Hartkomponente verankert wird. Im Griffkörper weist der Flosser für einen guten Griff eine Oberfläche aus einer Wcichkomponcntc auf.

Vorzugsweise gehen die Halterarme und das Zahnzwischenraumreinigungselement miteinander einen Materialschluss ein. Das Material der Halterarme und des Zahnzwischenraumreinigungselement können zwecks Ausbildung eines optimalen Stoffschlusses aufeinander abgestimmt sein, so dass das Zahnzwischenraumreinigungselement bei der Benutzung nicht vom Halterarm abgerissen oder aus diesem herausgerissen wird.

Ist dies aufgrund der Materialwahl nicht möglich, wird an der Schnittstelle ein Formschluss vorgesehen.

So kann zum Beispiel in einem ersten Schritt das Zahnzwischenraumreinigungselement, optional zusammen mit Verankerungs-Schnittstellen, hergestellt werden.

In einem zweiten Schritt wird der Halter bzw. werden die Halterarme und gegebenenfalls auch der Griffkörper durch Umspritzen des Flosser-Teils aus dem ersten Spritzgiessschritt hergestellt.

Das separat hergestellte Zahnzwischenraumreinigungselement kann zum Beispiel eine Folie sein, z. B. aus Kunststoff. Die Folie kann eine Zwei- oder Mehrkomponentenfolie sein. Die Folie kann eine PET-Folie sein oder eine solche enthalten. Die Folie kann strukturiert sein und z. B. eine Oberflächentopographie aufweisen.

Das separat hergestellte Zahnzwischenraumreinigungselement kann auch eine Zahnseide sein. Hierbei ist es möglich, dass der erste Schritt das eigentliche Herstellen einer herkömmlich bekannten Zahnseide ist, welche z. B. mit Knoten an den Enden versehen ist.

Im Folgenden wird anstelle von Zahnscidc der Begriff Faserkörper verwendet. In der vorliegenden Schrift wird Faserkörper wie folgt verstanden:
- Ein Faserkörper ist ein im Verhältnis zur Länge dünnes und flexibles Gebilde, insbesondere ein linienförmiges textiles Gebilde, welches in Längsrichtung keine Druck-, sondern nur Zugkräfte aufnehmen kann, da dieses bei Druckbelastung knickt;
- Ein Faserkörper kann eine Zahnseide bzw. ein Zahnfaden aus bzw. mit einer oder mehreren Fasern sein(z. B. Volumen-Zahnseide);
- Ein Faserkörper kann ein textiles Gebilde, wie Gewebe, sein;
- Ein Faserkörper kann als einteiliger Körper im Spritzgiessverfahren hergestellt sein, also keine Fasern enthalten bzw. als Einzelfaser ausgebildet sein, beispielsweise in Form einer Einzelfaser hergestellt mittels Spritzguss.

Es kann auch vorgesehen sein, dass das Zahnzwischenraumreinigungselement, insbesondere ein Faserkörper, zusammen mit seitlich vom Zahnzwischenraumreinigungselement angeordneten Verbindungselementen einteilig in einem Spritzgiessverfahren hergestellt wird. Der Flosser mit Griffkörper und Halterarmen wird vorzugsweise ebenfalls in einem Spritzgiessverfahren und insbesondere einteilig hergestellt. Halterarme und Verbindungselemente enthalten Verbindungsschnittstellen, welche erlauben, das Zahnzwischenraumreinigungselement mittels einer Form- und/oder Kraftschlussverbindung, z. B. eine Klick- oder Schnappverbindung, über die Verbindungselemente mit den Halterarmen zu verbinden. Eine Stoffschlussverbindung, wie Kleben oder Schweissen, ist wie auch ein Materialschluss durch Umspritzen der Schnittstelle ebenfalls möglich.

Das Zahnzwischenraumreinigungselement kann aus einer Weichkomponente oder einer Kombination von Weich- und Hartkomponente hergestellt sein. Das Zahnzwischenraumreinigungselement kann z. B. mittels "Core-Back-Technologie" hergestellt werden.

Das Zahnzwischenraumreinigungselement ist wenigstens abschnittsweise als Faserkörper ausgebildet. Das Zahnzwischenraumreinigungselement kann auch durchgehend zwischen den beiden Halterarmen als Faserkörper ausgebildet werden.

Der Aussen-Durchmesser des Faserkörpers kann 0.08 bis 0.3 mm, vorzugsweise 0.1 mm bis 0.25 mm betragen, wenn er im Spritzgiessverfahren hergestellt wird. Der Durchmesser von Faserkörpern aus herkömmlich bekannten Zahnseiden entspricht dem Durchmesser gebräuchlicher Zahnseiden.

Der Querschnitt des Faserkörpers kann rund, wie beispielsweise kreisförmig oder oval, oder auch polygonal, wie beispielsweise rechteckig oder dreieckig sein. Mehrere Querschnittsformen können kombiniert sein und so einen Querschnitt bilden. Der Querschnitt kann sowohl symmetrisch als auch asymmetrisch gestaltet sein. Die Aussenkontur des Querschnitts ist bevorzugt geschlossen.

Der Querschnitt kann sich über die Länge des Faserkörpers verändern und einen Querschnittsverlauf ausbilden. So kann der Querschnitt beispielsweise an den Enden grösser sein als im mittleren Abschnitt. Der Querschnitt kann über die Länge auch ein wellenförmiges zu- und abnehmendes Querschnittsprofil aufweisen.

Eine unterschiedliche Querschnittsprofilierung bringt eine entsprechend veränderliche Längsprofilierung mit sich, die sich wiederum wellenförmig, geradlinig oder sonst wie querschnittsabhängig ausgestalten kann.

Das Zahnzwischenraumreinigungselement kann von einem zentralen Grundkörper bzw. Faserkörper radial abstehende Reinigungselemente, wie Borsten, Noppen oder Lamellen, enthalten. Die Reinigungselemente können, z. B. ringförmig, über den vollen Umfang, also 360° (Winkelgrade) oder über einen oder mehrere Teilumfänge des Grundkörpers angeordnet sein. Die Lamellen können den Grundkörper als Lamcllcnring oder spiralförmig umgeben.

Weiter kann das Zahnzwischenraumreinigungselement bzw. dessen zentraler Grundkörper mit einer speziellen Oberfläche ausgestattet sein. Die Oberfläche kann beispielsweise als Textur wie, Riffelung, Erosionsstruktur, abwechslungsweise glatte/polierte Oberfläche, aufgeraute Oberfläche oder auch in einer Kombination der vorab erwähnten Möglichkeiten ausgeführt sein.

Im Fall, wenn das Zahnzwischenraumreinigungselement mittels Spritzgiessen hergestellt wird bzw. mittels Spritzgiessen in den Halterarmen verankert wird, ist die Austrittstelle des Zahnzwischenraumreinigungselements aus den Halterarmen eine Schlüsselstelle. Dieser Übergang ist vorzugsweise nicht scharfkantig gestaltet und mit grosszügigen Übergangsradien versehen. Weiter ist auch eine trichterförmige Verengung jeweils von den Halterarmen weg möglich.

Die Reinigungselemente können abschnittsweise oder über die gesamte Längserstreckung des Zahnzwischenraumreinigungselements zwischen den beiden Halterarmen angeordnet sein. Es können auch zwischen den beiden Halterarmen abschnittsweise Reinigungselemente sowie abschnittweise ein Faserkörper vorgesehen sein. So können beispielsweise nur in einem mittleren Bereich des Zahnzwischenraumreinigungselements Reinigungselemente vorgesehen sein.

Die Reinigungselemente können integral mit dem Grundkörper bzw. Faserkörper ausgebildet sein. So können Halterarme, Reinigungselemente und Grundkörper integral in einem Spritzgiessverfahren hergestellt sein.

Das Zahnzwischenraumreinigungselement kann auch als separates Bauteil ausgebildet sein, welches im Rahmen des Fertigungsprozesses, z. B. im Spritzgiessverfahren, oder einen mechanischen Montageschritt mit den Halterarmen verbunden wird. Gemäss dieser Ausführung kann das Zahnzwischcnraumrcinigungsclcmcnt auch ein Faserkörper in Form eines Zahnfadens sein, welcher aus einer oder einer Mehrzahl von Fasern, z. B. aus Kunststofffasern besteht. Solche Zahnzwischenraumreinigungselemente zur Zahnzwischenraumreinigung sind auch unter dem Namen Zahnseide bekannt.

Der Faserkörper kann mit seinen Endabschnitten in einem Spritzgiessverfahren in die Halterarme integriert werden. Zur Verankerung der Zahnseide in den Halterarmen während derer Herstellung, können in den Endabschnitten der Zahnseide Verankerungselemente, welche zum Beispiel kugelförmig oder zylinderförmig ausgebildet sind, vorgesehen sein. Die Verankerungselemente können in einem Spritzgiessverfahren an den Faserkörper angespritzt werden. Die Verankerungselemente können auch in den Faserkörper, insbesondere in die Zahnseide, eingebrachte Knoten sein.

Ferner ist es auch möglich, dass Verbindungselemente seitlich an das Zahnzwischenraumreinigungselement, z. B. an einen Faserkörper, wie Zahnseide, angebracht werden. Diese können z. B. in einem Spritzgiessverfahren angespritzt werden. Die Verbindungselemente und die Halterarme des Flossers weisen Verbindungsschnittstellen zur Herstellung einer Form- und/oder Kraftschlussverbindung oder Stoffschlussverbindung auf. Das Zahnzwischenraumreinigungselement kann nun in einem mechanischen Montageschritt über die Verbindungselemente mittels einer Form- und/oder Kraftschlussverbindung oder auch Stoffschlussverbindung mit den Halterarmen verbunden werden.

Das Zahnzwischenraumreinigungselement, insbesondere der Faserkörper, kann zwischen den Halterarmen vorgespannt oder ungespannt sein. Unabhängig vom Typ des Faserkörpers kann z.B. bei der Auslegung (Form) des Flossers darauf geachtet werden, dass die Halterarme nach dem erstarren der Kunststoffmasse und dem daraus resultierenden Schwundes eine (Zug-) Spannung auf den Faserkörper ausgeübt wird.

Die Verbindungsstellen zwischen den Halterarmen und dem Zahnzwischenraumreinigungselement sind bevorzugt am äussersten Ende des Halterarmes angeordnet.

Das Zahnzwischenraumreinigungselement und die Endpunkte der Halterarme können insbesondere in dem Fall, in welchem das Zahnzwischenraumreinigungselement spritzgegossen ist, bevorzugt auf einer Linie liegen. Die Halterarme bilden insbesondere keine über das Zahnzwischenraumreinigungselement hinausgehende Endabschnitte aus.

Zwischen dem äussersten Ende bzw. zwischen dem freien Ende des Halterarms und der Verbindungsstelle kann auch ein Abstand ausgebildet sein. Die Distanz vom äusseren freien Ende des Halterarmes zur Verbindungsstelle des Zahnzwischenraumreinigungselement, insbesondere des Faserkörpers, kann z. B. 1 bis 3 mm und insbesondere 1 bis 2.5 mm betragen.

Diese Masse gelten bevorzugt nur in Varianten, in denen die äusseren Ende der Halterarme nicht im selben Schritt mit dem Zahnzwischenraumelement gefertigt werden, weil um die Verbindungsstelle genügend Volumen der Halterarme vorhanden sein muss, um eine optimale Verbindung zu erstellen.

Die Verbindungsstelle zum Halterarm liegt bevorzugt auf der Mittelebene die durch die Halterarme geht.

Im Weiteren können mehrere in Abstand zueinander angeordnete Zahnzwischenraumreinigungselemente, insbesondere Faserkörper, vorgesehen sein. Die Zahnzwischenraumreinigungselemente bilden jeweils entlang der Halterarme voneinander beabstandete Verbindungsstellen zu den Halterarmen aus.

So können zwei, drei oder mehr als drei Zahnzwischenraumreinigungselemente vorgesehen sein.

Die Zahnzwischenraumreinigungselemente können parallel zueinander angeordnet sein. Die Zahnzwischenraumreinigungselemente können sich kreuzend angeordnet sein. Die Zahnzwischenraumreinigungselemente können in einem Winkel zueinander verlaufend angeordnet sein.

Der Abstand zwischen den Zahnzwischenraumreinigungselementen bzw. zwischen deren Verbindungsstellen kann 0.5 bis 3 mm, vorzugsweise 1 bis 2 mm betragen.

Die mehreren Zahnzwischenraumreinigungselemente können auf einer Linie entlang der Halterarme angeordnet. Die mehreren Zahnzwischenraumreinigungselemente können in einer Ebene angeordnet sein.

Die Zahnzwischenraumreinigungselemente, insbesondere wenn drei oder mehr davon vorgesehen sind, können quer zu den Halterarmen betrachtet seitlich versetzt zueinander und folglich nicht in einer gemeinsamen Ebene, angeordnet sein. Entsprechend liegen die Verbindungsstellen am Halterarm nicht in einer Linie.

Die Zahnzwischenraumreinigungselemente können gleich oder unterschiedlich ausgebildet sein. So kann ein erstes, äusseres Zahnzwischenraumreinigungselement als Folie aus einem PTFE und ein zweites, inneres Zahnzwischenraumreinigungselement als Volumen-Zahnseide ausgebildet sein. Das erste Zahnzwischenraumreinigungselement unterstützt das erleichterte Eindringen in den Zahnzwischenraum. Beide Zahnzwischenraumreinigungselemente zusammen dienen der Reinigung des Zahnzwischenraums.

Das im Spritzgiessverfahren hergestellte Zahnzwischenraumreinigungselement kann aus Hart- und/oder Wcichmatcrial oder aus einem Gemisch aus Hart- und Wcichmaterial bestehen. Weiter ist ein Einsatz von Material möglich, welches für die Herstellung von gespritzten Borsten eingesetzt wird.

Die Distanz zwischen den Halterarmen beziehungsweise die Länge des Zahnzwischenraumreinigungselements beträgt zwischen 10 und 25 mm, vorzugsweise zwischen 12 und 18 mm.

Gemäss einer weiteren Ausführungsvariante enthält der Halter wenigstens ein Dämpfungselement. Dies kann insbesondere von Bedeutung sein, wenn der Halter und insbesondere die Halterarme aus einer Hartkomponente gefertigt sind. Wie nachfolgend erläutert, dient das Dämpfungselement der Minderung von Stössen an Zahnfleisch und Zähne durch den Flosser während seiner Benutzung.

Das Dämpfungselement weist bevorzugt elastische Eigenschaften auf. Die elastischen Eigenschaften können durch den Werkstoff und/oder durch die Formgebung bedingt sein.

Das Dämpfungselement kann aus einer Weichkomponente bestehen oder diese enthalten. Dies trifft insbesondere zu, wenn die elastischen Eigenschaften des Dämpfungselementes durch den Werkstoff bedingt sind.

Das Dämpfungselement kann als Vollkörper ausgebildet sein, insbesondere wenn die elastischen Eigenschaften durch den Werkstoff bedingt sind.

Das Dämpfungselement kann aus einer Hartkomponente bestehen oder diese enthalten. Dies trifft insbesondere zu, wenn die elastischen Eigenschaften des Dämpfungselementes durch die Formgebung bedingt sind.

Elastische Eigenschaften durch die Formgebung werden beispielsweise durch eine Ausgestaltung des Dämpfungselementes als Hohlkörper, oder durch eine Ziehharmonika ähnliche Ausgestaltung erreicht. Ein Hohlkörper enthält beispielsweise elastische Wände. Das Dämpfungselement kann ferner auch als längliches Element von vergleichsweise kleinem Durchmesser ausgebildet sein. Das Dämpfungselement kann z. B. als Bogen ausgebildet sein.

Das Dämpfungselement kann als in sich geschlossene, halb offene oder offene Geometrie geformt sein.

Das Dämpfungselement kann integral mit den Armen bzw. dem Bogenabschnitt ausgebildet sein. Dämpfungselement und Arme bzw. Bogenabschnitt können integral in einem Spritzgiessverfahren hergestellt sein. Die Herstellung des Flossers mit Dämpfungselement kann z. B. in einem Mehrkomponenten-Spritzgiessverfahren erfolgen.

Das Dämpfungselement kann zum Beispiel in einem mehrstufigen Spritzgiessverfahren in einem separaten Spritzgiessschritt an den Halter angespritzt werden.

Gemäss einem ersten Aspekt ist ein Dämpfungselement zwischen den beiden Armen und in Richtung Griffkörper im Abstand zum Zahnzwischenraumreinigungselement angeordnet. Das Dämpfungselement weist mit seinem dämpfenden Abschnitt zum Zahnzwischenraumreinigungselement hin. Das Dämpfungselement kann insbesondere im Bogenabschnitt angeordnet sein, welcher die Halterarme miteinander verbindet oder diesen Bogenabschnitt ausbilden.

Das Dämpfungselement dient als Schutz vor Verletzungen durch die aus einer Hartkomponente gefertigten Elemente des Flossers beim ruckartigen Eindringen des Zahnzwischenraumreinigungselements in den Zahnzwischenraum oder auch als Schutz für zu tiefes Eindringen des Zahnzwischcnraumrcinigungsclcmcnts in den Zahnzwischenraum resp. in das Zahnfleisch.

Das Dämpfungselement kann zum Zahnzwischenraumreinigungselement hin z. B. konkav oder konvex ausgebildet sein.

Das Dämpfungselement kann auch als elastisch verformbaren Bogen ausgebildet sein, welcher im Bogenabschnitt angeordnet ist und sich zwischen den Halterarmen erstreckt. Der Bogen kann z. B. flach ausgestaltet sein. In diesem Fall kann das Dämpfungsmaterial auch aus einer Hartkomponente bestehen. Der Bogen ist zum vorzugsweise konvex ausgebildet. Es ist auch möglich, dass das Dämpfungselement wellenförmig, gelocht, lamellenartig, etc. ausgebildet ist.

Das Dämpfungselement kann auch an einem die Arme miteinander verbindenden Verbindungssteg im Übergang zum Griffkörper angeordnet sein bzw. diesen ausbilden.

Gemäss einem zweiten Aspekt ist das Dämpfungselement innen- und/oder aussenseitig am Halterarm angeordnet. Das Dämpfungselement kann sich ausgehend vom Bogenabschnitt bis zu den Verbindungsstellen des Zahnzwischenraumreinigungselements an den Halterarmen erstrecken. Innenseitig bedeutet, dass das Dämpfungselement zum Zahnzwischenraumreinigungselement gerichtet ist.

Das Dämpfungselement dämpft insbesondere Stösse des Flossers gegen Zähne und Zahnfleisch wie sie beim Hin- und Herbewegen des Flossers auftreten können.

Gemäss einer besonderen Ausführungsform führt das Zahnzwischenraumreinigungselement an seiner Verbindungsstelle zum Halterarm bevorzugt durch das Dämpfungselement hindurch. D. h. das Dämpfungselement ist um die Verbindungsstelle des Zahnzwischenraumreinigungselements herum angeordnet. Das Zahnzwischcnraumrcinigungsclcmcnt kann auch mit dem Dämpfungselement verbunden, insbesondere kann es integral verbunden sein.

Der Durchmesser des Dämpfungselementes kann z. B. 1 bis 6 mm, vorzugsweise 2 bis 4 mm betragen. Der Durchmesser nimmt vorzugsweise ausgehend vom Halterarm in Richtung gegenüber liegendem Halterarm ab.

Die Länge des Dämpfungselementes in Richtung des Zahnzwischenraumreinigungselements beträgt beispielsweise. 1 bis 4 mm, vorzugsweise 2 bis 3 mm.

Das Dämpfungselement kann zum Beispiel rotationssymmetrisch um das Zahnzwischenraumreinigungselement angeordnet sein. Das Dämpfungselement kann auch eine der Zahngeometrie angepasste Form haben.

Das Dämpfungselement kann als Hohlkörper oder als Vollkörper ausgebildet sein, insbesondere ist auch eine ziehharmonika-artige Ausformung möglich.

Das Dämpfungselement kann am jeweiligen Halterarm fixiert sein, beispielsweise angespritzt, angeklebt oder auch mechanisch verrastet. Ferner kann das Dämpfungselement auch lose, d.h. sich in Längsrichtung des Zahnzwischenraumreinigungselements bewegbar angeordnet sein.

Gemäss einem dritten Aspekt ist das Dämpfungselement am Endabschnitt der Halterarme angeordnet. Dadurch werden Stösse durch Enden der Halterarme gegen Zähne und Zahnfleisch gedämpft. Das Dämpfungselement kann z. B. kappenartig über den Endabschnitt angeordnet sein. Der Endabschnitt kann mit einer Weichkomponente überzogen sein.

Die Länge des Überzugs in Richtung Halterarme kann z. B. 1 bis 5 mm, vorzugsweise 1 bis 3.5 mm betragen. Die Schichtdickc kann z. B. 0.1 bis 1.5 mm, insbesondere 0.3 bis 1 mm betragen.

Gemäss einem vierten Aspekt ist das Dämpfungselement bogenförmig entlang des durch den Bogenabschnitt und die Halterarme ausgebildeten Innenbogens, d.h. entlang des Bogenabschnitts und der Halterarmen angeordnet. Das Dämpfungselement kann sich ferner um die Endabschnitte der Halterarmen zu deren Aussenseiten hin erstrecken und die Endflächen der Halterarme abdecken.

Das Dämpfungselement ist insbesondere als eine Art Lippe ausgebildet.

Gemäss einer ersten Variante ist das Dämpfungselement auf dem Bogenabschnitt und den Halterarmen befestigt, insbesondere durchgehend befestigt.

Gemäss einer zweiten Variante ist das Dämpfungselement entlang des Innenbogens als frei liegendes, lippenartiges Element ausgebildet. So kann das Dämpfungselement z. B. lediglich mit seinen Endabschnitten auf der Aussenseite der Halterarme im Bereich ihrer Endabschnitte an diese befestigt sein.

Es sind auch Zwischenformen zwischen der ersten und zweiten Variante möglich, indem das Dämpfungselement z. B. punktuell oder abschnittsweise am Innenbogen befestigt ist und abschnittsweise frei liegend ausgebildet ist.

Dämpfungselemente gemäss dem ersten, zweiten, dritten, vierten und fünften Aspekt sind beliebig miteinander kombinierbar.

Der Flosser kann ferner ein Spannelement zum Spannen des Zahnzwischenraumreinigungselement, insbesondere des Faserkörpers, enthalten. Das Spannelement kann eine Fingerauflage auf einem der Halterarme sein. Das Spannen des Zahnzwischcnraumrcinigungsclcmcnts erfolgt durch Druckbcaufschlagung auf die Fingerauflage durch einen Finger.

Der Halterarm, welcher zum Spannen eingesetzt wird, enthält bevorzugt eine elastische Zone, damit dieser zum Spannen des Zahnzwischenraumreinigungselements entsprechend elastisch biegbar ist. Dies kann z. B. eine Verjüngung im Halterarm oder ein Armabschnitt aus einer oder mit einer Weichkomponente sein.

Das Spannelement ist vorzugsweise am Halterarm angeordnet, der auf der Griffkörper-Seite angeordnet ist.

Gemäss einer weiteren Ausführungsvariante enthält der Flosser im Griffkörper wenigstens ein oder mehrere weitere Funktionselemente für die Mundhygiene. Das oder die weiteren Funktionselemente sind mit dem Griffkörper bevorzugt integral ausgebildet. Das oder die weiteren Funktionselemente sind mit dem Griffkörper insbesondere integral in einem Spritzgiessverfahren hergestellt. Dementsprechend kann es aus derselben Materialkomponente bestehen wie der Griff.

Das weitere Funktionselement kann gegenüber dem Griffkörper aus einer anderen Werkstoffkomponente, wie z. B. Weichkomponente, bestehen oder diese enthalten.

Ferner ist es auch möglich, dass das Funktionselement aus derselben Materialkomponente wie der Griffkörper hergestellt ist, aber in einem separaten SpritzgiessSchritt eingebracht wird. Auf diese Weise kann beispielsweise eine andere Farbe realisiert werden, oder es können andere Additive der Materialkomponente beigemischt werden.

Das weitere Funktionselement kann über ein zwischen Griffkörper und dem Funktionselement integriertes Scharnier aus dem Griffkörper weggebogen und von diesem abgewinkelt werden.

Gemäss Erfindung ist das Scharnier im Griffkörper angeordnet. Über das Scharnier kann ein Teil des Griffkörpers weggeschwenkt werden, wodurch das Funktionselement aus dem Griffkörper freigelegt wird. Das Scharnier kann zum Beispiel ein Filmscharnier sein.

Der Schwenkwinkel kann beliebig sein und wird durch die geometrischen Rahmenbedingungen festgelegt. Der Schwenkwinkel kann insbesondere auch 30, 60, 90, 120, 150 und 180 Grad umfassen.

Das weitere Funktionselement kann ein erstes Verbindungsmittel enthalten. Am Griffkörper ist vorzugsweise auch ein zweites Verbindungsmittel angeordnet. Die Verbindungsmittel sind zur Ausbildung einer lösbaren oder nicht-lösbaren Verbindung zwischen dem Funktionselement und dem Griffkörper im ausgeschwenkten Zustand des Funktionselementes ausgelegt, wenn dieses in Funktionsposition ist.

Eine mögliche Ausgestaltung der oben genannten Verbindungsmittel ist zum Beispiel nachfolgend im Zusammenhang mit dem Zahnstocher offenbart. Die Verbindungsmittel sind anwendbar auf verschiedene Funktionselemente wie Zahnstocher, Zungenreiniger, Polierelement, Spiegel, Interdentalbürste etc.

Anstelle eines Scharniers kann auch eine Sollbruchstelle vorgesehen sein, über welche das Funktionselement vom Griffkörper weggebrochen und als separiertes Teil benutzt werden kann.

Weiter kann am Griffkörper ein Verbindungselement vorgesehen sein, welches erlaubt, das vom Griffkörper abgebrochene Funktionselement wieder an diesem zu montieren bzw. zu befestigen. Dies kann zum Beispiel über eine Formschlussverbindung, wie Rastverbindung, geschehen.

Das weitere Funktionselement kann zum Beispiel ein Zahnstocher sein. Der Zahnstocher kann fest am Flosscr angebracht sein oder, wie bereits bcschricbcn, aus dem Flosser ausklappbar oder vom Flosser abtrennbar sein.

Der Zahnstocher enthält an seinem freien Ende eine Reinigungsspitze.

Der Flosser kann eine Abdeckkappe zum Abdecken der Reinigungsspitze bzw. des Zahnstochers enthalten. Die Abdeckkappe kann auf den Zahnstocher bzw. die Reinigungsspitze aufsteckbar sein. Die Abdeckkappe kann im Spritzgiessverfahren hergestellt sein. Die Abdeckkappe kann aus einem anderen Kunststoffmaterial hergestellt sein als der Zahnstocher.

Die Abdeckkappe kann insbesondere aus einem Material hergestellt sein, das sich nicht mit dem Material des Zahnstochers verbindet. Die Herstellung der Abdecckappe kann somit im selben Spritzgiessverfahren erfolgen wie der Zahnstocher.

Die Abdeckkappe selbst kann ein Funktionselement ausbilden. Dieses Funktionselement kann eine Bürste, wie eine gedrehte Bürste oder eine Klein-Zahnbürste sein. Der Zahnstocher dient dabei als Grundstruktur für das Funktionselement. Für die Anwendung des Funktionselements auf der Abdeckkappe wird die Abdeckkappe aufgesteckt. Der Zahnstocher ist gemäss dieser Ausführungsvariante insbesondere nicht schwenkbar gelagert.

Die Querschnittsform des Zahnstochers kann rund, wie kreisförmig oder oval, oder polygonal, wie rechteckig oder dreieckig sein. Der Zahnstocher kann flach ausgebildet sein, mit zwei einander gegenüber liegenden Flächenseiten und zwei einander gegenüber liegenden schmalen Seitenkanten.

Der Querschnitt des Zahnstochers kann vom Austrittspunkt zur Reinigungsspitze hin abnehmend sein und in einen Spitz laufen. Weiter kann der Querschnitt auch über die Länge gleichbleibend ausgeformt sein und sich in einem Endabschnitt zu einem Spitz verjüngen.

Die Oberfläche des Zahnstochers kann glatt oder rauh sein. Die Oberfläche kann eine Textur enthalten und z. B. geriffelt sein oder ein anderes Rauhigkeitsmuster, wie Erosionsstruktur, enthalten. Ferner kann der Zahnstocher auch abstehende Elemente, beispielsweise in Form geometrischer Figuren wie Kreuze oder Striche, enthalten.

Der Zahnstocher kann geradlinig oder gekrümmt, z. B. sichelförmig ausgebildet sein. Geradlinig bedeutet, dass die Reinigungsspitze in der Längsachse des Zahnstochers liegt.

Der Zahnstocher kann über ein zwischen Griffkörper und Zahnstocher angeordnetes Scharnier aus einer Passivposition in eine Funktionsposition vom Griffkörper und insbesondere aus seiner Ebene weggeschwenkt und von diesem abgewinkelt werden. Anstelle eines Scharniers kann auch eine Sollbruchstelle vorgesehen sein, über welche der Zahnstocher vom Griffkörper weggebrochen werden kann.

Der Zahnstocher kann in der Passivposition in der Ebene des Griffkörpers liegen.

Der Zahnstocher oder generell die Funktionselemente können in verschiedene Richtungen geschwenkt werden. Der Zahnstocher beispielsweise kann über das Zahnzwischenraumreinigungselement gelegt werden oder auch auf die dem Zahnzwischenraumreinigungselement entgegengesetzte Seite.

Der Zahnstocher bildet ausgehend vom Scharnier bzw. von der Sollbruchstelle bevorzugt Seitenkanten aus, welche in einen Spitz aufeinander zulaufen. Ferner kann der Zahnstocher zwischen den Seitenkanten eine obere und untere Grundfläche ausbilden. Die Grundflächen des Zahnstochers sind zum Beispiel parallel zur Ebene des Griffkörpers angeordnet.

Gemäss einer bevorzugten Weiterbildung dieses Erfindungsaspektes ist zumindest die Spitze des Zahnstochers und vorzugsweise der ganze Zahnstocher in der Passivposition entlang der Seitenkanten wenigstens teilweise, vorzugsweise vollständig vom Griffkörper umgeben. Der Griffkörper bzw. Teile davon bilden einen Schutz für den Zahnstocher, insbesondere für die Reinigungsspitze, aus.

Der Zahnstocher und insbesondere die Spitze des Zahnstochers ist im ausgeschwenkten Zustand, d.h. in der Funktionsposition, vorzugsweise aus der Ebene des Griffkörpers weggeschwenkt und steht insbesondere von diesem ab. Die Reinigungsspitze des Zahnstochers weist vom Griffkörper weg. Der Zahnstocher kann in Funktionsposition immer noch in der Ebene des Griffkörpers liegen oder einen Winkel zu dieser ausbilden.

Der Griffkörper kann zum Beispiel einen Zwischenraum ausbilden. Der Griffkörper kann zum Beispiel einen ersten und zweiten Arm enthalten, welche den Zwischenraum einschliessen. Die Arme sind zum Beispiel in dem vom Halter entfernten Endabschnitt des Griffkörpers miteinander verbunden. Die Arme können auch die Fortsetzung der Halterarme sein.

Im genannten Zwischenraum kann nun der Zahnstocher in seiner Passivposition angeordnet und über das Scharnier oder der Sollbruchstelle mit dem Griffkörper verbunden sein. Das Scharnier bzw. die Sollbruchstelle kann am Endabschnitt des Griffkörpers, welcher vom Halter entfernt ist, oder an einem der Arme oder an einem Verbindungssteg zwischen den beiden Armen angeordnet sein. Der Verbindungssteg kann zum Beispiel zum Halter hin angeordnet sein.

Der Zahnstocher kann auch seitlich am Griffkörper angeordnet sein, so dass die eine Seitenkante des Zahnstochers zum Griffkörper hin gerichtet ist und die andere Scitcnkantc des Zahnstochers einen Abschnitt der Ausscnkontur des Griffkörpers ausbildet.

Am Zahnstocher kann ein erstes Verbindungsmittel und am Griffkörper ein zweites Verbindungsmittel angeordnet sein. Die Verbindungsmittel sind zur Ausbildung einer lösbaren oder nicht-lösbaren Verbindung zwischen dem Zahnstocher und dem Griffkörper im ausgeschwenkten Zustand des Zahnstochers ausgelegt, wenn dieser in Funktionsposition ist. Durch die beschriebene Verbindung wird der Zahnstocher in Funktionsposition gehalten.

Die Verbindungsmittel sind insbesondere zur Ausbildung einer reib- und/oder formschlüssigen Verbindung ausgelegt. Die Verbindungsmittel können z. B. zur Herstellung einer Schnapp- oder Rastverbindung ausgelegt sein und entsprechende Rast- bzw. Schnappmittel enthalten.

So kann das eine Verbindungsmittel eine Vertiefung oder ein Durchbruch, wie beispielsweise ein Sack- oder Durchgangsloch, und das andere Verbindungsmittel eine Erhöhung, z. B. ein Noppen oder Zapfen enthalten. Beim Ausschwenken des Zahnstochers greift die Erhöhung bei Erreichen der Funktionsposition formschlüssig in die Vertiefung bzw. in den Durchbruch ein. Die Verbindung wird z. B. durch einen Klickeffekt hergestellt.

Anstelle von Ausschwenken über ein Scharnier kann der Zahnstocher auch über eine Sollbruchstelle vom Griffkörper weggebrochen und über die genannten Verbindungsmittel in der Funktionsposition wieder mit dem Griffkörper zusammengesetzt werden.

Noppe und Vertiefung bzw. Durchbruch können zylinderförmig ausgebildet sein. Die Noppe kann endseitig eine Abrundung aufweisen. Die Noppe kann auch als Halbkugel ausgebildet sein. Die Noppe kann konisch ausgebildet sein. D.h., der Durchmesser am freien Ende ist kleiner als Durchmesser am Ansatz. Die Noppe kann auch nur zum Endabschnitt hin konisch ausgebildet sein. Die Höhe des konisch ausgebildeten Endabschnittes ist z. B. maximal 50% der Gesamthöhe.

Die Vertiefung bzw. der Durchbruch kann einen Durchmesser von 0.5 bis 2 mm, vorzugsweise von 0.8 bis 1.5 mm aufweisen.

Die Noppe kann einen Durchmesser von 0.5 bis 2 mm, vorzugsweise von 0.8 bis 1.5 mm aufweisen. Die Noppe kann eine Höhe von 0.8 bis 3 mm, vorzugsweise von 1.2 bis 1.8 mm aufweisen.

Im Zusammenspiel der beiden Elemente Vertiefung und Noppe passiert vorzugsweise eine Klemmung oder Rastung. Die Klemmung ist durch ein Übermass erzeugt, das heisst dass sich die beiden Elemente "überschneiden". Die Überschneidung beträgt von 0.005 bis 0.2 mm, vorzugsweise von 0.01 bis 0.06 mm. Eine Rastung kann durch geometrische Hinterschneidungen und entsprechende Überstände am Gegenelement erreicht werden.

Gemäss Erfindung ist das Scharnier im Griffkörper angeordnet. Über das Scharnier können ein oder mehrere Teile des Griffkörpers, nachfolgend Schutzteile genannt, weggeschwenkt bzw. weggebrochen werden, wodurch der Zahnstocher freigelegt wird. Die genannten Schutzteile bilden einen Schutz für den Zahnstocher in seiner Passivposition aus.

Der Schutz ist in der Funktionsposition durch ein oder mehrere Verbindungsmittel fixiert.

Die Schutzteile selbst können ein Funktionselement, wie Zungenreiniger, enthalten.

Der Griffkörper kann wenigstens bereichsweise mindestens zweilagig ausgebildet sein. Die eine Lage bildet ein Funktionselement wie Zahnstocher aus, welches in der beschriebenen Art über ein Scharnier aus dem Griffkörper ausgeschwenkt oder über eine Sollbruchstelle vom Griffkörper weggebrochen werden kann.

Über dem Zahnstocher, insbesondere über der Reinigungsspitze kann eine Schutzkappe angeordnet sein, welche für den Gebrauch abziehbar ist. Die Schutzkappe ist bevorzugt über eine Form- und/oder Reibschlussverbindung aufgesetzt. Die Schutzkappe kann aus einer Weichkomponente mit zum Beispiel elastischen Eigenschaften sein, welche sich am Zahnstocher festklemmt. Die Schutzkappe kann auch aus einer Hartkomponente sein.

Um bei der Herstellung einen zusätzlichen Montageschritt zu vermeiden, wird die Schutzkappe vorzugsweise in einem Mehrkomponenten-Spritzgussverfahren gespritzt, wobei die Kunststoffe der Schutzkappe und des Zahnstochers bzw. dessen Oberfläche vorzugsweise nicht verbindend sind.

Der Zahnstocher kann weiter mit einer weichen Oberfläche ausgestattet sein, der Kern besteht aus Hartmaterial und die Oberfläche aus Weichmaterial. Hart- und Weichmaterial verfügen in diesem Fall über einen Materialschluss.

Vorzugsweise werden, falls vorhanden, die verschiedenen Zonen (Zahnstocher, Zungenreiniger, Dämpfungselement, Griffflächen, Borstenkörper, Polierkörper etc. bestehend aus Weichmaterial am Flosser im gleichen Herstellungsschritt mittels einem Anspritzpunkt erstellt.

Der Flosser kann als weiteres Funktionselement einen Zungenreiniger enthalten. Der Zungenreiniger kann zum Beispiel ein oder mehrere gleich oder unterschiedlich ausgebildete Reinigungselemente enthalten.

Der Zungenreiniger bzw. dessen Reinigungselemente können im Griffkörper, insbesondere in dessen Endabschnitt, welcher vom Halter entfernt ist, angeordnet sein.

Der Zungenreiniger bzw. dessen Reinigungselemente können auf einem oder mehreren am Griffkörper angeformten Aufnahmeelementen angeordnet sein. Das Aufnahmeelement kann Teil des Griffkörpers sein.

Das Aufnahmeelement kann z. B. ein Federarm sein, der im Gebrauch eine gewisse Elastizität mit sich bringt. Die Elastizität kann in diesem Fall beispielsweise auch durch Stellen an den Federarmen realisiert werden, die als Materialschwächungen realisiert sind.

Das Aufnahmeelement kann z. B. über ein Scharnier, insbesondere Filmscharnier, aus dem Griffkörper von einer Passivposition in eine Funktionsposition schwenkbar sein. Das Aufnahmeelement kann auch über eine Sollbruchstelle aus dem Griffkörper wegbrechbar sein.

Die Federarme sind vorzugsweise U-förmige Konturen, die geschlossen sind. Eine Realisierung von Federarmen, die nicht geschlossen sind, ist möglich, jedoch ist eine solche Ausgestaltung für die Mundhygiene nicht optimal aufgrund des Verletzungspotentials durch stechen.

Die genannten Federarme ermöglichen es beispielsweise verschiedene Reinigungselemente auf verschiedenen Federarmen zu realisieren und so einen mit Federarmen aufgebauten Zungenreiniger zu realisieren. Ein solcher Aufbau wäre beispielsweise durch mehrere U-förmige Federarme, die ineinander liegen, möglich. Der Querschnitt des einzelnen Federarms kann sich über die Länge verändern, beispielsweise vom Federarmprofil zum Schabcrkantcnprofil.

Der Zungenreiniger bzw. dessen Reinigungselement können auch auf dem Halter, bzw. auf dessen Halterarmen, auf dem Bogenabschnitt, auf dem Zahnstocher oder auf einem anderen Funktionselement angeordnet sein.

So kann der Zungenreiniger bzw. seine vorstehenden Reinigungselemente, wie Noppen oder Lamellen, auf der Aussenseite des Halterarms angeordnet sein. Die Reinigungselemente können z. B. in einer Reihe nebeneinander auf dem Halterarm angeordnet sein. Die Zungenreinigung erfolgt in einer Bewegungsrichtung quer zur Längsrichtung des Flossers.

Die Reinigungselemente können so angeordnet und ausgerichtet sein, dass die Reinigungsbewegung quer zur Längsachse des Griffkörpers oder in der Längsachse des Griffkörpers durchgeführt werden kann.

Das Reinigungselement kann z. B. eine Lamelle sein. Die Lamelle kann z. B. in der Längsachse des Griffkörpers, quer dazu oder in einem Winkel zur Längsachse angeordnet sein. Die Lamelle kann eine Endkante umfassen. Die Lamelle ist z. B. flexibel, d.h. nachgiebig ausgebildet. Die Lamelle kann insbesondere elastische Eigenschaften aufweisen. Die Lamelle bzw. der vorab beschriebene Federarm kann aus einer Weichkomponente oder einer Kombination von Weich- und Hartkomponente hergestellt sein.

So kann die Lamelle z. B. einen Stützkörper aus einer Hartkomponente und auf dem Stützkörper einen Reinigungsteil aus einer Weichkomponente enthalten.

Die Lamelle kann eine Breite von 0.25 bis 1.2 mm, vorzugsweise von 0.6 bis 0.9 mm aufweisen. Die Lamelle kann eine Höhe von 0.4 bis 3 mm, vorzugsweise von 1 bis 2 mm aufweisen. Die Lamelle kann eine Länge von 0.5 bis 2.5 cm, vorzugsweise von 1.5 bis 2 cm aufweisen.

Der Zungenreiniger kann mehrere Lamellen enthalten, welche z. B. hintereinander in Reihe angeordnet sind. Ferner können die Lamellen auch ein Lamellenfeld ausbilden. Die Lamellen können bezüglich Geometrie und/oder Werkstoff gleichartig oder verschieden ausgebildet sein. So können sich weiche und harte Lamellen abwechseln.

Eine einzeln stehende, vom Rest des Zungenreinigers abgesetzte Lamelle, wird auch als Schaberkante bezeichnet. Schaberkanten sind aus Hartmaterial oder aus einer Kombination aus Hartmaterial und Weichmaterial hergestellt, vorzugsweise aus Hartmaterial.

Das Reinigungselement kann auch eine Noppe sein. Als Noppe ist eine höckerartige, kegelförmige oder kugelförmige Erhebung auf einer Oberfläche zu verstehen.

Die Noppe ist z. B. flexibel, d.h. nachgiebig ausgebildet. Die Noppe kann insbesondere elastische Eigenschaften aufweisen. Die Noppe kann aus einer Weichkomponente, einer Hartkomponente oder einer Kombination von Weich- und Hartkomponente hergestellt sein.

So kann die Noppe z. B. einen Stützkörper aus einer Hartkomponente und auf dem Stützkörper einen Reinigungsteil aus einer Weichkomponente enthalten.

Die Noppe kann einen Durchmesser von 0.25 bis 1.2 mm, vorzugsweise von 0.6 bis 0.9 mm aufweisen. Die Noppe kann eine Höhe von 0.25 bis 0.6 mm, vorzugsweise von 0.3 bis 0.45 mm aufweisen.

Der Zungenreiniger kann mehrere Noppen enthalten, welche z. B. hintereinander in Reihe oder nebeneinander in einer Zeile angeordnet sind. Ferner können die Noppen auch ein Noppcnfcld ausbilden.

Noppen und/oder Lamellen und/oder Schaberkanten können integral mit dem Flosser bzw. mit dem Griffkörper in einem Spritzgiessverfahren, insbesondere in einem Mehrkomponenten- Spritzgiessverfahren hergestellt werden.

Das Reinigungselement kann auch einen Borstenkörper umfassen. Der Borstenkörper enthält eine Mehrzahl von Borsten. Die Borsten können im Spritzgiessverfahren integral mit dem Flosser hergestellt, d.h. gespritzt, werden.

Der Durchmesser einer einzelnen Borste beträgt z. B. 0.25 bis 1.2 mm, vorzugsweise 0.6 bis 0.9 mm. Die Länge einer einzelnen Borste beträgt z. B. 1.5 bis 4 mm, vorzugsweise 2 bis 3 mm.

Die Querschnittskontur der einzelnen Borste kann z. B. geschlossen oder offen sein. Die Borste kann auch als Hohlkörper ausgebildet sein. Die Querschnittskontur sollte jedoch spritzgiessfähig sein.

Die einzelne Borste kann eine Abschlusskappe enthalten. Diese kann eckig oder rund ausgebildet sein. Der Borstenkörper kann einzelne Reihen von Borsten enthalten. Der Borstenkörper kann auch ein Borstenfeld enthalten.

Es sind auch Kombinationen von unterschiedlichen Reinigungselementen wie Lamellen, Borstenkörper und Noppen möglich. So können Noppen und Lamellen einander abwechseln. Ferner können Lamellen und Borstenkörper einander abwechseln.

Der Flosser kann als weiteres Funktionselement ein Polierelement enthalten. Das Policrclcmcnt dient zum Polieren der Zahnobcrflächcn, um dies z.B. von Ablagerungen zu befreien.

Die Polierfläche besteht bevorzugt aus einer Weichkomponente. Das Polierelement kann ein Vollkörper z. B. aus einer Weichkomponente sein. Das Polierelement kann auch einen Grundkörper, z. B. aus einer Hartkomponente, und ein auf dem Grundkörper aufgebrachtes Polierteil, z. B. aus einer Weichkomponente sein. Weiter ist es möglich das Polierelement als kugelig geformte Membrane aus einer Weichkomponente auszugestalten, wobei die Membrane an einem Rahmen aus einer Hartkomponente fixiert ist. Die Weichkomponente weist bevorzugt elastische Eigenschaften auf.

Das Polierteil kann auch als Membrane aus einer Weichkomponente ausgebildet sein, wobei die Membrane an einem Rahmen aus einer Hartkomponente, welche einen Teil des Grundkörpers bildet, fixiert ist. Die Membrane ist bevorzugt elastisch ausgebildet.

Das Polierelement kann im Endabschnitt des Griffkörpers, welcher vom Halter entfernt ist, angeordnet sein.

Das Polierelement kann eine gegenüber dem Griffkörper erhöht angeordnete Polierfläche ausbilden. Das Polierelement kann zum Beispiel höckerartig ausgebildet sein.

Das Polierelement kann einen Durchmesser von 3 bis 15 mm, vorzugsweise von 4 bis 8 mm aufweisen. Das Polierelement kann eine Höhe von 1 bis 5 mm, vorzugsweise von 2 bis 3 mm aufweisen. Ein als Membran ausgebildetes Polierteil kann eine Dicke von 0.3 bis 1.2 mm, vorzugsweise von 0.5 bis 0.8 mm aufweisen.

Der Flosser kann als weiteres Funktionselement ein Spiegel enthalten. Der Spiegel kann analog zum Zahnstocher über ein Scharnier ausklappbar oder über eine Sollbruchstelle vom Flosser abtrennbar sein. Hierzu wird auf die diesbezügliche Offenbarung verwiesen.

Der Spiegel kann als Einlegeteil im Spritzgiessverfahren in den Flosser integriert werden.

Der Flosser kann als weiteres Funktionselement eine Kleinzahnbürste, insbesondere Einweg-Zahnbürste, mit einem Borstenfeld enthalten. Die Borsten sind insbesondere im Spritzgiessverfahren gespritzt. Die Kleinzahnbürste kann über ein Scharnier, wie Filmscharnier, ausklappbar sein. Die Kleinzahnbürste kann, z. B. über eine Sollbruchstelle, vom Flosser abtrennbar sein.

Der Flosser kann als weiteres Funktionselement eine Interdentalbürste enthalten. Die Interdentalbürste kann am Griffkörper angebracht sein und zum Beispiel, analog zum Zahnstocher, über ein Scharnier von einer Passivposition in eine Funktionsposition aus dem Griffkörper schwenkbar bzw. klappbar sein. Die Interdentalbürste kann auch über eine Sollbruchstelle vom Griffkörper wegbrechbar sein. Der Griffkörper bzw. Teile davon können in der Passivposition analog zum Zahnstocher einen Schutz für die Interdentalbürste ausbilden.

Die Interdentalbürste kann auch in das zwischen den Halterarmen angeordneten und von diesen gehaltenen Zahnzwischenraumreinigungselement integriert sein. Hierzu enthält das Zahnzwischenraumreinigungselement wie oben beschrieben Borsten.

Die Interdentalbürste enthält eine Mehrzahl von Borsten. Die Borsten bzw. die Interdentalbürste können in einem Spritzgiessverfahren gespritzt und integraler Teil des Flossers sein.

Die Interdentalbürste kann auch als sogenannter Single Tuft angeordnet sein und durch ein Bcborstungsvcrfahrcn (Tufting) am Flosscr angebracht sein.

Die Interdentalbürste kann auch eine eingedrehte Bürste sein.

Die Interdentalbürste kann einen Grundkörper, wie z. B. ein stabförmiges Element, von welchem aus die Borsten wegführen, enthalten. Die Borsten können in der Ebene des Grundkörpers ausgerichtet sein.

Der Flosser kann als weiteres Funktionselement einen Saugnapf enthalten. Der Saugnapf kann am Griffkörper angebracht sein. Der Saugnapf dient zum Befestigen des Flossers auf einer Oberfläche. So kann der Flosser mittels Saugnapf an einen Badezimmerspiegel gehängt oder stehend auf einer Oberfläche sicher abgestellt werden.

Der Flosser kann als weiteres Funktionselement ein Fuss- bzw. ein Abstützelement zum Abstützen des Flossers auf einer Oberfläche enthalten. Der Fuss bzw. das Abstützelement kann am Griffkörper angebracht sein.

Der Fuss kann ausklappbar sein, z. B über ein Filmscharnier. Der Fuss kann auch vom Flosser abtrennbar sein, z. B. über eine Sollbruchstelle, und zur Ausübung seiner Funktion über eine Formschlussverbindung, z. B. Steckverbindung, an den Flosser befestigbar sein.

Das Abstützelement kann z. B. als Ständer ausgebildet sein. Der Ständer kann z. B. ausklapper sein. Der Ständer kann z. B. mit dem Flosser ein Dreibein ausbilden. Der Ständer kann über ein Filmscharnier analog zum Zahnstocher ausklappbar sein. Auf die diesbezügliche Beschreibung wird verwiesen.

Der Fuss bzw. das Abstützelement erlaubt das Aufstellen des Flossers zum Trocknen.

Der Saugnapf bzw. das Fuss- bzw. ein Abstützelement können integral in einem Spritzgiessverfahren, insbesondere in einem Mehrkomponenten-Spritzgiessverfahren, zusammen mit dem Flosser bzw. dem Griffkörper hergestellt werden.

Der Flosser kann ein oder mehrere Funktionselemente zur Abgabe wenigstens einer Wirksubstanz enthalten. Die wenigstens eine Wirksubstanz bildet z. B. zusammen mit einem geeigneten Trägermaterial das Funktionselement.

Das Funktionselement kann zum Beispiel ein Wirkkörper, insbesondere eine Wirkkugel (Bead) sein. Der Wirkkörper kann ein Festkörper sein.

Die Wirkkugel kann z. B. ein Mundwasser oder eine Zahnreinigungssubstanz enthalten.

Unter "Wirkkugel" soll in dieser Beschreibung ein rundlicher Körper mit einer Wirksubstanz verstanden werden.

Die Wirksubstanz kann, insbesondere zusammen mit einem Trägermaterial, in körniger, pulvriger, flüssiger, pastöser oder gelartiger Form vorliegen. Die Wirksubstanz des Funktionselements kann zum Beispiel wasserlöslich sein.

Die Wirksubstanz kann zur Reinigung, Desinfizierung, zur Geschmacksabgabe und/oder Parfümierung im Zusammenhang mit der Mundhygiene dienen. Ferner kann die Wirksubstanz zum Anzeigen eines Reinigungserfolges dienen. Ferner kann die Wirksubstanz auch zum Bleichen der Zähne dienen (Bleaching).

Es lassen sich daher folgende Typen von Wirksubstanzen unterscheiden:
- Wirksubstanzen zur Zahnreinigung. Diese können eine Wirkung ähnlich einer Zahnpasta entfalten. Die Wirksubstanzen können sein: Sorbitol, Aromen, Hydrated Silica, Sodium Lauryl Sulfate, Sodium Monofluorophosphate, Kreatin, Zink Sulfate, Tricolsan, Glycerin, Sodium Saccharin, Propylene Glycol, Disodium Phosphate, Alumina, Trisodium Phosphate, Sodium Fluoride, Betaine, Titanium Dioxide, Cellulose Gum, Tetrasodium Pyrophosphate, etc.;
- Wirksubstanzen mit antibakterieller Wirkung. Die Wirksubstanzen können sein: Sodium Bicarbonate, Citric Acid, Phosphoric Acid, Sodium Carbonate, Potassium Carbonate, Sodium Perborate, Sodium Hexametaphosphate, Sodium Benzoate, Sodium Stearate, etc.;
- Wirksubstanzen zum Anzeigen des Reinigungserfolges, z. B. durch Einfärben der Plaques auf der Zahnoberfläche. Die Wirksubstanzen können sein: Glucose, Maltodextrin, Magnesium Sterate, Aroma, Saccharin, Microcrystaline Cellulose, etc.;
- Wirksubstanzen mit Zusatzwirkstoffen, welche die vor genannten Wirkungen verstärken;
- Wirksubstanzen zum Bleichen der Zähne (Bleaching). Die Wirksubstanzen können Wasserstoffperoxid enthalten

Ferner kann die Reinigungssubstanz im Zusammenwirken mit konventionellen Reinigungsmitteln, insbesondere Zahnpasten, als Zweikomponentensystem wirken. Beim Zusammentreffen der Wirksubstanzen entsteht eine chemische oder physikalische Reaktion. Dieses System ist insbesondere für Wirksubstanzen vorgesehen, welche nicht zusammen in ein Reinigungsmittel, wie Zahnpasta, integriert werden können, da sie sonst unmittelbar miteinander reagieren würden.

Das Funktionselement kann eine oder mehrere, verschiedene Wirksubstanzen enthalten. Das Funktionselement kann mehrere Wirksubstanzen enthalten, welche im zcitlichcn Ablauf nacheinander freigesetzt werden und so verschiedene Wirkphasen entfalten.

Zu diesem Zwecke kann das Funktionselement ein Wirkkörper in Form eines Festkörpers sein, welcher mehrere Schalen oder Schichten mit jeweils verschiedenen Wirksubstanzen umfasst, wobei im zeitlichen Verlauf eine Schale bzw. Schicht nach der anderen abgebaut wird.

Der Wirkkörper kann eine Schale und einen flüssigen oder pulvrigen bzw. körnigen Kern enthalten, welcher nach Abbau der Schale freigesetzt wird.

Das Funktionselement ist mit seinem Abgabebereich für Wirksubstanzen insbesondere in der Nähe von Reinigungselementen, wie Borsten und/oder weichelastischen Elemente angeordnet, welche bewirken dass, die Wirksubstanzen im Zusammenwirken mit mechanischen Bewegungen der Reinigungselement ihre optimale Wirkung entfalten.

Weiter können Reinigungselemente so ausgestaltet sein, dass das Funktionselement für Wirksubstanzen Teil des Reinigungselementes ist.

Die Reinigungselemente können an die Eigenschaften der Wirksubstanzen angepasst sein, um optimale Ergebnisse zu erzielen. Beispielsweise:
- bei Kleinzahnbürsten abrasive Wirksubstanzen in Kombination mit kurzen Borsten zur Flächenreinigung mit "Whitening" Effekt;
- antibakterielle Wirksubstanzen für Tiefenreinigung in Kombination mit längeren Interdentalborsten;
- hautpflegende Wirksubstanzen in Kombination mit gummielastischen Polier-, Massage- oder Reinigungselementen zur Belebung von Zahnfleisch, Mundhöhle oder Zunge.

Der Wirkkörper wird z. B. am Flosser angebracht. Der Wirkkörper kann z. B. in einer Ausnehmung im Flosser, z. B. in einer Vertiefung im Halterarm angeordnet sein.

Das Funktionselement, insbesondere Wirkkörper, kann an einem Zungenreiniger, an einem Polierelement, an einem Zahnstocher, an einer Interdentalbürste, an einer Kleinzahnbürste, an den Halterarmen, am Zahnzwischenraumreinigungselement, am Dämpfungselement oder am Griffkörper direkt angeordnet sein.

Die Kleinzahnbürste kann insbesondere im Bereich des Borstenfeldes einen Wirkkörper, insbesondere eine Wirkkugel (Bead), mit einer reinigungswirksamen Wirksubstanz enthalten.

So kann die Wirksubstanz z. B. eine antibakterielle Wirkung im Bürstenkopf einer Interdentalbürste oder einer Kleinzahnbürste haben.

Das Funktionselement kann auch als Beschichtung, z. B. durch Aufspritzen, Eintauchen, Streichen, Bedampfen, etc. angebracht sein. Das Funktionselement kann in einem Spritzgiessvorgang angebracht werden. Das Funktionselement kann auch durch Aufkleben, z. B. als Etikett, angebracht sein. Das Funktionselement kann auch in einer Hinterfangung montiert bzw. angebracht sein. Das Funktionselement kann auch durch eine Formschlussverbindung, wie Nietverbindung, angebracht sein

Wirkstoff enthaltende Materialien gehen oft mit anderen Kunststoffen keine Materialverbindung ein, so dass in diesen Fällen eine mechanische Verbindung insbesondere durch Formschluss nötig ist.

Die Wirksubstanz kann zum Beispiel ein Mundwasser, Zahnpasta oder ein Zahnreinigungsextrakt sein.

Weiter ist es möglich diese Funktionalität in einem anderen Funktionsclcmcnt zu integrieren. So kann das Funktionselement mit Wirksubstanz an einem Zungenreiniger oder einem Polierelement angebracht sein, und zwar auf einer der reinigungs- bzw. polierwirksamen Seite gegenüber liegenden Seite.

Der Flosser kann als weiteres Funktionselement ein Sensorelement enthalten. Das Sensorelement kann am Griffkörper angebracht sein. Das Sensorelement kann dazu ausgelegt sein, bestimmte Parameter, wie Mundgeruch, pH-Wert oder Bakterien zu detektieren. Das Sensorelement kann als Sensorstreifen am Flosser angebracht sein.

Zur Verbesserung des Griffs kann der Griffkörper besondere Griffflächen, insbesondere Griffmulden, ausbilden. Diese zeichnen sich durch eine besondere Strukturierung bzw. Textur der Oberfläche (Rauhigkeitsmuster) und/oder durch eine besondere Werkstoffwahl (Hafteigenschaften) aus. So kann die Grifffläche beispielsweise Nuten, Lamellen oder Noppen enthalten. In Dieser Struktur können auch Schriftzüge/Logo (erhaben oder im Körper versenkt) eingebracht sein, die selbstverständlich auch der besseren Griffigkeit dienen.

Ferner kann der Werkstoff gute Hafteigenschaften aufweisen. Solche Hafteigenschaften werden z. B. mit der Verwendung einer Weichkomponente bzw. eines gummiartigen Werkstoffes erreicht. So kann insbesondere der Griffkörper einen Daumengriff enthalten. Die Oberfläche des Daumengriffs, d.h. die Griffflächen, können wie oben beschrieben ausgebildet sein und z. B. aus einer Weichkomponente sein oder diese enthalten.

Ferner können auch die Reinigungselemente, wie Noppen und Lamellen, Griffflächen für die Finger, insbesondere den Daumen ausbilden. So kann beispielsweise der Zungenreiniger auch als Daumengriff dienen.

Der Griffkörper kann ferner zwecks Materialeinsparung und Gewichtsoptimierung Durchbrüchc und Vertiefungen aufweisen.

Der Flosser kann ferner Mittel zum Spannen des Zahnzwischenraumreinigungselement enthalten. Diese Mittel, welche nachfolgend anhand von zwei Ausführungsformen beschrieben sind, können an beliebigen Flossern umgesetzt werden.

Durch das Abkühlen und Schwinden des Kunststoffes des Flossers, insbesondere der Halterarme, im Anschluss an den Spritzgiessgiessschritt, verliert das Zahnzwischenraumreinigungselement, insbesondere eine Zahnseide, häufig eine vor und während dem Spritzgiessschritt eingebrachte Vorspannung wieder. Die Mittel zum Spannen sollen nun insbesondere den Verlust der Vorspannung durch die Materialschwindung entgegen wirken.

Gemäss einer ersten Variante zu diesem Erfindungsaspekt enthält wenigstens ein Halterarm oder enthalten beide Halterarme wenigstens zwei unterschiedliche Materialien, insbesondere Kunststoffmaterialien. Die wenigstens zwei Materialien zeichnen sich insbesondere durch ein unterschiedliches Schrumpfungsverhalten beim Abkühlen aus. Dadurch wird ein dem Bimetall-Prinzip ähnlicher Effekt erzielt.

Die Materialien sind nun so in dem wenigstens einen Halterarm angeordnet, dass beim Abkühlen des Flossers im Anschluss an den Spritzgiessprozess die Vorspannung des Zahnzwischenraumreinigungselement während der Abkühlung erhalten bleibt oder weniger ausgeprägt abgebaut wird, oder die Spannung sogar erhöht wird.

Der wenigstens eine Halterarm ist zum Beispiel quer zu seiner Längsrichtung mehrschichtig aufgebaut. So kann auf der Aussenseite des Halterarm ein Kunststoffmaterial angeordnet sein mit einem höheren Schwund und auf der Innenseite des Halterarms ein Kunststoffinaterial mit einem geringerem Schwund im Vergleich zwischen den beiden Kunststoffmatcrialicn.

So kann während der Abkühlung auf den Halterarm durch die besondere Anordnung wenigstens zweier unterschiedlicher Kunststoffmaterialien eine nach aussen gerichtete Kraft wirken, welche einer Reduktion der Vorspannung entgegenwirkt.

Der wenigstens eine Halterarm kann während der Abkühlung insbesondere nach aussen gebogen werden, und so das Zahnzwischenraumreinigungselement spannen.

Die wenigstens zwei Kunststoffkomponenten im Halterarm können über eine Stoff- oder Formschlussverbindung miteinander verbunden sein.

Gemäss einer zweiten Variante enthält der Flosser ein Zugelement. Das Zugelement kann z. B. eine Rippe oder Steg, insbesondere Verbindungsrippe oder Verbindungssteg, sein. Das Zugelement ist insbesondere mit einem Halterarm verbunden. Das Zugelement kann so ausgelegt und am Flosser angeordnet sein, dass dieses beim Abkühlen durch den Schwund eine nach aussen, vom Zahnzwischenraumreinigungselement weg wirkende Zugspannung auf den Halterarm ausübt. Diese Zugspannung bewirkt, dass die Vorspannung des Zahnzwischenraumreinigungselement während der Abkühlung erhalten bleibt oder weniger ausgeprägt abgebaut wird, oder die Spannung sogar erhöht wird.

Das Zugelement kann sogar bewirken, dass dieses den Halterarm während der Abkühlung nach aussen vom Zahnzwischenraumreinigungselement weg biegt, und so die Spannung des Zahnzwischenraumreinigungselements erhöht.

Das Zugelement ist insbesondere aussen am Halterarm angebracht. Das Zugelement verbindet insbesondere aussenseitig den Halterarm mit dem Griffkörper oder einem Halsabschnitt. Das Zugelement überspannt insbesondere eine durch den Halterarm und dem Griffkörper ausgebildete Biegung bzw. Bogen. Das Zugclcmcnt kann insbesondere an dem, dem Griffkörper zugewandten, inneren Halterarm eines abgewinkelt ausgebildeten Flossers angeordnet sein.

Das Zugelement ist insbesondere ebenfalls aus Kunststoff und wird mittels Spritzgiessen hergestellt. Das Zugelement wird insbesondere zusammen mit dem Flosser in einem Spritzgiessverfahren hergestellt. Das Zugelement kann aus demselben Kunststoff sein wie der Halterarm oder der Griffkörper.

Eine weitere Ausführungsform eines Flossers zeichnet sich durch die besondere Art seiner Herstellung aus.

In einem ersten Schritt wird ein flächiges Bauteil aus Kunststoff oder Kunststoff enthaltend hergestellt. Das flächige Bauteil kann plattenartig sein. Das flächige Bauteil ist insbesondere ein flächiges Extrusionsprofil aus Kunststoff. Das Bauteil ist insbesondere bandförmig ausgebildet. Das Bauteil ist insbesondere ein Längsbauteil.

Das Bauteil enthält insbesondere eine Längsnut. Diese kann nachträglich in das Bauteil eingebracht sein. Die Längsnut kann beim Extrusionsprofil auch mitextrudiert sein.

In einem zweiten Schritt werden auf der einen Längsseite des Bauteils nebeneinander und in Abstand voneinander Ausnehmungen in das Bauteil eingebracht, welche zur Längsseite hin offen sind. Die Ausnehmungen können z. B. durch Ausstanzen eingebracht werden. Die Ausnehmungen sind insbesondere bogenförmig. Die Ausnehmungen sind insbesondere jeweils identisch.

Zwischen jeweils zwei Ausnehmungen ergeben sich fingerförmige Anformungen. Diese bilden die späteren Halterarme aus. Die Ausnehmungen bilden zwischen den fingerförmigen Anformungen einen Zwischenraum aus, welcher durch das später cingcbrachtc Zahnzwischcnraumrcinigungsclcmcnt überspannt wird.

Die Längsnut ist nach diesem Schritt in Form von Längsnutabschnitten in den fingerförmigen Anformungen angeordnet. Die Längsnut ist nicht mehr durchgängig sondern unterbrochen.

In einem dritten Schritt wird das Zahnzwischenraumreinigungselement, insbesondere ein Faserkörper bzw. Zahnfaden, in die Längsnutabschnitte in den fingerförmigen Anformungen eingelegt und in dieser arretiert. Die Arretierung kann durch Verrasten, Klemmen, Kleben, Schweissen oder Verpressen erfolgen.

Gemäss einer alternativen Ausführung kann anstelle einer Längsnut ein Filmscharnier vorgesehen sein, an welches zur Längsseite hin ein Schwenkabschnitt anschliesst. Der Schwenkabschnitt bildet insbesondere einen späteren Endabschnitt der fingerförmigen Anformung aus. Das Zahnzwischenraumreinigungselement wird nun im Bereich des Schwenkabschnittes eingelegt und durch Umschwenken des Schwenkabschnittes geklemmt. Das Zahnzwischenraumreinigungselement kann alternativ dazu auch zusätzlich verschweisst oder verklebt werden.

In einem vierten Schritt werden einzelnen Flosser entlang einer vorgegebenen Trennlinie aus dem vorbereiteten Bauteil heraus getrennt, z. B. durch Ausstanzen. Die Trennlinie führt jeweils durch die fingerförmigen Anformungen und unterteilt diese in je einen Halterarm von zwei benachbarten Flossern.

Der abgetrennte Flosser enthält zwei Halterarme ein zwischen diesen verlaufendes Zahnzwischenraumreinigungselement und einen Griffkörper.

Die vorliegende Ausführungsform zeichnet sich durch einen günstigen und äusserst rationellen Herstellungsprozess aus, welcher sich hervorragend für die Massenproduktion eignet. Die auf diese Weise hergestellten Flosser weisen eine optimale Spannung des Zahnzwischenraumreinigungselements auf, da hier im Vergleich zu Spritzgiessverfahren die Vorspannung nicht durch Schwundeffekte abgebaut wird, dies weil die Verarbeitung des extrudierten Bauteils vorzugsweise im erkalteten Zustand erfolgt.

Eine weitere Ausführungsform eines Flossers zeichnet sich ebenfalls durch die besondere Art seiner Herstellung aus.

In einem ersten Schritt werden zwei flächige Bauteile aus Kunststoff, oder Kunststoff enthaltend hergestellt. Die Bauteile können Folien oder Platten sein. Die Bauteile können Extrusionsbauteile sein.

In einem zweiten Schritt werden auf der einen Längsseite der beiden flächigen Bauteile nebeneinander und in Abstand voneinander Ausnehmungen in die Bauteile eingebracht, welche zur Längsseite hin offen sind. Die Ausnehmungen können z. B. durch Ausstanzen eingebracht werden. Die Ausnehmungen sind z. B. bogenförmig. Die Ausnehmungen sind insbesondere jeweils identisch.

Zwischen jeweils zwei bogenförmigen Ausnehmungen ergeben sich fingerförmige Anformungen. Diese bilden die späteren Halterarme aus. Die Ausnehmungen bilden zwischen den fingerförmigen Anformungen einen Zwischenraum aus, welcher durch das später eingebrachte Zahnzwischenraumreinigungselement überspannt wird.

In einem dritten Schritt werden die beiden Bauteile zusammengeführt und flächig verbunden. Die Ausnehmungen bzw. die fingerförmigen Anformungen in den beiden Bauteilen sind dabei aufeinander ausgerichtet, d.h. in Register.

Beim oder vor dem Zusammenführen der beiden Bauteile wird das Zahnzwischenraumrcinigungsclcmcnt im Bereich der Endabschnitte der fingerförmigen Anformungen zwischen die beiden Bauteile eingelegt und mit den beiden Bauteilen verbunden. Die Verbindung der beiden Bauteile und entsprechend die Befestigung des Zahnzwischenraumreinigungselement kann mittels Kleben oder Schweissen geschehen.

Die Verbindung der beiden Bauteile kann entweder ganzflächig, d.h. über die gesamte identische Fläche der Bauteile erfolgen, oder nur partiell, d.h. über einen Teil der gesamten identischen Fläche.

In einem vierten Schritt werden einzelnen Flosser entlang einer vorgegebenen Trennlinie aus dem vorbereiteten Bauteil heraus getrennt, z. B. durch Ausstanzen. Die Trennlinie führt durch die fingerförmige Anformung und unterteilt diese in je einen Halterarm von zwei benachbarten Flossern.

Der heraus getrennte Flosser enthält zwei Halterarme, einen zwischen diesen verlaufenden Zahnfaden und einen Griffkörper.

In die flächigen Bauteile kann durch ein Tiefziehverfahren oder ein Prägeverfahren eine dreidimensionale Struktur mit Erhöhungen und Vertiefungen im Bauteil, insbesondere in den späteren Griffkörper des Flossers, eingebracht werden. Die dreidimensionalen Strukturen können die Haptik verbessern und die Stabilität des Flossers erhöhen.

Die dreidimensionalen Strukturen können vor dem Verbinden der Bauteile in eines oder beide der Bauteile eingebracht werden. Die dreidimensionalen Strukturen können auch nach dem Verbinden in eines oder beide der Bauteile eingebracht werden.

Das Einbringen von dreidimensionalen Strukturen im Bereich der Fadenhalterung kann dazu dienen, die Fadenhalterung zu verbessern.

Um die Haptik zu verbessern ist es weiter möglich, auf der Oberfläche Haptik-Etiketten anzubringen, die der Oberfläche mehr Struktur geben und so die Ergonomie bzw. den Griff verbessern.

Die vorliegende Ausführungsform zeichnet sich durch einen günstigen und äusserst rationellen Herstellungsprozess aus, welcher sich hervorragend für die Massenproduktion eignet. Die auf diese Weise hergestellten Flosser weisen eine optimale Spannung des Zahnzwischenraumreinigungselements auf, da hier im Vergleich zu Spritzgiessverfahren die Vorspannung nicht durch Schwundeffekte abgebaut wird.

Es kann vorkommen, dass bei jenen Ausführungsformen, bei welchen die Flosser ausgestanzt oder ausgeschnitten werden, nach dem Stanzen bzw. Schneiden scharfe Kanten an den Stanz-/Schneidrändern entstehen. Deshalb ist es möglich diese Ränder nachzubehandeln. Dies kann beispielsweise durch Schleifen oder Wärmebehandlung erfolgen.

Eine weitere Nachbehandlungsmöglichkeit betrifft das Zahnzwischenraumreinigungselement. Gewisse Eigenschaften, die das Zahnzwischenraumreinigungselement haben soll, können für den Herstellprozess negative Auswirkungen haben. Daher ist es möglich, das Zahnzwischenraumreinigungselement erst in einer Nachbehandlung mit diesen Eigenschaften zu versehen. Möglichkeiten hierbei sind insbesondere das nachträgliche Aufbringen von Substanzen zur Veränderung der Gleiteigenschaften oder von Geschmacksstoffen bzw. Wirkstoffen.

Das Zahnzwischenraumreinigungselement kann aus Polyamid (PA), insbesondere PA6, PA6.6, PA6.10, PA6.12, aus Polytetrafluoroethylen (PTFE), aus Polyethylen (PE) oder aus Polyester sein. Das Zahnzwischcnraumrcinigungsclcmcnt kann beschichtet oder unbeschichtet sein. So kann das Zahnzwischenraumreinigungselement gewachst oder ungewachsen sein. Als Wachse kommen beispielsweise Bienenwachs (Cera Alba), Cera Microcristallina oder Vinapas® der Firma Wacker Chemie AG in Frage.

Ferner kann Das Zahnzwischenraumreinigungselement auch imprägniert sein oder eine weitere Beschichtung aufweisen. Die Imprägnierung bzw. Beschichtung kann der Geschmacksverbreitung (z. B. Minze) dienen. Ferner kann die Imprägnierung bzw. Beschichtung auch ein Wirkstoff beinhalten, wie Fluorid (Natriumfluorid oder Ammonium Fluorid) oder Chlorhexidin.

Der Flosser kann eine Gesamtlänge von 6 bis 11 cm, vorzugsweise von 7 bis 9 cm aufweisen. Der Flosser kann eine Gesamtbreite von 2 bis 4 cm, vorzugsweise von 2.5 bis 3.5 cm aufweisen. Der Flosser kann eine Höhe von 1 bis 3 mm, vorzugsweise von 1.5 bis 2.3 mm aufweisen. Die Angaben zur Höhe betreffen nur den Griffkörper nicht jedoch die daran angeordneten Funktionselemente, deren Masse davon abweichen können. Das Verhältnis Höhe zu Länge kann 1:11 bis 3:11, vorzugsweise 3:18 bis 2.3:7 betragen.

Die Weichkomponente kann z. B. ein thermoplastisches Elastomer (TPE) sein. Die Weichkomponente kann beispielsweise ein:
- Thermoplastisches Polyurethan-Elastomer (TPE-U);
- Thermoplastisches Styrol-Elastomer (TPE-S), wie beispielsweise ein Styrol-Ethylen-Butylen-Styrol-Copolymer (SEBS) oder Styrol-Butadien-StyrolCopolymer (SB S);
- Thermoplastisches Polyamid-Elastomer (TPE-A);
- Thermoplastisches Polyolefin-Elastomer (TPE-O);
- Thermoplastisches Polyester-Elastomer (TPE-E) oder ein
- weicheres Polyethylen als die Hartkomponente (PE)
   sein.

Die Hartkomponente kann beispielsweise ein:
- Styrolpolymerisat, wie Styrolacrylnitril (SAN), Polystyrol (PS), Acrylnitrylbutadienstyrol (ABS), Styrolmethylmethacrylate (SMMA) oder Styrolbutadien (S B);
- Polyolefin, wie Polypropylen (PP) oder Polyethylen (PE) beispielsweise auch in den Formen high density Polyethylen (HDPE) oder low density Polyethylen (LDPE)
- Polyester, wie Polyethylenterephtalat (PET) in Form von säuremodifiziertem Polyethylenterephtalat (PETA) oder glykolmodifiziertem Polyethylenterephtalat (PETG), Polybutylenterephthalat (PBT), säuremodifiziertes Polycyclohexylenedimethyleneterephthalat (PCT-A) oder glykolmodifiziertes Polycyclohexylenedimethyleneterephthalat (PCT-G);
- Cellulosederivat wie Celluloseacetat (CA), Celluloseacetobutyrat (CAB), Cellulosepropionat (CP), Celluloseacetatphtalat (CAP) oder Cellulosebutyrat (CB);
- Polyamid (PA) wie PA 6.6, PA 6.10 oder PA 6.12;
- Polymethylmethacrylat (PMMA);
   Polycarbonat (PC);
- Polyoxymethylen (POM);
- Polyvinylchlorid (PVC) oder ein
- Polyurethan (PUR)
   sein.

Als Hartkomponente wird bevorzugt ein Polypropylen (PP) mit einem E-Modul von 1000-2400 N/mm², vorzugsweise von 1300 bis 1800 N/mm², eingesetzt. Als Weichkomponente wird bevorzugt ein TPE-S eingesetzt. Die Shore A Härte der Weichkomponente liegt vorzugsweise unter 90 Shore A, vorzugsweise unter 40 Shore A.

Die Thermoplaste Polyethylen (PE) und Polyurethan (PU) können als Hart- oder Weichkomponente eingesetzt werden.

Die eingesetzten Hart- und Weichkomponenten werden bevorzugt im Spritzgiessverfahren verarbeitet und bilden bevorzugt einen Materialschluss.

Werden die Borsten der Interdentalbürste, des Zungenreinigers oder des Zahnzwischenraumreinigungselementes im Spritzgiessverfahren gespritzt, so können diese aus folgendem Werkstoff sein:
- Polyamid Elastomer (z.B. Grilflex ELG 5930 von der Fa. Ems-Chemie AG)
- Polyester Elastomer (z.B. Riteflex 672 RF Nat oder Riteflex RKX 193 RF Nat von der Fa. Ticona Polymers oder Hytrel 7248 von der Fa. DuPont)

Diese Materialien für Borstenelemente haben z. B. eine Shore D Härte von 0 bis 100, vorzugsweise 30 - 80.

Für alle eingesetzten Komponenten ist es selbstverständlich möglich, sogenannte Biokunststoffe, also Kunststoffe die aus nachwachsenden Rohstoffen hergestellt werden, einzusetzen.

Ferner können die Werkstoffkomponenten biologisch abbaubar sein. Die Werkstoffkomponenten können insbesondere biologisch abbaubare Kunststoffe sein.

Ferner können zur Herstellung des Flossers Werkstoffkomponenten eingesetzt werden, welche wasserlöslich sind. Ferner können die Werkstoffkomponenten auch essbar sein.

Die Werkstoffkomponenten können z. B. Hydrocoloide, Stärke, Gummiarabicum, Polyvinylalkohol oder Polyox® enthalten oder daraus bestehen.

Die Werkstoffkomponente kann auch Polyox® enthalten oder daraus bestehen. Polyox® wird von Dow Chemical vertrieben. Es ist ein wasserlösliches Kunstharz auf der Basis von Polyethylenoxid-Polymeren. Polyox® weist thermoplastische Eigenschaften auf und kann daher in vielfältiger Weise verarbeitet werden, z. B. Giessen, Spritzgiessen, Extrusion, etc.

Polyox® eignet sich auch zur Bildung einer Matrix bzw. eines Trägers (Wirkkörper) für eine Wirksubstanz.

Die Herstellung des Zahnreinigungsgeräts erfolgt vorzugsweise in einem oder in mehreren Schritten in einem oder mehreren Spritzgiesswerkzeugen.

Die Herstellung erfolgt insbesondere in einem oder mehreren Herstellschritten, welche insbesondere in einen gemeinsamen Prozessablauf integriert sind.

Wird das Zahnzwischenraumreinigungselement ebenfalls in einem Spritzgiessverfahren gespritzt, so kann dieses mittels eines Spritzprägeverfahrens geschehen. Bei diesem Verfahren wird die Werkzeugkavität erst nach dem Einspritzen der Kunststoffinasse komplett geschlossen, beziehungsweise die Kavität wird im geschlossenen Zustand weiter eingeengt, d.h. verkleinert.

Das Material wird somit mit Druck in die Kavität gepresst. Dadurch lassen sich beispielsweise Feinstrukturen besser in das Zahnzwischenraumreinigungselement einbringen. Ferner ist die Präzision des an sich recht filigranen Zahnzwischenraumreinigungselementes höher.

Im Weiteren kann die Werkzeugkavität im Bereich des zu spritzgiessenden Zahnzwischenraumreinigungselements besondere behandelt sein und z. B. Erosionsstrukturen oder Ätzstrukturen (d.h. die Werkzeugkavität wird auf gewissen Oberflächenteilen mit Säure behandelt) aufweisen. Solche Strukturen erhöhen die Rauhigkeit der Werkzeugkavität und können dem Zahnzwischenraumreinigungselement daher eine besondere Oberflächentextur geben.

Wird das Zahnzwischenraumreinigungselement, wie Faserkörper bzw. Zahnfaden, nicht im Spritzgiessverfahren hergestellt, so wird dieser insbesondere als Einlegeteil in die Werkzeugform eingelegt.

So kann eine Werkzeugform mehrere Kavitäten für jeweils einen Flosser enthalten. Das Zahnzwischenraumreinigungselement wird nun in einem Stück über mehrere Kavitäten gespannt. Das Zahnzwischenraumreinigungselement kann am beweglichen Werkzeugformteil oder am festen Werkzeugformteil gespannt werden. Nach dem Einlegen des Zahnzwischenraumreinigungselements wird die Werkzeugform geschlossen und der Flosser spritzgegossen.

Das Zahnzwischenraumreinigungselement wird insbesondere direkt vor oder während dem Auswerfen des Flossers aus der Werkzeugform getrennt, so dass die einzelnen Flosser nicht mehr über das Zahnzwischenraumreinigungselement miteinander verbunden sind. Das Zahnzwischenraumreinigungselement wird insbesondere geschnitten, bevor die Flosser aus der Kavität ausgestossen werden. Da die Flosser in der Kavität präzises positioniert sind, kann ein präziser Schnitt vorgenommen werden, was nach dem Ausstossen der Flosser nicht mehr so einfach möglich wäre. Das Schneiden kann mittels eines Schneidwerkzeuges erfolgen.

In einem weiteren Verfahrensschritt können am Zahnzwischenraumreinigungselement Verankerungselemente angebracht bzw. erstellt werden, welche der Verankerung des Zahnzwischenraumreinigungselement in den nachfolgend spritzgegossenen Halterarmen bewirken.

Besteht das Zahnzwischcnraumrcinigungsclcmcnt aus Kunststoff, so kann durch lokales Ansengen bzw. Anschmelzen desselbigen eine Verdickung ausgebildet werden, welche als Verankerungselement wirkt. Das Ansengen bzw. Anschmelzen kann durch eine Flamme oder einen erhitzten Stempel erfolgen. Das Ansengen bzw. Anschmelzen kann vor dem Spritzgiessen erfolgen, wenn das Zahnzwischenraumreinigungselement in der Werkzeugform gespannt ist.

Besteht das Zahnzwischenraumreinigungselement aus einer PTFE-Zahnseide, so liegt das Problem vor, dass die guten Gleiteigenschaften für eine optimale Halterung im Halterarm hinderlich sind. Die guten Gleiteigenschaften sind jedoch für die Anwendung des Zahnzwischenraumreinigungselements in den Zahnzwischenräumen vorteilhaft.

Ausgehend von diesem Problem kann das Zahnzwischenraumreinigungselement, unabhängig von seiner materiellen oder geometrischen Beschaffenheit in den Verankerungsbereichen mit Durchgangsöffnungen, wie Perforation, versehen werden. Die Durchgangsöffnungen bewirken, dass das gespritzte Kunststoffmaterial des Halterarms die Durchgangsöffnungen durchdringt und so eine Verankerung herstellt.

Im Weiteren kann in den Verankerungsbereichen eine Schlaufe, Wicklungen oder ein Knopf gelegt werden. Auch diese bewirken eine Verankerung des Zahnzwischenraumreinigungselements.

Im Weiteren kann in den Verankerungsbereichen des Zahnzwischenraumreinigungselements die Oberfläche aufgerauht werden. Dies kann beispielsweise durch Ätzen oder Sandstrahlen erfolgen.

Im Weiteren kann das Zahnzwischenraumreinigungselement auch eine Volumen-Zahnseide sein. Diese zeichnet sich durch einen Faserkörper aus, welcher bei Gebrauch aufbauscht oder aufquillt und so voluminös wird. Die Volumcn-Zahnscidc kann nun in den Verankerungsbereichen vorgängig aufgebauscht oder aufgequillt werden. Die anschliessend eingespritzte Kunststoffkomponente der Halterarme stellt eine optimale Verankerung im aufgebauschten bzw. aufgequillten Bereich her. Die Zahnseide wird in diesem Fall ebenfalls von der eingespritzten Kunststoffkomponente durchflossen.

Die Zahnreinigungsgeräte lassen sich mittels verschiedenen Spritzgiesstechnologien herstellen.

Eine erste Spritzgiesstechnologie ist die "Core-Back"-Mehrkomponenten, insbesondere Zweikomponenten, Spritzgiesstechnologie, welche bereits weiter oben beschrieben wird.

Ein Mehrkomponenten-, insbesondere Zweikomponenten-Spritzgiessverfahren, kann auch mittels eines so genannten Schiebe-Spritzgiesswerkzeugs ausgeführt werden. Bei diesem wird in einem ersten Arbeitsbereich in einer ersten Werkzeugkavität des Spritzgiesswerkzeuges eine erste Komponente gegossen. Der Formling wird danach entformt und umgelegt. In einer zweiten Werkzeugkavität eines zweiten Arbeitsbereichs des Spritzgiesswerkzeuges wird eine zweite Komponente gegossen.

Das Umlegen geschieht mittels einer Umlegeinrichtung. Die Umlegeinrichtung bildet eine Teilkavität der ersten Werkzeugkavität aus. Beim Umlegen wird der Formling nun von der Teilkavität gehaltert und mit der Teilkavität lateral verschoben. Die lateral verschobene Teilkavität wird im Anschluss an das Umlegen mit einem feststehenden Kavitätteil zu einer zweiten Werkzeugkavität ergänzt. Die zweite Komponente wird dabei insbesondere in den feststehenden Kavitätteil gespritzt.

Ist das Zahnzwischenraumreinigungselement separat ausgebildet, so wird dieses bei der ersten Werkzeugkavität im ersten Arbeitsbereich vor dem ersten Spritzgicssschritt in die Werkzeugform eingespannt. Das Zahnzwischenraumreinigungselement wird vor dem Umlegen zwecks Ausführung des zweiten Spritzgiessschrittes mittels eines Schneidwerkzeuges geschnitten.

Ein solches Schieberwerkzeug ist zum Beispiel in den Patentpublikationen EP-B-1 166 992 beschrieben. Für weitere Details zu dieser Spritzgiesstechnologie wird auf diese Patentpublikation verwiesen.

Ferner eignen sich für Mehrkomponenten-Spritzgiessverfahren auch SCPS-(Servo Cavity Positioning System)-Spritzgiesswerkzeuge, wie sie beispielsweise in den Patentveröffentlichungen DE-A-10 2004 056433 und DE-A-10 2005 029365 beschrieben sind. Für weitere Details zu dieser Spritzgiesstechnologie wird auf diese Patentpublikationen verwiesen.

Ein Mehrkomponenten-, insbesondere Zweikomponenten-Spritzgiessverfahren, kann auch mittels eines so genannten Drehteller-Spritzgiesswerkzeugs ausgeführt werden. Gemäss diesem Spritzgiessverfahren werden entstehende Formlinge in bewegbaren Werkzeugteilen, die auf einem Drehtisch des Spritzgiesswerkzeuges angeordnet sind, durch Drehung des Drehtisches an verschiedene Spritzstationen zum Spritzen mehrerer Materialien geführt. Die bewegbaren Werkzeugteile bilden Werkzeugkavitäten aus, welche sich zur Ausführung eines Spritzgiessschrittes mit den Werkzeugkavitäten an den feststehenden Werkzeugteilen der Spritzstationen zu einer geschlossenen Kavität vereinen.

Es muss nicht zwingend an allen Stationen ein Spritzgiessschritt durchgeführt werden. So können an einer Station auch sonstige Verarbeitungsschritte, wie Kühlen der Formlinge oder der fertigen Flosser, Schneiden eines in die Werkzeugform eingelegten Zahnzwischenraumreinigungselement oder Auswerfen der fertigen Flosser, ausgeführt werden.

Ein eingelegtes Zahnzwischcnraumrcinigungsclcmcnt wird insbesondere am feststehenden Teil der Werkzeugform des Spritzgiesswerkzeuges eingelegt. Der Formling bzw. der fertige Flosser wird insbesondere vom beweglichen Teil der Werkzeugform gehalten.

Ein solches Drehteller-Werkzeug ist zum Beispiel in der Patentpublikation EP-A-0 671 251 beschrieben. Für weitere Details zu dieser Spritzgiesstechnologie wird auf diese Patentpublikation verwiesen.

Eine weitere Möglichkeit für die Anwendung des Mehrkomponenten Spritzgiessverfahrens ist die so genannte Helikopter-Technologie, bei welcher so genannte Helikopter-Werkzeuge eingesetzt werden.

Bei dieser Technologie werden in mehreren Spritzgiess-Stationen Kunststoffteile spritzgegossen. Das Umlegen der Kunststoffteile bzw. Formlinge erfolgt mittels eines Umlegroboters, welcher Rotorblätter ausbildet. Auf den Rotorblättern sind Kavitäten ausgebildet. Die Formlinge werden in den Kavitäten auf den Rotorblättern gehalten und beim Umlegen auf diese Weise zum nächsten Verarbeitungsschritt gebracht. Hierzu werden die Rotorblätter um eine Rotorachse rotiert.

Ein wesentlicher Vorteil dieser Werkzeugtechnologie liegt darin, dass durch die Anordnung der Rotorblätter und die Freistellung gewisser Kavitäten erreicht wird, dass fertig erstellte Kunststoffteile entnommen werden können, während der Spritzgiessvorgang läuft.

Ein solches Helikopter-Werkzeug ist zum Beispiel in der Offenlegungsschrift DE 103 35 223 beschrieben. Für weitere Details zu dieser Spritzgiesstechnologie wird auf diese Patentpublikation verwiesen.

Ein Mehrkomponenten-, insbesondere Zweikomponenten-Spritzgiessverfahren, kann auch mittels eines so genannten Indcxplattcn-Spritzgicsswcrkzcugs ausgeführt werden. Das Indexplatten-Spritzgiesswerkzeug zeichnet sich durch eine feststehende Werkzeugplatte, welche z. B. düsenseitig ist, und eine bewegliche Werkzeugplatte aus, die einander zugewandte und einander zu geschlossenen Spritzgiesskavitäten ergänzende Werkzeugkavitäten enthalten.

Die bewegliche Werkzeugplatte ist zum Öffnen und Schliessen des Spritzgiesswerkzeuges linear zur feststehenden Werkzeugplatte hin und von dieser weg bewegbar.

In der beweglichen Werkzeugplatte ist eine relativ zu dieser bewegliche Indexplatte enthalten. Die Indexplatte kann in einer linearen Bewegung aus der Ebene der Werkzeugplatte aus- und wieder in diese eingefahren werden. Im ausgefahrenen Zustand ist die Indexplatte um eine Drehachse drehbar.

Die Indexplatte bildet mitbewegte Teilkavitäten aus, welche unter anderem zum Halten und Transportieren der Formlinge von einer ersten Spritzstation zu einer nachgeordneten Spritzstation dienen. Die Teilkavitäten ergänzen die Werkzeugkavitäten in der beweglichen Werkzeugplatte.

Die Formlinge, welche in den Teilkavitäten der Indexplatte gehaltert sind, können nun durch Ausfahren der Indexplatte aus der beweglichen Werkzeugplatte und Drehen der Indexplatte um die Drehachse zu verschiedenen Spritz- und/oder Bearbeitungsstationen in der Werkzeugplatte umgelegt werden.

Das Spritzgiesswerkzeug enthält ein Zuführ-Kanalsystem mit einer in die aus den Kavitäten gebildeten Formhöhlung mündenden Einspritzdüse, insbesondere ein Heisskanalsystem mit wenigstens einer Heisskanaldüse, auf.

Ein solches Indexplatten-Werkzeug ist zum Beispiel in den Patentpublikationen DE-A-10 2006 037954 und DE-C-4127621 beschrieben. Für weitere Details zu dieser Spritzgiesstechnologie wird auf diese Patentpublikationen verwiesen.

Ein Mehrkomponenten-, insbesondere Zweikomponenten-Spritzgiessverfahren, kann auch mittels eines so genannten Würfel- Spritzgiesswerkzeugs ausgeführt werden. Dieses Spritzgiessverfahren zeichnet sich im Vergleich zu den oben genannten Verfahren dadurch aus, dieses vier, in mehreren Ebenen angeordnete Arbeitsbereiche aufweist. In jedem der Arbeitsbereiche werden verschiedene Verfahrensschritte ausgeübt. Diese Verfahrensschritte können sein: Einlegen eines Zahnzwischenraumreinigungselement in die Werkzeugform, erster Spritzgiessschritt, zweiter Spritzgiessschritt, Schneiden des Zahnzwischenraumreinigungselement, Kühlen des Formteils, Auswerfen des Formteils. Die Ebenen der Arbeitsbereiche sind insbesondere vertikal ausgerichtet.

Wird in einem Arbeitsbereich ein Spritzgiessschritt vorgenommen, so entspricht die Ebene beispielsweise einer Formtrennebene. Im genannten Arbeitsbereich werden entsprechend Werkzeugkavitäten ausgebildet.

Das Würfel-Spritzgiesswerkzeug enthält einen zentralen Werkzeugkörper mit vier Arbeitsbereichen, von welchen zwei jeweils einander gegenüber liegen und parallel zueinander verlaufen. Die Ebenen von benachbarten Arbeitsbereichen sind jeweils in einem rechten Winkel zueinander angeordnet. Der zentrale Werkzeugkörper kann würfelförmig sein.

Der zentrale Werkzeugkörper kann um eine, insbesondere vertikale, Drehachse drehbar sein. die Ebenen der Verarbeitungsbereiche sind entsprechend um diese Drehachse angeordnet. In diesem Fall bildet der zentrale Werkzeugkörper auch die Umlegeinrichtung zum Umlegen der Formlinge zwischen den einzelnen Arbeitsstationen bzw. Arbeitsbereiche aus.

Ist der zentrale Wcrkzcugkörpcr nicht drehbar, so kann das Spritzgicsswcrkzcug eine Umlegeinrichtung mit Formteilhalterungen enthalten, welche aus dem zentralen Werkzeugkörper linear aus- und wieder in diesen einfahrbar sind. Die Formteilhalterungen haltern die Formteile bzw. Formlinge zwecks Umlegen zwischen zwei Arbeitsbereichen. Die ausgefahrenen Formteilhalterungen sind zwecks Umlegen der Formteile um eine Drehachse, insbesondere um eine vertikale Drehachse, drehbar.

Ferner enthält das Spritzgiesswerkzeug weitere linear zu den Arbeitsbereichen am zentralen Werkzeugkörper hin verschiebbare Werkzeugkörper. Wird in einem Arbeitsbereich ein Spritzgiessschritt vorgenommen, so weist der diesem zugeordnete, linear verschiebbare Werkzeugkörper ebenfalls Kavitäten auf, welche sich mit den Werkzeugkavitäten im Arbeitsbereich des zentralen Werkzeugkörpers zu geschlossenen Spritzgiesskavitäten vereinigen.

So kann in einem ersten Arbeitsbereich, der in einer ersten Ebene angeordnet ist, das Zahnzwischenraumreinigungselement eingelegt und die erste Kunststoffkomponente gespritzt werden.

In einem zweiten Arbeitsbereich, der in einer zweiten Ebene angeordnet ist, können die Formlinge gekühlt werden. Ferner können im zweiten Arbeitsbereich alternativ zum Kühlen oder zusätzlich zum Kühlen einer oder mehrere der folgenden Arbeitsschritte durchgeführt werden:
- Schneiden des Zahnzwischenraumreinigungselements;
- Anbringen eines Etiketts;
- form-, kraft- oder stoffschlüssiges Anbringen eines, insbesondere oben beschriebenen, Funktionselements, wie Interdentalbürste;
- form-, kraft- oder stoffschlüssiges Anbringen von Zusatzteilen, z. B. mittels Clipverbindung;
- Anbringen einer Kappe für den Zahnstocher;
- Montageschritte, wie Schwenken von Teilen des Flossers entlang von Filmscharnieren, montieren des Zahnzwischenraumreinigungselements, wenn dieses nicht in der ersten Station umspritzt wurde, montieren eines Teils mit dem Zahnzwischenraumreinigungselements mit einem weiteren Teil des Griffs;
- Behandlungsschritte am Formling;
- Behandlung des Zahnzwischenraumreinigungselements, insbesondere des Zahnfadens, wie z. B. Beschichten mit Wachs, mit einem Wirkstoff (Aroma). Die Beschichtung kann mittels Sprayen, Eintauchen oder Tampon-Print erfolgen;
- Anblasen von Heissluft zum flauschig machen des Zahnfadens;
- Fadenenden anschmelzen, um z. B. einen pilzförmigen Abschluss vorzunehmen.

In einem dritten Arbeitsbereich, der in einer dritten Ebene angeordnet ist, die beispielsweise zur ersten parallel und zur zweiten rechtwinklig angeordnet ist, kann eine zweite Kunststoffkomponente gespritzt werden, indem diese die erste Kunststoffkomponente umspritzt oder durchdringt.

In einem vierten Arbeitsbereich, der vorzugsweise in einer vierten Ebene angeordnet ist, die zur zweiten parallel ist, kann der fertige Flosser aus der Spritzgiessvorrichtung entnommen werden.

Die einzelnen Formlinge, respektive die fertigen Flosser, werden insbesondere mittels einer beweglich angeordneten Umlegeinrichtung des Spritzgiesswerkzeuges von einem zum nächsten Arbeitsbereich bewegt. Die Arbeitsbereiche eins und drei, sowie zwei und vier laufen insbesondere simultan ab.

Ein solches Würfel-Werkzeug ist zum Beispiel in den Patentpublikationen WO-A-2007 082394 (Würfel-Spritzgiesswerkzeug nicht drehbar) und EP-B-1 628 819 (drehbares Würfel-Spritzgiesswerkzeug) beschrieben. Für weitere Details zu dieser Spritzgiesstechnologie wird auf diese Patentpublikationen verwiesen.

Wird das Zahnzwischcnraumrcinigungsclcmcnt, insbesondere ein Zahnfaden, in die Werkzeugform eingelegt so geschieht dies insbesondere im ersten Arbeitsbereich, d.h. im ersten Schritt, vor dem Einspritzen der ersten Komponente.

Wird das Zahnzwischenraumreinigungselement ebenfalls spritzgegossen, so geschieht dies z. B. ebenfalls im ersten Arbeitsbereich, d.h. im ersten Schritt. So können im ersten Arbeitsbereich der Formling, welcher den Grundkörper des Flossers ausbildet, sowie das Zahnzwischenraumreinigungselement gespritzt werden.

Die beiden Formteile können in einem zweiten Arbeitsbereich, d.h. in einem zweiten Schritt, montiert bzw. zusammengeführt werden. In diesem Schritt kann auch eine Kühlung erfolgen.

In einem dritten Arbeitsbereich, d.h. im dritten Schritt kann das Spritzgiessen, insbesondere Umspritzen einer zweiten Komponente erfolgen. Der zweite Spritzgiessschritt kann die Stoffschluss-Verbindung zwischen dem Zahnzwischenraumreinigungselement und dem Formling herstellen.

In einem vierten Arbeitsbereich, d.h. im vierten Schritt kann der Flosser entformt werden.

Gemäss einer alternativen Ausführungsform kann das Zahnzwischenraumreinigungselement, insbesondere ein Zahnfaden, im ersten Arbeitsbereich, d.h. im ersten Schritt, vor dem Einspritzen der ersten Komponente in die Werkzeugform eingelegt werden.

Im ersten Arbeitsbereich können dann zwei Formteile mit einer ersten Komponente gespritzt werden, wobei das eine Formteil das Zahnzwischenraumreinigungselement enthält.

Die beiden Formteile können in einem zweiten Arbeitsbereich, d.h. in einem zweiten Schritt, montiert bzw. zusammengeführt werden. In diesem Schritt kann auch eine Kühlung erfolgen.

In einem dritten Arbeitsbereich, d.h. im dritten Schritt, kann das Spritzgiessen, insbesondere Umspritzen einer zweiten Komponente erfolgen. Der zweite Spritzgiessschritt kann die Stoffschluss-Verbindung zwischen den beiden Formteilen herstellen. Durch gezielte Wahl der Geometrie der beiden Formteile kann eine verbesserte Verankerung des Zahnzwischenraumreinigungselements erzielt werden.

In einem vierten Arbeitsbereich, d.h. im vierten Schritt kann der Flosser entformt werden.

Die oben beschriebenen Spritzgiesstechnologien zeichnen sich dadurch aus, dass die Formlinge zwischen verschiedenen Arbeitsbereichen umgelegt werden. Zum Umlegen der Formlinge müssen diese von einer Umlegeinrichtung mit Haltemechanismus gehalten werden. Die Umlegeinrichtung bzw. dessen Haltemechanismus selbst kann einen Teil einer Werkzeugkavität ausbilden.

So kann die Umlegeinrichtung so ausgelegt sein, dass der Formling, welcher den späteren Flosser bildet, beim Umlegen im Bereich der Halterarme gehalten wird.

Der Formling kann auch eine Haltekerbe, z. B. im Griffkörper, enthalten. Eine Haltekerbe eignet sich insbesondere bei einem Indexwerkzeug oder einem Würfel-werkzeug.

Eine weitere Möglichkeit zum Halten der Formlinge für das Umlegen zwischen verschiedenen Stationen der Spritzgiesswerkzeuge ist die Nutzung der Fadenausnehmung zur Halterung.

Gemäss einer Variante wird in einem ersten Schritt in einem ersten Arbeitsbereich eine erste Komponente spritzgegossen. In einem zweiten Schritt wird nach Umlegen des Formlings in einem zweiten Arbeitsbereich in einem zweiten Schritt eine zweite Komponente spritzgegossen. Diese umspritzt ein zuvor im zweiten Arbeitsbereich in die Werkzeugform eingelegtes Zahnzwischenraumreinigungselement, wie beispielsweise Zahnfaden.

Anschliessend wird das Zahnzwischenraumreinigungselement geschnitten und die einzelnen Flosser werden ausgeworfen.

Die zweite Komponente kann insbesondere die erste Komponente im Bereich der Halterarme umspritzen und so das Zahnzwischenraumreinigungselement, insbesondere einen Zahnfaden, besser fixieren. Die zusätzliche Fixierung kann zum Beispiel durch einen Schrumpfungseffekt erzielt werden, welcher beim Abkühlen auftritt.

Das Zahnreinigungsgerät benötigt zur Erlangung der Funktionsfähigkeit nach dem Spritzgiessprozess bevorzugt keine weiteren Herstellschritte mehr. Allfällige weitere Herstellschritte dienen im Wesentlichen nur dem Verpacken. So kann das fertige Zahnreinigungsgerät vom Spritzgiesswerkzeug ausgeworfen und in-line, dass heisst in den kontinuierlichen Herstellungsprozess integriert, einer Verpackungseinrichtung zugeführt werden.

Zur kostenoptimalen Herstellung der Flosser können die einzelnen Prozessschritte direkt gekoppelt sein. D.h. die Flosser werden nach deren Fertigstellung direkt verpackt (Inline-Produktion).

Die zahlreichen Erfindungsaspekte des Flossers wie sie oben beschrieben sind, sind im Übrigen beliebig miteinander kombinierbar, ohne den Rahmen der Erfindung zu verlassen.

Im Folgenden werden verschiedene Ausführungsformen von Flossern, welche in den beiliegenden Zeichnungen dargestellt sind, näher erläutert. Es zeigen jeweils schematisch:
- Figur 1a-1b:: eine Draufsicht auf die Vorderseite einer nicht beanspruchten ersten Ausführungsform eines Flossers;
- Figur 2a-2b:: eine Seitenansicht des Flossers nach Figur 1a und 1b;
- Figur 3a-3b:: eine Draufsicht auf die Rückseite des Flossers nach Figur 1a, 1b und 2a, 2b;
- Figur 4a-4b:: eine perspektivische Ansicht von der Vorder- und Rückseite des Flossers nach Figur 1a, 1b, 2a, 2b und 3a, 3b;
- Figur 5a-5b:: eine Draufsicht auf die Vorderseite einer nicht beanspruchten zweiten Ausführungsform eines Flossers;
- Figur 6a-6b:: eine Seitenansicht des Flossers nach Figur 5a und 5b;
- Figur 7a-7b:: eine Draufsicht auf die Rückseite des Flossers nach Figur 5a, 5b und 6a, 6b;
- Figur 8a-8b:: eine perspektivische Ansicht von der Vorder- und Rückseite des Flossers nach Figur 5a, 5b, 6a, 6b und 7a, 7b;
- Figur 9a-9b:: eine Draufsicht auf die Vorderseite einer nicht beanspruchten dritten Ausführungsform eines Flossers;
- Figur 10a-10b:: eine Seitenansicht des Flossers nach Figur 9a und 9b;
- Figur 11a-11b:: eine Draufsicht auf die Rückseite des Flossers nach Figur 9a, 9b und 10a, 10b;
- Figur 12a-12b:: eine perspektivische Ansicht von der Vorder- und Rückseite des Flossers nach Figur 9a, 9b, 10a, 10b und 11a, 11b;
- Figur 13a-13b:: eine Draufsicht auf die Vorderseite einer nicht beanspruchten vierten Ausführungsform eines Flossers;
- Figur 14a-14b:: eine Seitenansicht des Flossers nach Figur 13a und 13b;
- Figur 15a-15b:: eine Draufsicht auf die Rückseite des Flossers nach Figur 13a, 13b und 14a, 14b;
- Figur 16a-16b:: eine perspektivische Ansicht von der Vorder- und Rückseite des Flossers nach Figur 13a, 13b, 14a, 14b und 15a, 15b;
- Figur 17a-17b:: eine Draufsicht auf die Vorderseite einer nicht beanspruchten fünften Ausführungsform eines Flossers;
- Figur 18a-18b:: eine Seitenansicht des Flossers nach Figur 17a und 17b;
- Figur 19a-19b:: eine Draufsicht auf die Rückseite des Flossers nach Figur 17a, 17b und 18a, 18b;
- Figur 20a-20b:: eine perspektivische Ansicht von der Vorder- und Rückseite des Flossers nach Figur 17a, 17b, 18a, 18b und 19a, 19b;
- Figur 21a-21b:: eine Draufsicht auf die Vorderseite einer nicht beanspruchten sechsten Ausführungsform eines Flossers;
- Figur 22a-22b:: eine Seitenansicht des Flossers nach Figur 21a und 21b;
- Figur 23a-23b:: eine Draufsicht auf die Rückseite des Flossers nach Figur 21a, 21b und 22a, 22b;
- Figur 24a-24b:: eine perspektivische Ansicht von der Vorder- und Rückseite des Flossers nach Figur 21a, 21b, 22a, 22b und 23a, 23b;
- Figur 25a:: eine Draufsicht auf die Vorderseite einer nicht beanspruchten siebten Ausführungsform eines Flossers;
- Figur 25b:: eine Seitenansicht des Flossers nach Figur 25a;
- Figur 26a:: eine Draufsicht auf die Rückseite des Flossers nach Figur 25a und 25b;
- Figur 26b:: eine Querschnittsansicht durch das Polierelement gemäss Figur 26a;
- Figur 27a-27b:: eine perspektivische Ansicht von der Vorder- und Rückseite des Flossers nach Figur 25a, 25b, 26a und 26b;
- Figur 28a:: eine Draufsicht auf die Vorderseite einer nicht beanspruchten achten Ausführungsform eines Flossers;
- Figur 28b:: eine Seitenansicht des Flossers nach Figur 28a;
- Figur 28c:: eine Draufsicht auf die Rückseite des Flossers nach Figur 28a und 28b;
- Figur 29a-29b:: eine perspektivische Ansicht von der Vorder- und Rückseite des Flossers nach Figur 28a bis 28c;
- Figur 30a:: eine Draufsicht auf die Vorderseite einer nicht beanspruchten neunten Ausführungsform eines Flossers;
- Figur 30b:: eine Seitenansicht des Flossers nach Figur 30a;
- Figur 30c:: eine Draufsicht auf die Rückseite des Flossers nach Figur 30a und 30b;
- Figur 31a-31b:: eine perspektivische Ansicht von der Vorder- und Rückseite des Flossers nach Figur 30a bis 30c;
- Figur 32a:: eine Draufsicht einer nicht beanspruchten zehnten Ausführungsform eines Flossers in seiner Passivposition;
- Figur 32b:: eine Seitenansicht des Flossers nach Figur 32a;
- Figur 32c:: eine perspektivische Ansicht des Flossers nach Figur 32a und 32b;
- Figur 33a:: eine Draufsicht des Flossers nach Figur 32 in seine Funktionsposition gefaltet;
- Figur 33b:: eine Seitenansicht des Flossers nach Figur 33a;
- Figur 33c:: eine perspektivische Ansicht des Flossers nach Figur 33a und 33b;
- Figur 34a:: eine Draufsicht der Vorderseite einer nicht beanspruchten elften Ausführungsform eines Flossers in der Passivposition;
- Figur 34b:: eine Seitenansicht des Flossers nach Figur 34a;
- Figur 34c:: eine Draufsicht der Rückseite des Flossers nach Figur 34a und 34b;
- Figur 35a:: eine Draufsicht der Vorderseite des Flossers nach Figur 34 in der Teilmontage-Position;
- Figur 35b:: eine Seitenansicht des Flossers nach Figur 35a;
- Figur 35c:: eine Draufsicht der Rückseite des Flossers nach Figur 35a und 35b;
- Figur 36a:: eine perspektivische Ansicht des Flossers nach Figur 34 in der Passivposition;
- Figur 36b:: eine perspektivische Ansicht des Flossers nach Figur 35 in der Teilmontage-Position;
- Figur 36c:: eine perspektivische Ansicht des Flossers in der Funktionsposition;
- Figur 37a:: eine Frontansicht des Flossers nach Figur 36c;
- Figur 37b:: eine Draufsicht des Flossers nach Figur 36c und Figur 37c;
- Figur 37c:: eine Rückseitenansicht des Flossers nach Figur 36c, Figur 37a und Figur 37b;
- Figur 38:: eine Draufsicht der Vorderseite einer nicht beanspruchten zwölften Ausführungsform eines Flossers;
- Figur 39a:: eine perspektivische Ansicht des Flossers nach Figur 38;
- Figur 39b:: eine perspektivische Ansicht des Flossers nach Figur 39a in nichtmontiertem Zustand;
- Figur 40:: eine perspektivische Ansicht einer nicht beanspruchten dreizehnten Ausführungsform eines Flossers;
- Figur 41:: eine Draufsicht auf das Zahnzwischenraumreinigungselement eines Flossers nach Figur 40;
- Figur 42:: eine Draufsicht der Vorderseite des Flossers nach Figur 40;
- Figur 43 bis 47:: verschiedene Ausführungsformen von Zahnfäden jeweils in einer Seitenansicht und in einer Querschnittsansicht;
- Figur 48:: eine Draufsicht einer weiteren, nicht beanspruchten Ausführungsform eines Flossers in verschiedenen Produktionsstufen;
- Figur 49:: eine Draufsicht einer weiteren, nicht beanspruchten Ausführungsform eines Flossers in verschiedenen Produktionsstufen;
- Figur 50: eine Draufsicht einer weiteren, nicht beanspruchten Ausführungsform eines Flossers;
- Figur 51: eine Draufsicht einer weiteren, nicht beanspruchten Ausführungsform eines Flossers;
- Figur 52:: eine Draufsicht einer weiteren, nicht beanspruchten Ausführungsform eines Flossers;
- Figur 53:: eine Draufsicht einer weiteren, nicht beanspruchten Ausführungsform eines Flossers;
- Figur 54a:: eine Draufsicht auf die Vorderseite einer weiteren, nicht beanspruchten Ausführungsform eines Flossers;
- Figur 54b:: eine Seitenansicht des Flossers nach Figur 54a;
- Figur 55a:: eine Draufsicht auf die Rückseite des Flossers nach Figur 54a und 54b;
- Figur 55b:: eine Querschnittsansicht durch das Polierelement gemäss Figur 55a;
- Figur 56a-56b:: eine perspektivische Ansicht von der Vorder- und Rückseite des Flossers nach Figur 54a, 54b, 55a und 55b.

Grundsätzlich sind in den Figuren gleiche Teile mit gleichen Bezugszeichen versehen. Die beschriebenen Ausführungsbeispiele stehen beispielhaft für den Erfindungsgegenstand und haben keine beschränkende Wirkung.

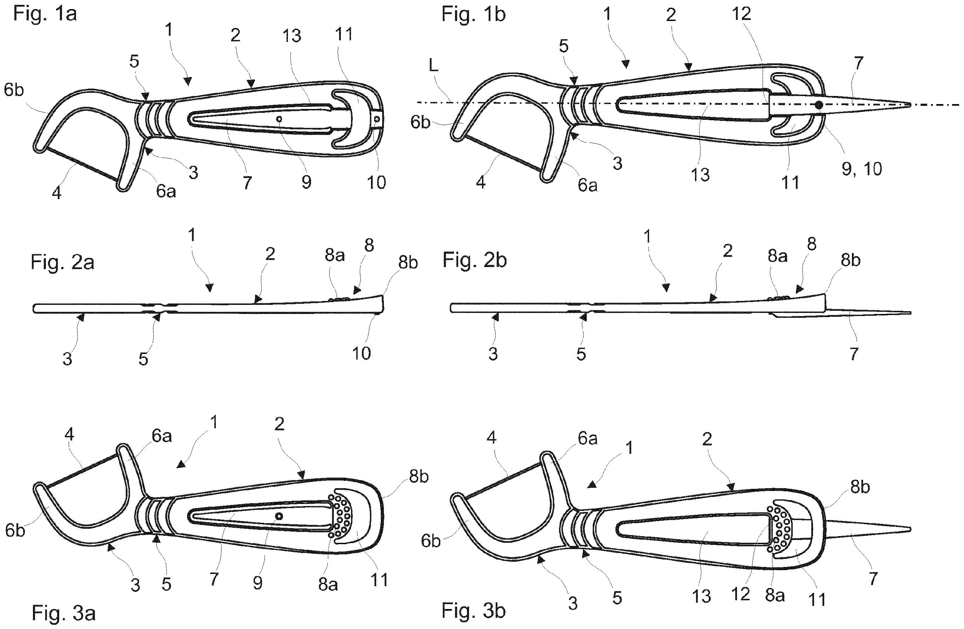

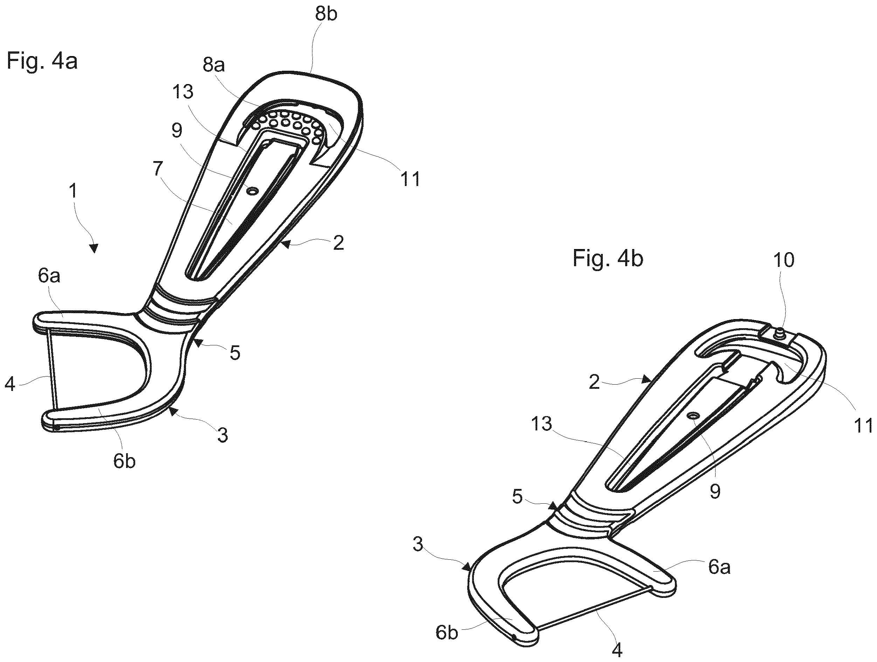

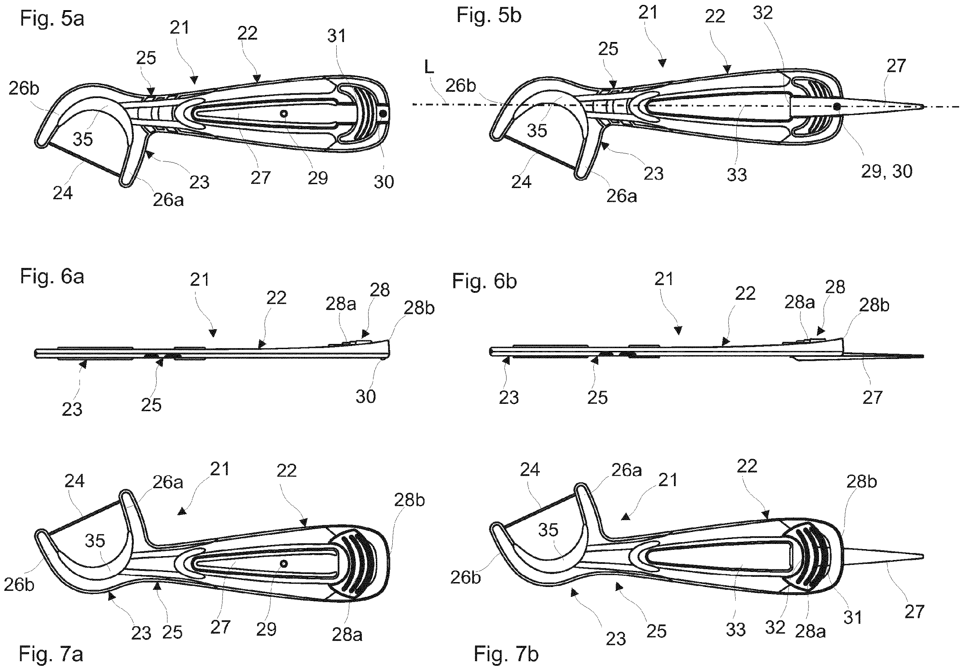

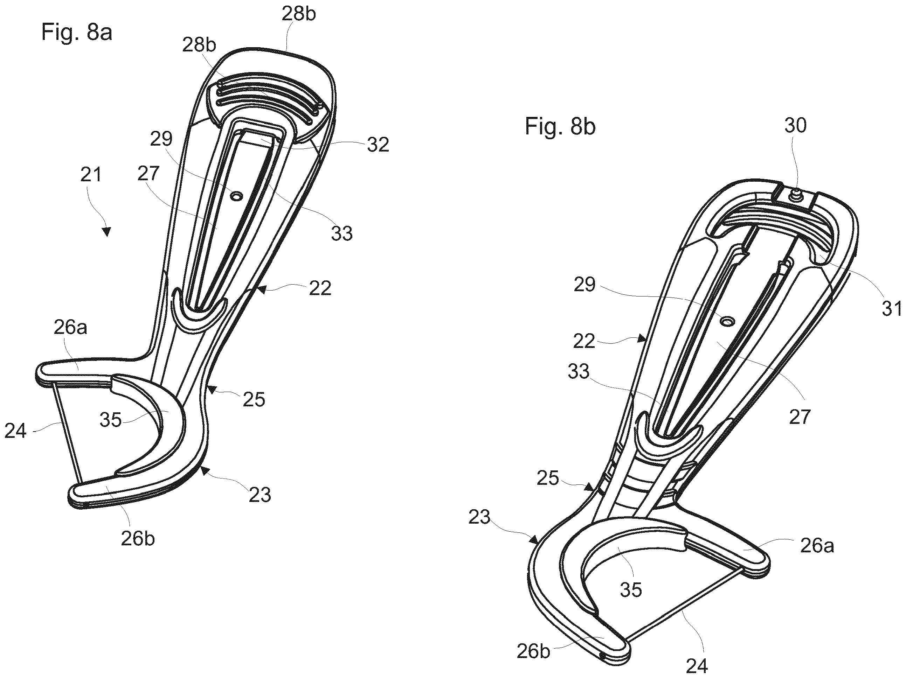

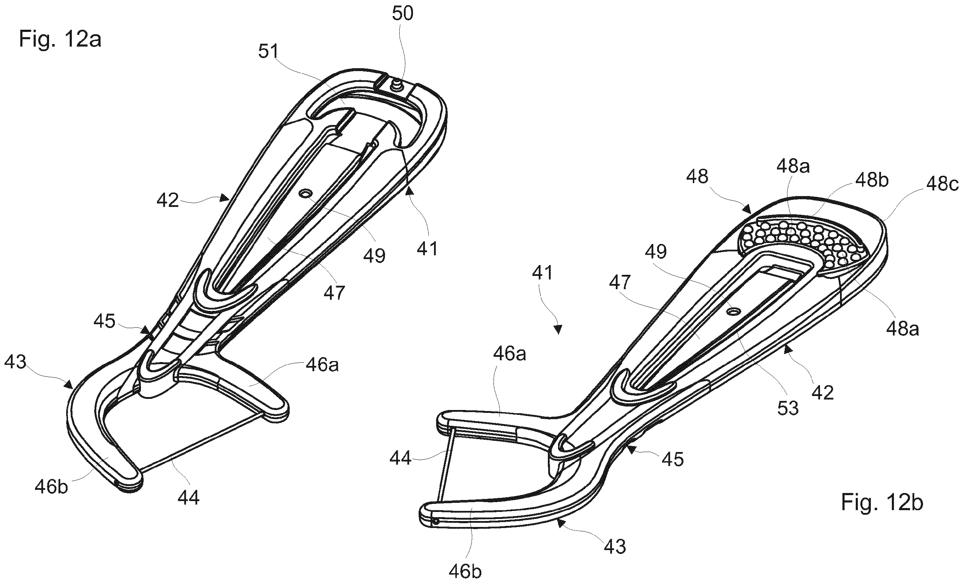

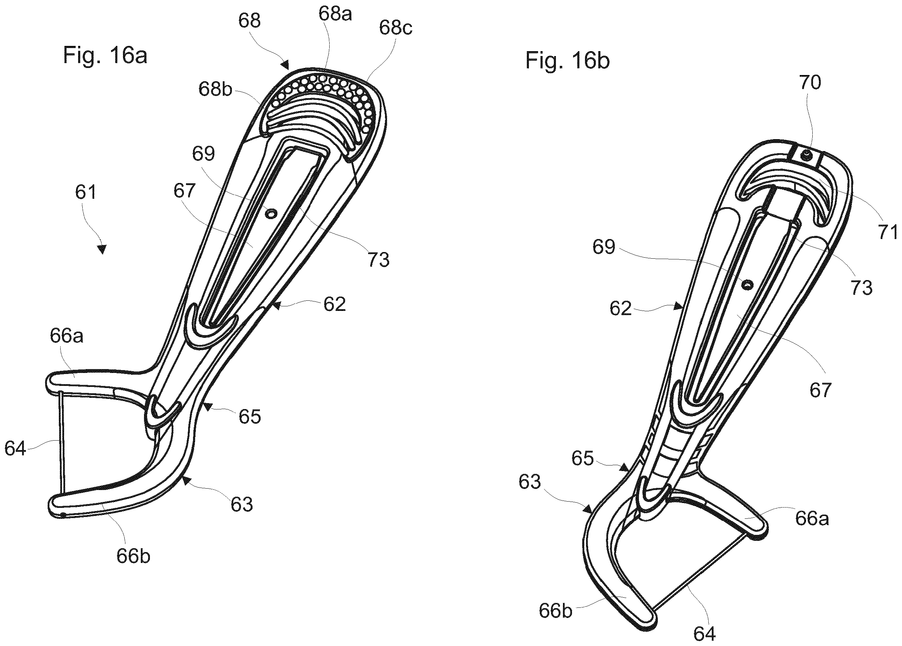

Das Ausführungsbeispiel nach Figur 1 bis 4 zeigt einen Flosser 1, der aus einer Hartkomponente hergestellt ist. Die Ausführungsbeispiele nach Figur 5 bis 8, 9 bis 12 und 13 bis 16 zeigen jeweils einen Flosser, der sowohl eine Hart- wie auch eine Weichkomponente enthält. Die Weichkomponente ist dabei auf beiden Seiten des Flossers 1 ausgestaltet. Für alle Ausführungsformen gilt, dass die angegebenen Weichkomponenten auch durch Hartkomponenten substituiert werden können.

Der Flosser 1, 21, 41, 61 gemäss den Ausführungsformen nach Figur 1 bis 4, Figur 5 bis 8, Figur 9 bis 12 und Figur 13 bis 16 enthält einen Griffkörper 2, 22, 42, 62 und einen über einen Halsabschnitt 5, 25, 45, 65 mit dem Griffkörper 2, 22, 42, 62 verbundenen Halter 3, 23, 43, 63. Der Griffkörper 2, 22, 42, 62 ist flach ausgebildet. D.h., seine Länge und Breite sind wesentlich grösser als seine Höhe. Der Halter 3, 23, 43, 63 enthält einen ersten und zweiten Halterarm 6a, 6b; 26a, 26b; 46a, 46b; 66a, 66b, welche über einen Bogenabschnitt miteinander verbunden sind.

Zwischen den beiden Halterarmen 6a, 6b; 26a, 26b; 46a, 46b; 66a, 66b erstreckt sich eine Zahnseide 4, 24, 44, 64. Die Zahnseide 4, 24, 44, 64 ist über Verbindungsstellen mit den Halterarmen 6a, 6b; 26a, 26b; 46a, 46b; 66a, 66b verbunden. Die Halterarme 6a, 6b; 26a, 26b; 46a, 46b; 66a, 66b sind gegenüber der Längsachse L des Griffkörpers 2, 22, 42, 62 abgewinkelt. Im Halsabschnitt 5, 25, 45, 65 werden Griffflächen für die Finger ausgebildet.

Der Griffkörper 2, 22, 42, 62 bildet zwei Armabschnitte aus, welche einen geschlossenen Zwischenraum 13, 33, 53, 73 einschliessen. In diesem Zwischenraum 13, 33, 53, 73 ist ein Zahnstocher 7, 27, 47, 67 in seiner Passivposition angeordnet. Der Zahnstocher 7, 27, 47, 67 liegt in der Passivposition in der Ebene des Griffkörpers 2, 22, 42, 62 und ist in dessen Längsachse L ausgerichtet. Der Zahnstocher 7, 27, 47, 67 bildet eine Reinigungsspitze aus, welche in der Passivposition zum Halter 3, 23, 43, 63 hin gerichtet ist. Der Zahnstocher 7, 27, 47, 67 ist mit seinem, der Reinigungsspitze entfernten Ende über ein Filmscharnier 12, 32, 52, 72 mit dem Griffkörper 2, 22, 42, 62 verbunden. Der Zahnstocher 7, 27, 47, 67 bildet zwei einander gegenüber liegende Grundflächen sowie zwei seitlich angeordnete schmale Seitenkanten aus.

Die Seitenkanten inklusive der Reinigungsspitze werden durch die Armabschnitte des Griffkörpers 2, 22, 42, 62 seitlich eingefasst. Die Schwenkbewegung des Zahnstochers 7, 27, 47, 67 verläuft entlang der Längsachse L des Griffkörpers 2, 22, 42, 62 zu seinem dem Halter 3, 23, 43, 63 gegenüber liegenden Endabschnitt hin. Entsprechend ist die Drehachse des Filmscharniers 12, 32, 52, 72 senkrecht zur Längsachse L angeordnet.

Der Zahnstocher 7, 27, 47, 67 liegt mit seinen Grundflächen sowohl in der Passivposition als auch in der Funktionsposition in der Ebene des Griffkörpers 2, 22, 42, 62. Der Schwenkwinkel beträgt entsprechend 180°. Der Zahnstocher 7, 27, 47, 67 wird in seiner Funktionsposition über den Endabschnitt des Griffkörpers gelegt.

Auf der Grundfläche des Zahnstochers 7, 27, 47, 67 ist ein Durchbruch 9, 29, 49, 69 angeordnet. Auf dem Griffkörper 2, 22, 42, 62 ist eine mit dem Durchbruch 9, 29, 49, 69 korrespondierende Noppe 10, 30, 50, 70 angeordnet. Das Filmscharnier 12, 32, 52, 72 befindet sich auf halber Distanz zwischen der Noppe 10, 30, 50, 70 und dem Durchbruch, so dass beim Schwenken des Zahnstochers 7, 27, 47, 67 in seine Funktionsposition um das Scharnier 12, 32, 52, 72 die Noppe 10, 30, 50, 70 und der Durchbruch 9, 29, 49, 69 bei Erreichen der Funktionsposition zusammentreffen bzw. übereinander liegen. Die Noppe 10, 30, 50, 70 rastet formschlüssig im Durchbruch 9, 29, 49, 69 des Zahnstochers 7, 27, 47, 67 ein. Die so entstehende Formschlussverbindung hält den Zahnstocher 7, 27, 47, 67 in seiner Funktionsposition.

Der Griffkörper 2, 22, 42, 62 bildet im genannten Endabschnitt eine nutartige Vertiefung aus, welche in der Längsachse L des Griffkörpers 2, 22, 42, 62 orientiert ist. Die Noppe 10, 30, 50, 70 ist in der nutartigen Vertiefung angeordnet. Beim Schwenken des Zahnstochers 7, 27, 47, 67 in seine Funktionsposition wird dieser in der nutartigen Vertiefung positioniert. Die Breite und Höhe der nutartigen Vertiefung ist so ausgelegt, dass der Zahnstocher 7, 27, 47, 67 bündig oder annähernd bündig in die nutartige Vertiefung passt und der mit dem Griffkörper überlappende Zahnstocher-Abschnitt wenigstens teilweise in der nutartigen Vertiefung versenkt ist.

Die Anordnung von Noppe 10, 30, 50, 70 und Durchbruch 9, 29, 49, 69 kann auch umgekehrt sein. So kann die Noppe auf dem Zahnstocher und der Durchbruch oder eine entsprechende Vertiefung im Griffkörper angeordnet sein. Die Anordnung der Noppe 10, 30, 50, 70 in der Vertiefung im Griffkörper bringt den Vorteile, dass diese etwas geschützt angeordnet ist und im Wesentlichen nicht aus dem Körper hervorsteht.

Der Griffkörper 2, 22, 42, 62 bildet ferner in seinem dem Halter 3, 23, 43, 63 gegenüber liegenden Endabschnitt einen zwischen dem Filmscharnier 12, 32, 52, 72 und dem freien Ende angeordneter Durchbruch 11, 31, 51, 71 aus.

Im genannten Endabschnitt ist ferner ein Zungenreiniger 8, 28, 48, 68 angeordnet. Der Zungenreiniger 8, 28, 48, 68 ist zwischen dem Filmscharniers 12, 32, 52, 72 und dem freien Ende angeordnet. Der Zungenreiniger 8, 28, 48, 68 ist auf jener Seite des Endabschnittes angeordnet, die der Seite gegenüber liegt, welcher der Zahnstocher 7, 27, 47, 67 in seiner Funktionsposition anliegt.

In seiner Funktionsposition ist der Zahnstocher 7, 27, 47,67 über dem Zungenreiniger 8, 28, 48, 68 angeordnet. Die Elemente liegen, den Querschnitt betrachtet, direkt übereinander. Die Noppe 10, 30, 50, 70 kann auf einem Element des Zungenreinigers 8, 28, 48, 68 ausgestaltet sein, beispielsweise auf der Rückseite der Schaberkante 8b, 28b, 48c, 68c.

Die Schaberkante 8b, 28b, 48c, 68c ist im Querschnitt vorzugsweise komplett aus Hartmaterial gestaltet. In jedem Fall ist die Seite der Schaberkante 8b, 28b, 48c, 68c, die die Noppe 10, 30, 50, 70 enthält, aus Hartmaterial gestaltet. Die eigentliche Schaberkante 8b, 28b, 48c, 68c kann im Einzelfall im Querschnitt komplett aus Weichmaterial oder aus einem Hartmaterial-Kern mit Weichmaterialüberzug bestehen.

Der Zungenreiniger 8 gemäss dem Ausführungsbeispiel nach Figur 1 bis 4 enthält Reinigungselemente in Form von Noppen 8a, welche in einem Noppenfeld angeordnet sind und der Schaberkante 8b. Das Noppenfeld ist zwischen dem Filmscharnier 12 und dem Durchbruch 11 auf dem Griffkörper 2 angeordnet.

Als weiteres Element des Zungenreinigers 8 ist eine Schaberkante 8b am freien Ende angeordnet. Die Ausgestaltung von Noppen im Bereich des Griffs bringt ebenfalls den Vorteil, dass diese für den Gebrauch des Flossers als Anti-Rutsch-Element dienen und das Zahnreinigungsgerät im Gebrauch mit den Fingern sicher gehalten werden kann.

Der Zungenreiniger 28 gemäss dem Ausführungsbeispiel nach Figur 5 bis 8 enthält Reinigungselemente in Form von entlang der Längsachse L hintereinander angeordneten Lamellen 28a und einer Schaberkante 28b. Die Lamellen 28a sind quer zur Längsachse L des Griffkörpers 22 ausgerichtet. Die Lamellen 28a sind über dem Durchbruch 31 angeordnet. Als weiteres Element des Zungenreinigers 28 ist eine Schaberkante 28b am freien Ende angeordnet. Der Zungenreiniger 28 besteht also aus einer Kombination von Lamellen 28a und Schaberkante 28b.

Im Weiteren ist im Bogenabschnitt des Halters 23 zwischen den beiden Halterarmen 26a, 26b ein sichelförmiges Dämpfungselement 35 angeordnet. Das Dämpfungselement 35 besteht aus einer Weichkomponente.

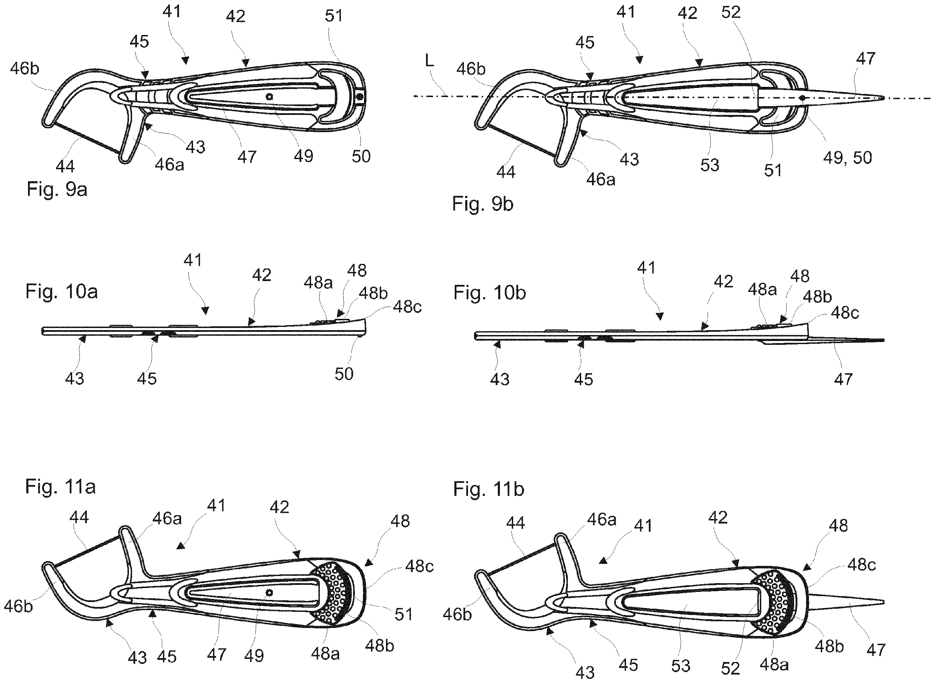

Der Zungenreiniger 48 gemäss dem Ausführungsbeispiel nach Figur 9 bis 12 enthält Reinigungselemente in Form von Noppen 48a, welche in einem Noppenfeld angeordnet sind, kombiniert mit einer weichelastischen Lamelle 48b sowie eine Schaberkante 48c. An dem vom Halter 43 entfernten Ende des Noppenfeldes ist das weitere Reinigungselement in Form einer Lamelle 48b angeordnet, welche sich quer zur Längsachse L des Griffkörpers 42 erstreckt und das Noppenfeld zu dieser Seite hin begrenzt. Die Noppen 48a und die Lamelle 48b sind über dem Durchbruch 51 angeordnet und aus einer Hart- oder Weichkomponente, vorzugsweise einer Weichkomponente gestaltet. Als weiteres Element des Zungenreinigers 48 ist eine Schaberkante 48c am freien Ende angeordnet.

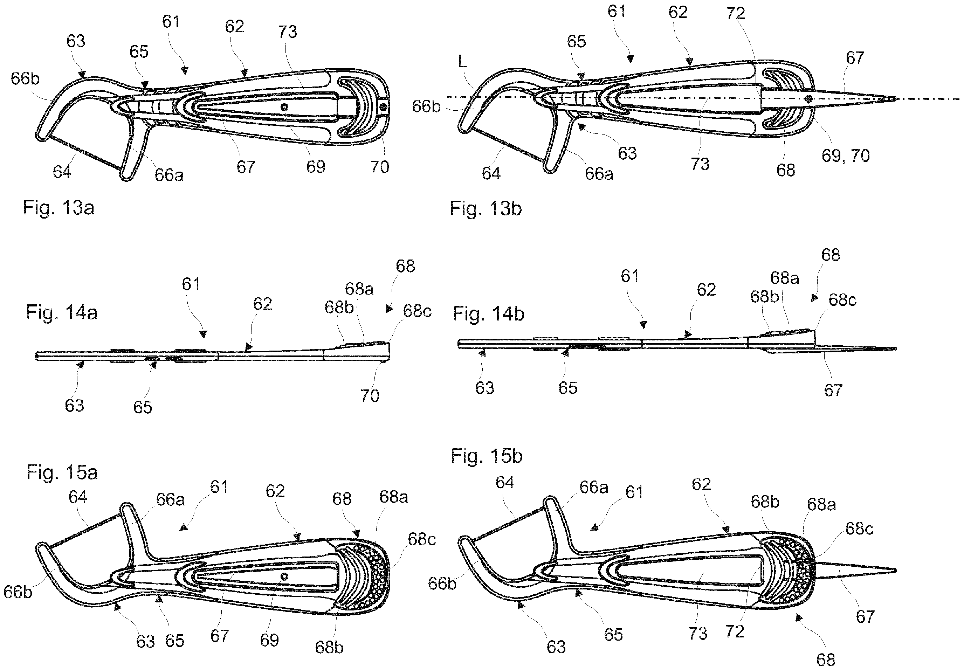

Der Zungenreiniger 68 gemäss dem Ausführungsbeispiel nach Figur 13 bis 16 enthält Reinigungselemente in Form von Noppen 68a, Lamellen 68b und einer Schaberkante 68c. Die Noppen 68a sind in einem Noppenfeld angeordnet. Die Lamellen 68b sind entlang der Längsachse L des Griffkörpers 62 hintereinander angeordnet und erstrecken sich quer zur Längachse L. Die Lamellen 68b sind im besagten Endabschnitt zwischen dem Filmscharnier 72 und dem Noppenfeld über dem Durchbruch 71 angeordnet. Die Noppen 68a sind im Endabschnitt zwischen dem freien Ende und den Lamellen 68b beziehungsweise zwischen der Schaberkante 68c und den Lamellen 68b, angeordnet. Die Schaberkante 68c befindet sich am freien Ende des Körpers.

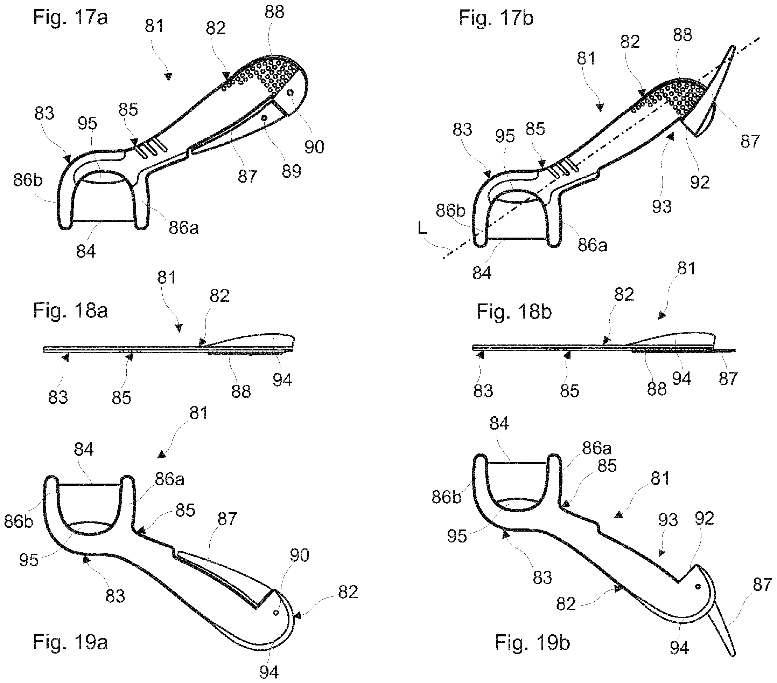

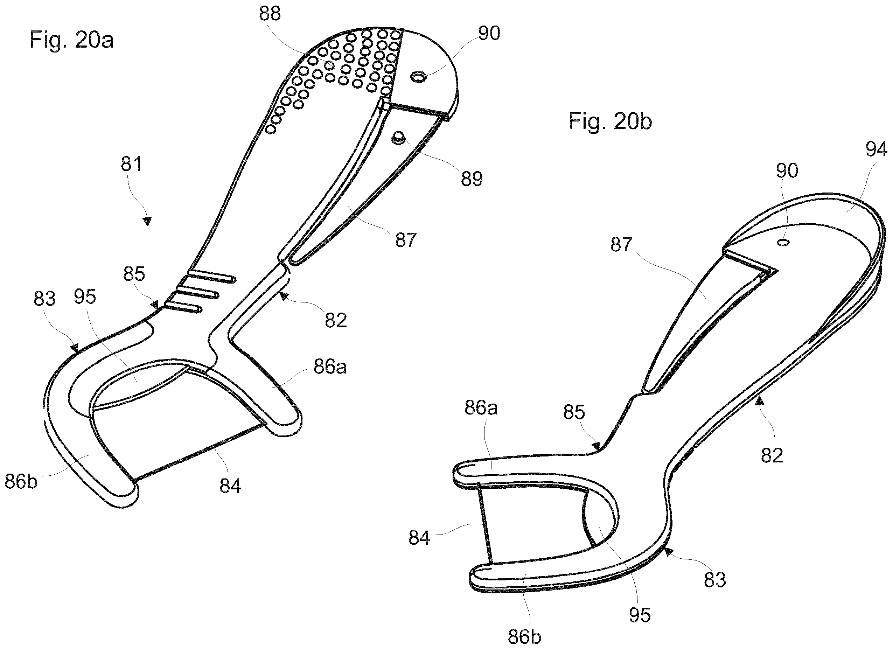

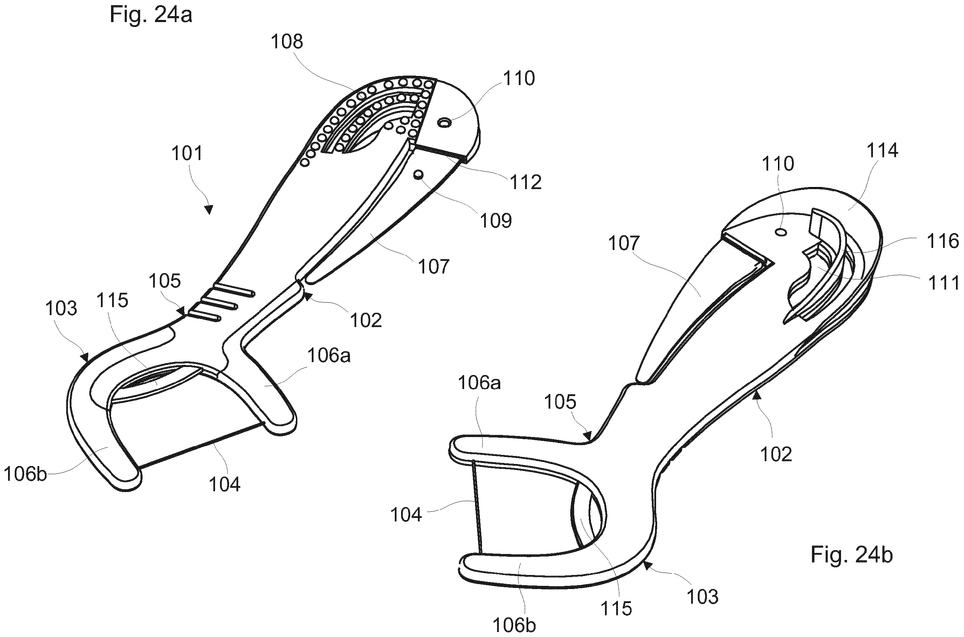

Der Flosser 81, 101 gemäss den Ausführungsformen nach Figur 17 bis 20 und Figur 21 bis 24 enthält einen Griffkörper 82, 102 und einen über einen Halsabschnitt 85, 105 mit dem Griffkörper 82, 102 verbundenen Halter 83, 103. Der Griffkörper 82, 102 ist flach ausgebildet. D.h., seine Länge und Breite sind wesentlich grösser als seine Höhe.

Der Halter 83, 103 enthält einen ersten und zweiten Halterarm 86a, 86b; 106a, 106b. Zwischen den beiden Halterarmen 86a, 86b; 106a, 106b erstreckt sich eine Zahnseide 84, 104. Die Zahnseide 84, 104 ist über Verbindungsstellen mit den Halterarmen 86a, 86b; 106a, 106b verbunden. Die Halterarme 86a, 86b; 106a, 106b sind gegenüber der Längsachse L des Griffkörpers 82, 102 abgewinkelt.

Der Griffkörper 82, 102 bildet eine seitlich angeordnete Aussparung 93, 113 aus. In dieser Aussparung 93, 113 ist ein Zahnstocher 87, 107 in seiner Passivposition angeordnet. Der Zahnstocher 87, 107 bildet zwei gegenüber liegende Grundflächen sowie zwei seitlich angeordnete schmale Seitenkanten aus.

Die eine freiliegende Seitenkante des Zahnstochers 87, 107 bildet dabei einen Abschnitt der Aussenkontur des Griffkörpers 82, 102 aus. Der Zahnstocher 87, 107 liegt in der Passivposition in der Ebene des Griffkörpers 82, 102 und ist im Wesentlichen in dessen Längsachse L ausgerichtet. Der Zahnstocher 87, 107 bildet eine Reinigungsspitze aus, welche in der Passivposition zum Halter 83, 103 hin gerichtet ist. Der Zahnstocher 87, 107 ist mit seinem, der Reinigungsspitze entfernten Ende über ein Filmscharnier 92, 112 mit dem Griffkörper 82, 102 verbunden.

Die zweite Seitenkante des Zahnstochers 87, 107 grenzt an den Griffkörper 82, 102. Die Schwenkbewegung des Zahnstochers 87, 107 verläuft entlang der Längsachse L des Griffkörpers 82, 102 zu seinem dem Halter 83, 103 gegenüber liegenden Endabschnitt hin. Entsprechend ist die Drehachse des Filmscharniers 92, 112 quer zur Längsachse L angeordnet.

Der Zahnstocher 87, 107 liegt sowohl in der Passivposition als auch in der Funktionsposition in der Ebene des Griffkörpers 82, 102. Der Schwcnkwinkcl beträgt entsprechend 180°. Der Zahnstocher 87, 107 wird in seiner Funktionsposition über den Endabschnitt des Griffkörpers 82, 102 gelegt.

Auf der Grundfläche des Zahnstochers 87, 107 ist eine Noppe 89, 109 angeordnet. Auf dem Griffkörper 82, 102 ist ein mit der Noppe 89, 109 korrespondierender Durchbruch 90, 110 angeordnet. Das Filmscharnier 92, 112 befindet sich auf halber Distanz zwischen der Noppe 89, 109 und dem Durchbruch 90, 110, so dass beim Schwenken des Zahnstochers 87, 107 in seine Funktionsposition um das Filmscharnier 92, 112 die Noppe 89, 109 und der Durchbruch 90, 110 bei Erreichen der Funktionsposition zusammentreffen bzw. übereinander liegen. Die Noppe 89, 109 des Zahnstochers 87, 107 rastet formschlüssig im Durchbruch 90, 110 des Griffkörpers 82, 102 ein. Die so entstehende Verbindung hält den Zahnstocher 87, 107 in seiner Funktionsposition.

Die Anordnung von Noppe 89, 109 und Durchbruch 90, 110 kann auch umgekehrt sein. So kann die Noppe auf dem Griffkörper und der Durchbruch oder eine entsprechende Vertiefung auf dem Zahnstocher angeordnet sein.

In seinem dem Halter 83, 103 gegenüber liegenden Endabschnitt des Griffkörpers 82, 102 ist eine bogenförmige Lamelle oder Schaberkante 94, 114 um die rundliche Abschlusskontur des Endabschnittes Griffkörpers 82, 102 angeordnet. Die Lamelle oder Schaberkante 94, 114 ist auf jener Seite des Endabschnittes angeordnet, die der Seite gegenüber liegt, welcher der Zahnstocher 87, 107 in seiner Funktionsposition anliegt. Die Lamelle oder Schaberkante 94, 114 bildet einen Zungenreiniger aus, welcher mit einer zweiten Lamelle 116 ergänzt wird.

Ferner ist am besagten Endabschnitt des Griffkörpers 82, 102 eine Grifffläche 88 angeordnet, welche durch ein Noppenfeld gebildet wird. Die Grifffläche 88 ist auf jener Seite des Endabschnittes angeordnet, welcher der Zahnstocher 87, 107 in seiner Funktionsposition anliegt.

Im Weiteren enthält der Halter 83, 103 im Bogenabschnitt zwischen den beiden Halterarmen 86a, 86b; 106a, 106b ein Dämpfungselement 95, 115.

Gemäss dem Ausführungsbeispiel nach Figur 17 bis 20 ist das Dämpfungselement 95 scheibenförmig ausgebildet und weist zur Zahnseide 84 hin eine konvexe Kontur auf. Das Dämpfungselement 95 ist vorzugsweise aus einer Weichkomponente gebildet.

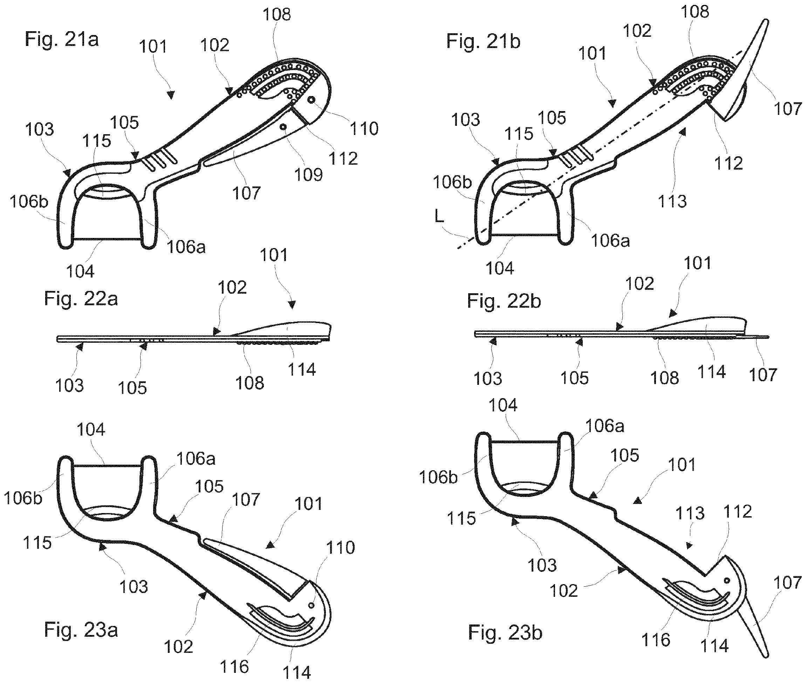

Gemäss dem Ausführungsbeispiel nach Figur 21 bis 24 ist das Dämpfungselement 115 als Bogen ausgebildet, welcher zur Zahnseide 104 hin eine konvexe Krümmung aufweist. Der Bogen ist in sich flexibel und ist vorzugsweise aus einer Weichkomponente gebildet.

Das Ausführungsbeispiel nach Figur 21 bis 24 enthält ferner eine zweite Lamelle 116, welche ebenfalls im Endabschnitt auf der Seite der ersten Lamelle oder Schaberkante 114 angeordnet ist. Die zweite Lamelle 116 ist in der Längsachse L gegenüber der ersten Lamelle oder Schaberkante 114 zum Halter 103 hin versetzt angeordnet. Die zweite Lamelle 116 ist über einen Durchbruch 111 im Endabschnitt geführt. Auf der gegenüber liegenden Seite des Durchbruchs 111 sind Noppen des Noppenfeldes auf der zweiten Lamelle 116 angeordnet. Diese Noppen bilden eine Noppenreihe aus.

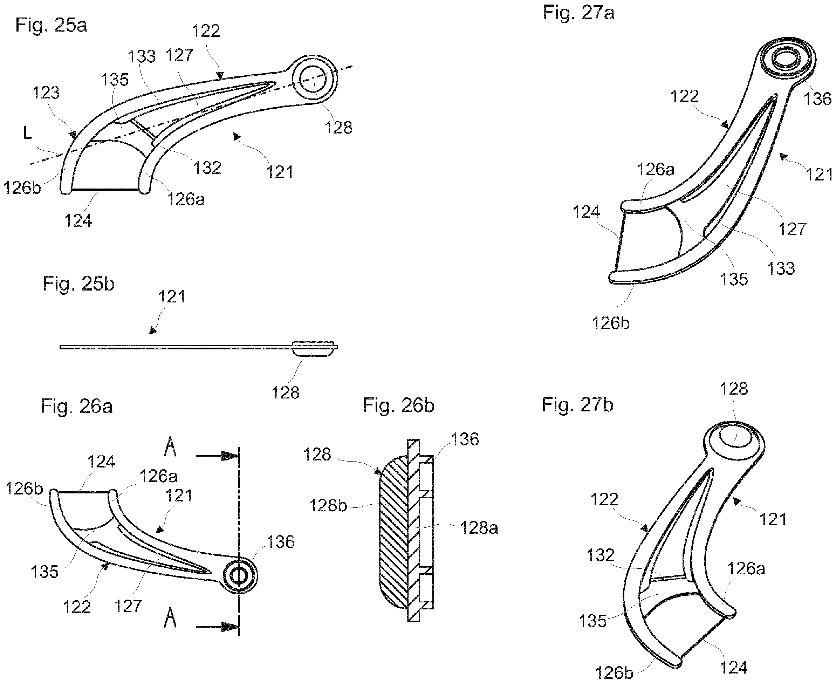

Der Flosser 121 gemäss dem Ausführungsbeispiel nach den Figuren 25a, 25b, 26a, 26b, 27a und 27b enthält einen Griffkörper 122 und einen mit dem Griffkörper 122 verbundenen Halter 123. Der Griffkörper 122 ist flach ausgebildet. D.h., seine Länge und Breite sind wesentlich grösser als seine Höhe. Der Halter 123 enthält einen ersten und zweiten Halterarm 126a, 126b. Zwischen den beiden Halterarmen 126a, 126b erstreckt sich eine Zahnseide 124. Die Zahnseide 124 ist über Verbindungsstellen mit den Halterarmen 126a, 126b verbunden. Die Halterarme 126a, 126b sind gegenüber der Längsachse L des Griffkörpers 122 gekrümmt.

Der Griffkörper 122 bildet zwei Armabschnitte aus, welche einen geschlossenen Zwischenraum 133 einschliessen. Die Armabschnitte entsprechen der Verlängerung der Halterarme 126a, 126b. Die Armabschnitte bilden zusammen mit den Halterarmen 126a, 126b eine sichelförmige Krümmung aus. Der Übergang vom Halter 123 zum Griffkörper 122 wird durch einen Verbindungssteg 135 ausgebildet, welche die beiden Halterarme 126a, 126b miteinander verbindet und den Zwischenraum 133 zum Halter 123 hin begrenzt. Die Armabschnitte laufen an dem vom Halter 123 entfernten Ende des Griffkörpers 122 in einem Endabschnitt zusammen.

Im genannten Zwischenraum 133 ist ein Zahnstocher 127 in seiner Passivposition angeordnet. Der Zahnstocher 127 liegt in der Passivposition in der Ebene des Griffkörpers 122 und ist in dessen Längsachse L ausgerichtet. Der Zahnstocher 127 bildet eine Reinigungsspitze aus, welche vom Halter 123 weg zum Endabschnitt des Griffkörpers 122 hin gerichtet ist. Der Zahnstocher 127 ist mit seinem, der Reinigungsspitze entfernten Ende über ein Filmscharnier 132 mit dem Verbindungssteg 135 verbunden. Der Zahnstocher 127 bildet zwei gegenüber liegende Grundflächen sowie zwei seitlich angeordnete schmale Seitenkanten aus.

Die Seitenkanten inklusive der Reinigungsspitze werden durch die Armabschnitte des Griffkörpers 122 eingefasst. Die Schwenkbewegung des Zahnstochers 127 verläuft im Wesentlichen entlang der Längsachse L des Griffkörpers 122 zum Halter 123 hin. Die Reinigungsspitze wird dabei zum Halter 123 hin geschwenkt. Entsprechend ist die Drehachse des Filmscharniers 132 in einem Winkel zur Längsachse L des Griffkörpers 122 angeordnet.

Der Zahnstocher 127 liegt sowohl in der Passivposition als auch in der Funktionsposition in der Ebene des Griffkörpers 122. Der Schwenkwinkel beträgt entsprechend 180°. Der Zahnstocher 127 wird in seiner Funktionsposition über den Verbindungssteg 135 gelegt. Dadurch liegt der Zahnstocher in seiner Funktionsposition über der Zahnseide 124.

Der Griffkörper 122 enthält ferner in seinem dem Halter 123 gegenüber liegenden Endabschnitt ein Polierelement 128. Das Polierelement 128 enthält ein auf einem Grundkörper 128a angebrachtes, höckerartiges Polierteil 128b, welches zum Beispiel aus einer Weichkomponente ist. Der Grundkörper 128a ist Teil des Griffkörpers 122 bzw. Teil von dessen Endabschnitt. Gemäss einer nicht gezeigten Variante ist das Polierelement 128 als Membrane ausgestaltet und wird nur in den Randbereichen von einem Grundkörper 128a getragen. Das Polierelement 128 ist so sehr flexibel und anpassungsfähig bezüglich der Oberfläche.

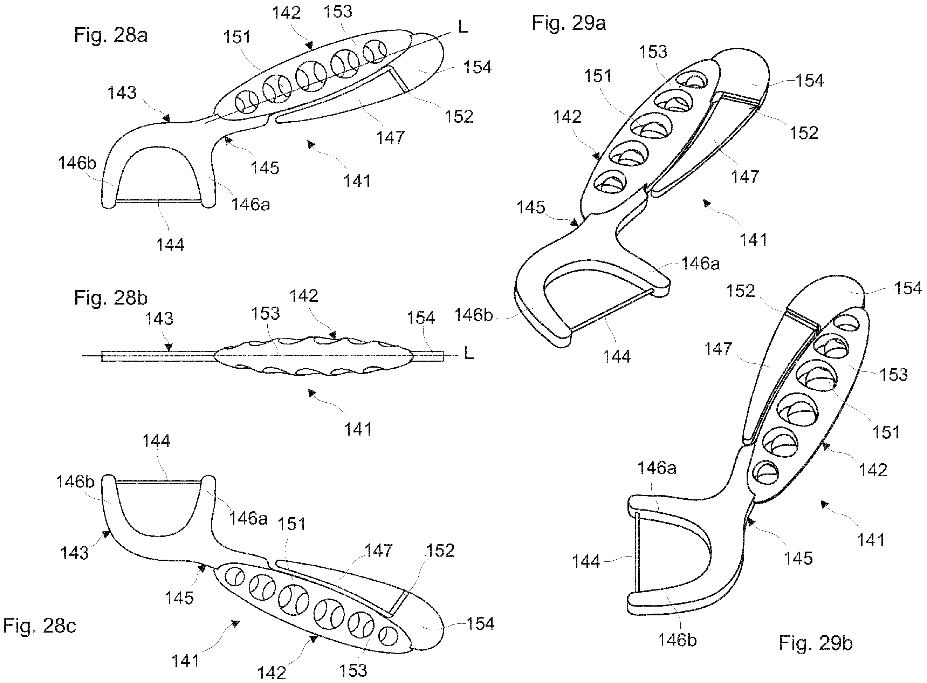

Der Flosser 141 gemäss den Ausführungsformen nach Figur 28 und 29 enthält einen Griffkörper 142 und einen über einen Halsabschnitt 145 mit dem Griffkörper 142 verbundenen Halter 143. Halter 143 und Halsabschnitt 145 sind als Flächenbauteile ausgebildet. Flächenbauteil bedeutet in dieser Beschreibung, dass Länge und Breite wesentlich grösser sind als die Höhe des Bauteils.

Der Griffkörper 142 enthält einen länglichen Volumenkörper 153 mit einem bauchigen Mitteilteil und zwei sich projektilartig verjüngenden Endabschnitten. Der Volumenkörper ist als Hohlkörper ausgebildet, welcher runde Durchbrüche 151 durch die Körperwand aufweist. Die Durchbrüche 151 bilden entsprechend Durchgänge zum Hohlraum aus. Die vorliegende Ausgestaltung des Volumenkörpers 153 dient unter anderem der Gewichtsreduktion und der Materialeinsparung. Der Halter 143 ist über den Halsabschnitt 145 mit dem Volumenkörper 153 verbunden.

An jenem Endabschnitt des Volumenkörpers 153, welcher dem Halter 143 entgegengesetzt angeordnet ist, schlicsst ein Haltcrungsclcmcnt 154 an, welches ebenfalls als Flächenbauteil ausgebildet ist.

Der Halter 143 enthält einen ersten und zweiten Halterarm 146b, 146b, welche über einen Bogenabschnitt miteinander verbunden sind. Zwischen den beiden Halterarmen 146a, 146b erstreckt sich ein Zahnzwischenraumreinigungselement 144 in Form eines Faserkörpers. Der Faserkörper ist über Verbindungsstellen mit den Halterarmen 146a, 146b verbunden. Die Halterarme 146a, 146b sind gegenüber der Längsachse L des Griffkörpers 142 abgewinkelt.

Im Griffkörper 142 ist ferner ein Zahnstocher 147 angeordnet. Der Zahnstocher 147 ist über ein Filmscharnier 152 mit dem Halterungselement 154 verbunden. Der Zahnstocher 147 bildet zwei gegenüber liegende Grundflächen sowie zwei seitlich angeordnete schmale Seitenkanten aus.

Der Zahnstocher 147 liegt in der Passivposition in der Ebene des Griffkörpers 142 und ist in dessen Längsachse L ausgerichtet. Die eine freiliegende Seitenkante des Zahnstochers 147 bildet in der Passivposition des Zahnstochers 147 einen Abschnitt der Aussenkontur des Griffkörpers 142 aus. Der Zahnstocher 147 bildet eine Reinigungsspitze aus, welche in der Passivposition zum Halter 143 hin gerichtet ist. Die zweite Seitenkante des Zahnstochers 147 grenzt an den Volumenkörper 153.

Der Zahnstocher 147 wird zur Benutzung aus der Längsachse L des Griffkörpers 142 in eine Funktionsposition geschwenkt. Die Schwenkbewegung des Zahnstochers 147 verläuft entlang der Längsachse L des Griffkörpers 142 zu seinem dem Halter 143 gegenüber liegenden Endabschnitt hin. Entsprechend ist die Drehachse des Filmscharniers 152 quer zur Längsachse L angeordnet.

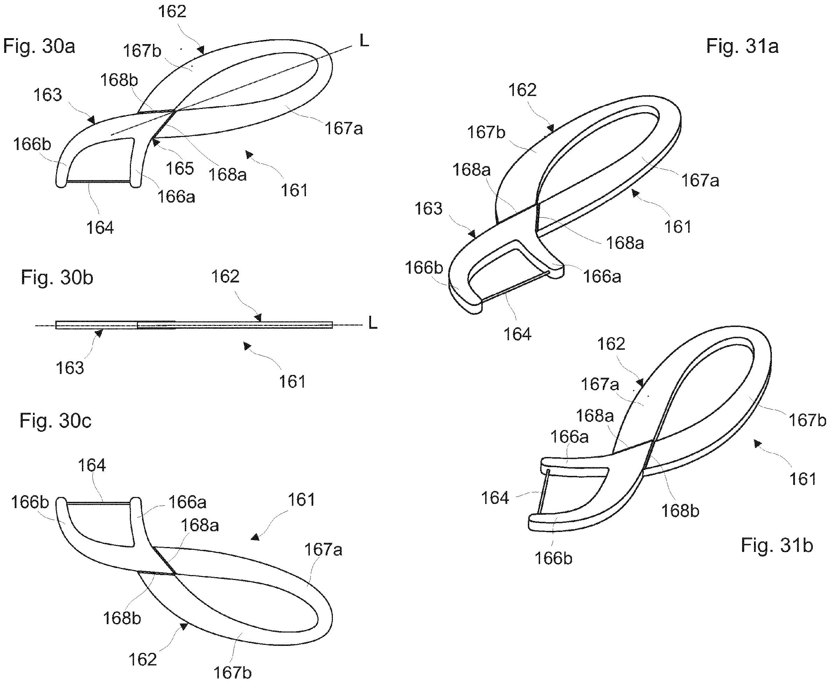

Der Flosser 161 gemäss Figur 30 und 31 enthält einen Griffkörper 162 und einen über einen Halsabschnitt 165 mit dem Griffkörper 162 verbundenen Halter 163. Der Flosser 161 ist als Flächenbauteil ausgebildet.

Der Griffkörper 162 enthält zwei Armabschnitte 167a, 167b auf, welche in dem vom Halter 163 entfernten Endabschnitt des Griffkörpers 162 bogenförmig miteinander verbunden sind. Zum Halsabschnitt 165 hin vereinen sich die Armabschnitte 167a, 167b zu einem schlaufenartigen Gebilde.

Der Halter 163 enthält einen ersten und zweiten Halterarm 166b, 166b, welche über einen Bogenabschnitt miteinander verbunden sind. Zwischen den beiden Halterarmen 166a, 166b erstreckt sich ein Zahnzwischenraumreinigungselement 164 in Form eines Faserkörpers. Der Faserkörper 164 ist über Verbindungsstellen mit den Halterarmen 166a, 166b verbunden. Die Halterarme 166a, 166b sind gegenüber der Längsachse L des Griffkörpers 162 abgewinkelt.

Die Armabschnitte 167a, 167b des Griffkörpers 162 laufen im Halsabschnitt 165 in einer Art Knoten zusammen. Die Armabschnitte 167a, 167b werden optisch auf der anderen Seite des Halsabschnittes 165 im Halter 163 als Halterarme 166a, 166b fortgeführt.

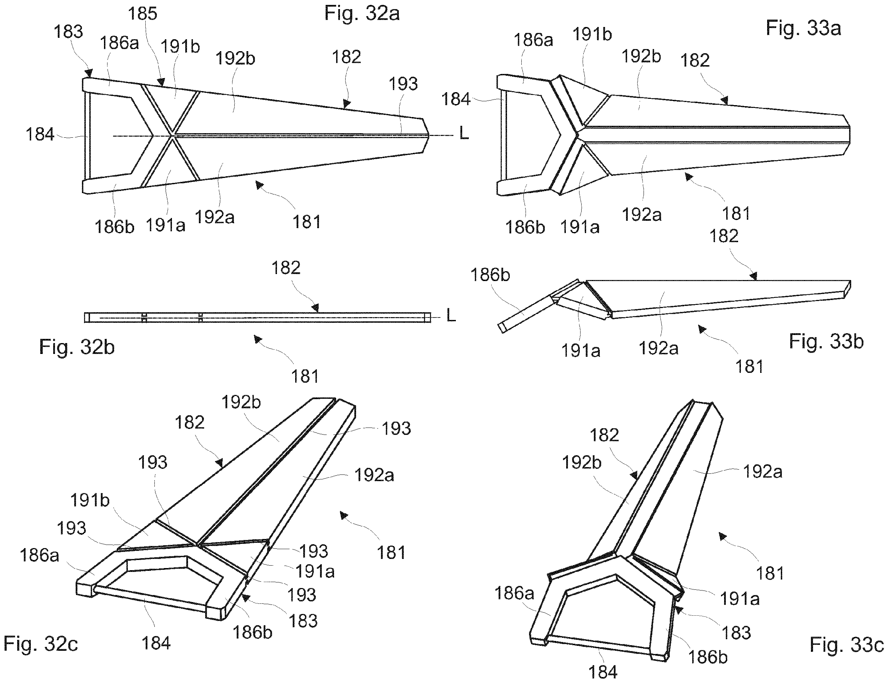

Der Flosser gemäss Figur 30 und 31 lehnt sich vom Funktionsprinzip an jenen in Figur 32 und 33 an. Durch mit Filmscharnieren 168a, 168b verbundene Teile des Griffkörpers 162 lässt sich ein Griffkörper 162 biegen, der nicht mehr flach, sondern als Volumenform daherkommt. Werden die beiden Armabschnitte 167a, 167b gegeneinander gedrückt, so werden die Filmscharniere 168a, 168b betätigt und die beiden Armabschnitte werden aus der Ebene gebogen, sodass sich ein Winkel zwischen dem Griff und dem Halter 163 einstellt. Dies ist nicht gezeigt, aber vom Prinzip her in Figur 33 ersichtlich. Der Flosser 161 wird flach hergestellt und vom Benutzer, wenn benötigt verformt.

Der Flosscr 181 gemäss Figur 32 und 33 enthält einen Griffkörper 182 und einen über einen Verbindungsabschnitt 185 mit dem Griffkörper 182 verbundenen Halter 183. Der Flosser 181 ist als Flächenbauteil ausgebildet.

Der Flosser 181 enthält eine Mehrzahl von Flächensegmenten 191a, 191b, 192a, 192b, welche über Faltscharniere 193, die als Filmschamiere ausgebildet sind, miteinander verbunden sind. Die Flächensegmente 191a, 191b, 192a, 192b, liegen in der Passivposition zusammen mit dem ebenfalls flächenförmig ausgebildeten Halter 183 in einer Ebene.

Der Griffkörper 182 enthält zwei Flächensegmente in Form eines ersten und zweiten Faltarms 192a, 192b, die über ein Faltscharnier 193 entlang der Längsachse L des Griffkörpers 182 gegeneinander faltbar sind. Das Faltscharnier 193, welches als Filmscharnier ausgebildet ist, bildet entsprechend eine Faltachse aus, welche parallel zur Längsachse L des Griffkörpers 182 verläuft.

Der Halter 183 enthält einen ersten und zweiten Halterarm 186b, 186b, welche über einen Bogenabschnitt miteinander verbunden sind. Zwischen den beiden Halterarmen 186a, 186b erstreckt sich ein Zahnzwischenraumreinigungselement 184 in Form eines Faserkörpers. Der Faserkörper 184 ist über Verbindungsstellen mit den Halterarmen 186a, 186b verbunden.

Zwischen dem Halter 183 und dem Griffkörper 182 liegt ein Verbindungsabschnitt 185. Dieser umfasst zwei dreieckförmige Flächensegmente 191a, 191b, welche über Faltscharniere 193 einerseits mit den Faltarmen 192a, 192a und andererseits mit dem Bogenabschnitt der Halterarme 186a, 186b verbunden sind. Die dreieckförmigen Flächensegmente 191a, 191b laufen im Spitz aufeinander zu.

Durch Falten der Flächensegmente 191a, 191b, 192a, 192b gegeneinander entlang der Faltscharniere 193 kann der Griffkörper 182 von der Passivposition in eine Funktionsposition überführt werden, in welcher der Flosser 181 aus der Ebene in eine dreidimensionale Form überführt wird.

Bei diesem Vorgang werden die Faltarme 192a, 192b nach unten gebogen. Dabei wird der Halter 183 über die dreieckförmigen Flächensegmente 191a, 191b mit seinen Halterarmen 186a, 186b ebenfalls nach unten geknickt und nimmt seine Funktionsposition ein.

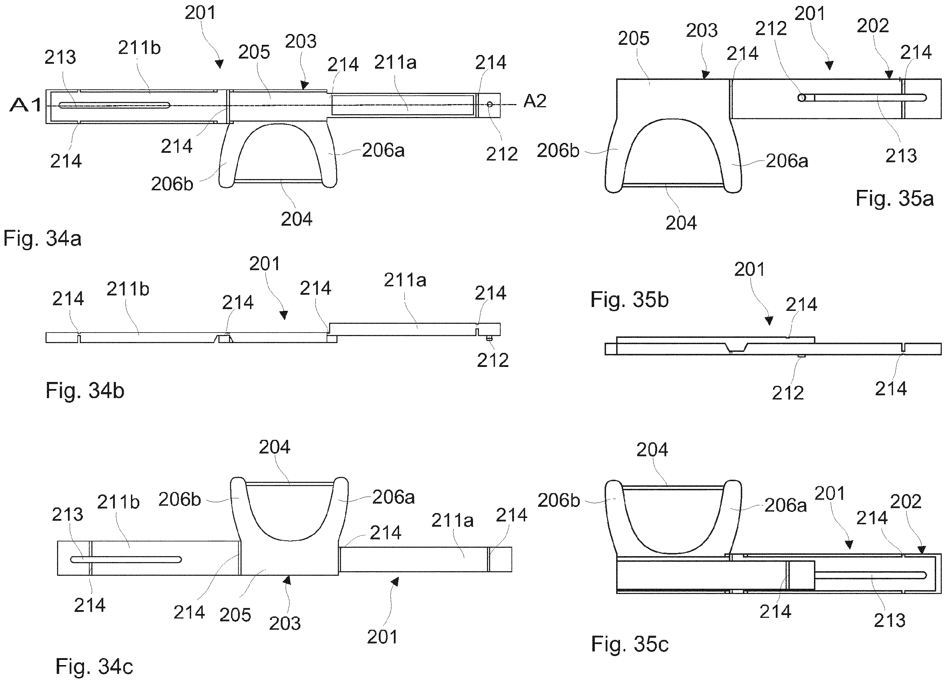

Der Flosser 201 gemäss den Ausführungsformen nach Figur 34 bis 37 enthält einen Griffkörper 202 und einen über einen Verbindungsabschnitt 205 mit dem Griffkörper 202 verbundenen Halter 203. Der Flosser 201 ist als Flächenbauteil ausgebildet.

Der Flosser 201 enthält einen Halter 203, an welchen über einen Verbindungsabschnitt 205 Armabschnitte 211a, 211b eines Griffkörpers 202 angelenkt sind. Die Armabschnitte 211a, 211b sind über Filmscharniere am Verbindungsabschnitt 205 schwenkbar angelenkt.

Die flächenförmigen Armabschnitte 211a, 211b liegen in der Passivposition zusammen mit dem ebenfalls flächenförmig ausgebildeten Halter 203 in einer Ebene.

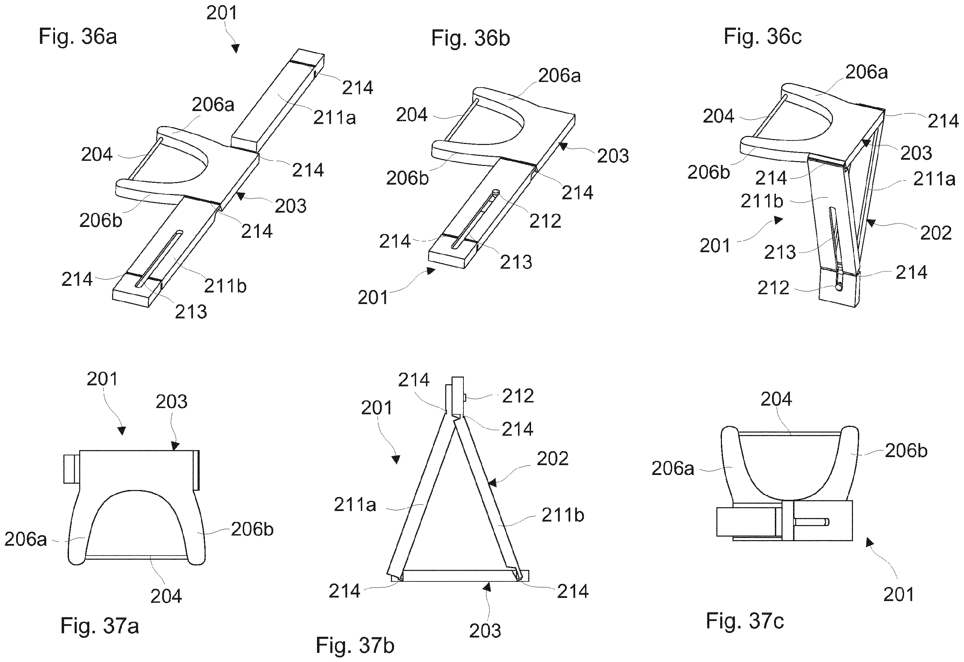

Die beiden Armabschnitte 211a, 211b liegen in dieser Position in einer gemeinsamen Achse, welche der Längsachse A1, A2 der Armabschnitte 211a, 211b entspricht (siehe Figur 34a bis 34c, 36a). Der Verbindungsabschnitt 205 ist hierbei zwischen den Armabschnitten 211a, 211b angeordnet.

In einem ersten Armabschnitt 211a ist ein Verbindungszapfen 212 angeordnet. Im zweiten Armabschnitt 211b ist ein Aufnahmeschlitz 213 angeordnet, welcher parallel zur Längsachse A2 des Armabschnittes 211b verläuft.

Der Halter 203 enthält einen ersten und zweiten Halterarm 206b, 206b, welche über einen Bogenabschnitt miteinander verbunden sind. Der Bogenabschnitt ist integraler Teil des Verbindungsabschnittes 205. Zwischen den beiden Halterarmen 206a, 206b erstreckt sich ein Zahnzwischenraumreinigungselement 204 in Form eines Faserkörpers. Der Faserkörper 204 ist über Verbindungsstellen mit den Halterarmen 206a, 206b verbunden.

Zur Überführung des Flossers 201 von seiner Passivposition in seine Funktionsposition, bei welchem Vorgang der Flosser 201 aus der Ebene in eine dreidimensionale Form überführt wird, wird der erste Armabschnitt 211a zum zweiten Armabschnitt 211b hin geschwenkt oder umgekehrt. Bei diesem Vorgang trifft der Verbindungszapfen 212 auf den Aufnahmeschlitz 213 und rastet in diesen ein. Die Armabschnitte 211a, 211b sind bei diesem Schritt immer noch parallel zueinander ausgerichtet (siehe Figur 35a bis 35c und 36b).

Durch Aufstellen der beiden Armabschnitt 211a, 211b aus der Ebene der Passivposition gleitet der Verbindungszapfen 212 im Aufnahmeschlitz 213 zum aussen liegenden Schlitzende hin. Die beiden Armabschnitte 211a, 211b bilden zusammen mit dem Verbindungsabschnitt 205 in Draufsicht eine dreieckförmige Anordnung aus (siehe Figur 36c und 37a bis 37c). Bei diesem Vorgang werden die Endbereiche der Armabschnitte 211a, 211b, welche dem Verbindungsabschnitt 205 entgegen liegen, zusammengeführt. In dieser Stellung befindet sich der Flosser 201 in seiner Funktionsposition.

Eine weitere Funktionsposition wird in Figur 35 gezeigt. Der Flosser 201 kann in der eingerasteten Situation auch diese gezeigte Gebrauchs-Position einnehmen.

Der Verbindungszapfen 212 kann im Aufnahmeschlitz 213 bewegt werden. Sodass neben den gezeigten Positionen aus Figur 34 und 35 auch zwischen diesen Figuren liegende Positionen realisiert werden können.

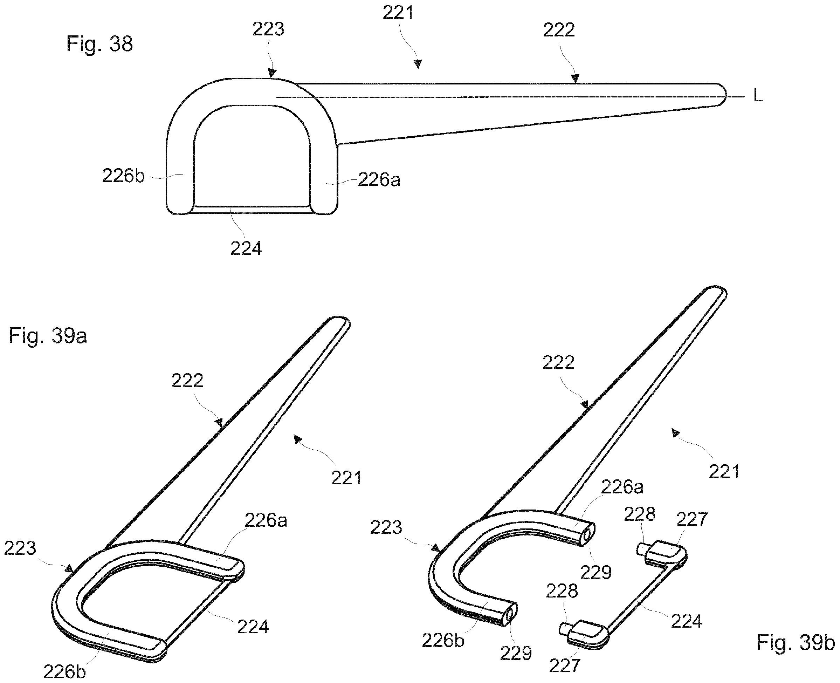

Der Flosscr 221 gemäss Figur 38 und 39 enthält einen länglichen Griffkörper 222 und einen mit dem Griffkörper 222 verbundenen Halter 223. Halter 223 und Griffkörper 222 sind als Flächenbauteile ausgebildet.

Der Halter 223 enthält einen ersten und zweiten Halterarm 226b, 226b, welche über einen Bogenabschnitt miteinander verbunden sind. Die Halterarme 226a, 226b sind gegenüber der Längsachse L des Griffkörpers 222 abgewinkelt.

Zwischen den beiden Halterarmen 226a, 226b erstreckt sich ein Zahnzwischenraumreinigungselement 224 in Form eines Faserkörpers (Figur 38, 39a). Der Faserkörper 224 ist seitlich jeweils mit einem Verbindungsabschnitt 227 verbunden. Die beiden Verbindungsabschnitte 227 enthalten jeweils einen Verbindungszapfen 228. Die Verbindungsabschnitte 227 sind über den Verbindungszapfen 228 mit dem jeweiligen Halterarm 226a, 226b verbunden. Hierzu greift der Verbindungszapfen 228 des Verbindungsabschnittes 227 formschlüssig in eine korrespondierende Vertiefung 229 am stirnseitigen Ende des jeweiligen Halterarms 226a, 226b ein. Der Verbindungsabschnitt 227 bildet dabei eine Fortsetzung des Halterarmes 226a, 226b aus (Figur 39a).

Faserkörper 224, Verbindungsabschnitte 227 sowie die Verbindungszapfen 228 sind bevorzugt einteilig hergestellt. Der Halter 223 und der Griffkörper 222 sind bevorzugt ebenfalls einteilig ausgebildet.

Zur Herstellung eignet sich insbesondere ein Spritzgiessverfahren. Die Herstellung kann in einem Ein- oder Mehrkomponentenverfahren geschehen. Entsprechend können die besagten Montagebauteile aus einer oder aus mehreren KunststoffKomponenten bestehen.

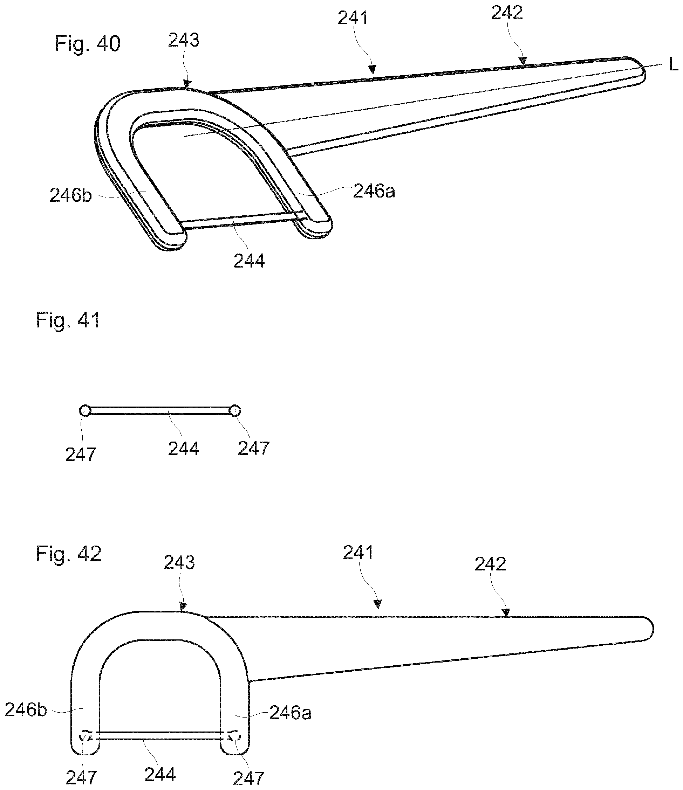

Der Flosser 241 gemäss Figur 40 bis 42 enthält einen länglichen Griffkörper 242 und einen mit dem Griffkörper 242 verbundenen Halter 243. Halter 243 und Griffkörper 242 sind als Flächenbauteile ausgebildet.

Der Halter 243 enthält einen ersten und zweiten Halterarm 246a, 246b, welche über einen Bogenabschnitt miteinander verbunden sind. Die Halterarme 246a, 246b sind gegenüber der Längsachse L des Griffkörpers 242 abgewinkelt.

Zwischen den beiden Halterarmen 246a, 246b erstreckt sich ein Zahnzwischenraumreinigungselement 244 in Form eines Faserkörpers (Figur 40). Der Faserkörper 244 ist seitlich jeweils mit einem Verankerungselement 247 verbunden. Das Verankerungselement 247 ist kugelförmig ausgebildet.

Der Faserkörper 244 wird zusammen mit dem Verankerungselement 247 separat, beispielsweise in einem vorgelagerten Spritzgiessschritt, hergestellt (Figur 41). Bei der Herstellung des Flossers 241 wird der zuvor separat hergestellte Faserkörper 244 mit den Verankerungselementen 247 in eine Werkzeugform eingelegt. Anschliessend werden in einem Spritzgiessverfahren der Griffkörper und der Halter gespritzt. Die Halterarme 246a, 246b werden hierbei um die Verankerungselemente 247 gespritzt. Die Verankerungselemente 247 werden dadurch in den Halterarmen 246a 246b verankert (Figur 42).

Faserkörper 244 und Verankerungselemente 247 sind bevorzugt einteilig hergestellt. Der Halter 243 und der Griffkörper 242 sind bevorzugt ebenfalls einteilig ausgebildet.

Zur Herstellung eignet sich insbesondere ein Spritzgiessverfahren. Die Herstellung kann in einem Ein- oder Mehrkomponentenverfahren geschehen. Entsprechend können die besagten Montagebauteile aus einer oder aus mehreren KunststoffKomponenten bestehen.

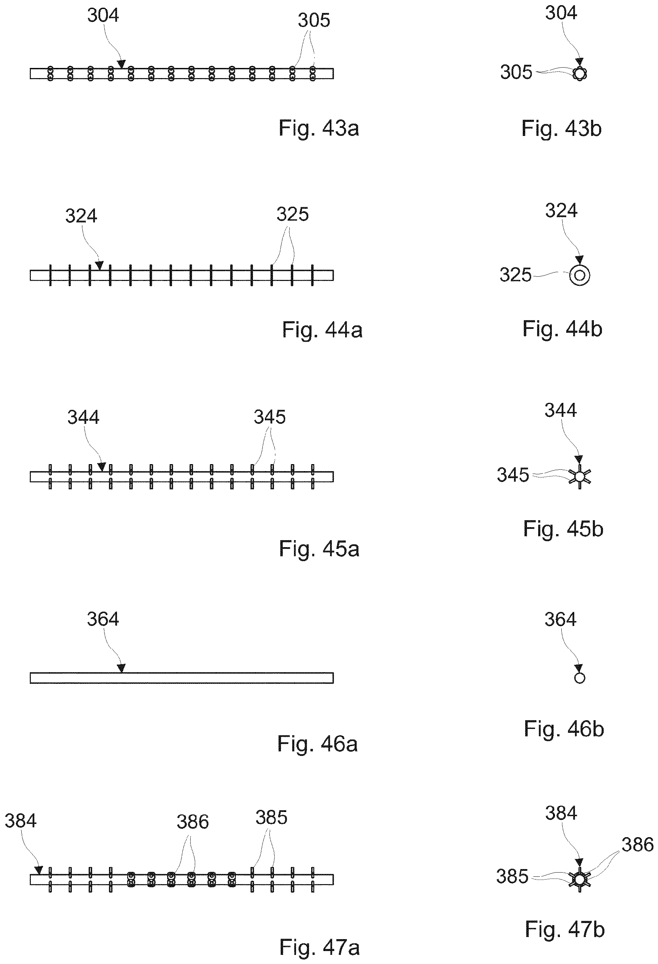

Die Figuren 43 bis 47 zeigen verschiedene Ausführungsformen von Zahnzwischcnraumreinigungselementen.

Das Zahnzwischenraumreinigungselement 304 gemäss Figur 43a und 43b enthält ringförmig um einen Faserkörper angeordnete Noppen 305 auf. In Längsrichtung des Faserkörpers sind eine Mehrzahl von solchen ringförmigen Noppenanordnungen in Abstand zueinander angeordnet.

Das Zahnzwischenraumreinigungselement 324 gemäss Figur 44a und 44b enthält einzelne, ringförmig um den Faserkörper ausgebildete Lamellen 325. In Längsrichtung des Faserkörpers sind eine Mehrzahl von solchen einzelnen Lamellen 325 in Abstand zueinander angeordnet.

Das Zahnzwischenraumreinigungselement 344 gemäss Figur 45a und 45b weist ringförmig um den Faserkörper angeordnete Borsten 345 auf. In Längsrichtung des Faserkörpers sind eine Mehrzahl von solchen ringförmigen Borstenanordnungen in Abstand zueinander angeordnet.

Das Zahnzwischenraumreinigungselement 364 gemäss Figur 46a und 46b wird lediglich aus einem Faserkörper gebildet und enthält keine Funktionselemente.

Das Zahnzwischenraumreinigungselement 384 nach Figur 47a und 47b enthält eine Kombination von Borsten 385 gemäss dem Ausführungsbeispiel nach Figur 45 und Noppen 386 gemäss dem Ausführungsbeispiel nach Figur 43. So sind auf dem Faserkörper abwechselnd eine Mehrzahl von ringförmigen Borstenanordnungen und ringförmigen Noppenanordnungen vorgesehen.

Die Zahnzwischenraumreinigungselemente sind zusammen mit ihren Funktionselementen bevorzugt einteilig ausgebildet. Zur Herstellung eignet sich insbesondere ein Spritzgiessverfahren. Die Herstellung kann in einem Ein- oder Mehrkomponentenverfahren geschehen. Entsprechend können die Zahnzwischenraumreinigungselemente mit Funktionselementen aus einer oder aus mehreren Kunststoff-Komponenten bestehen.

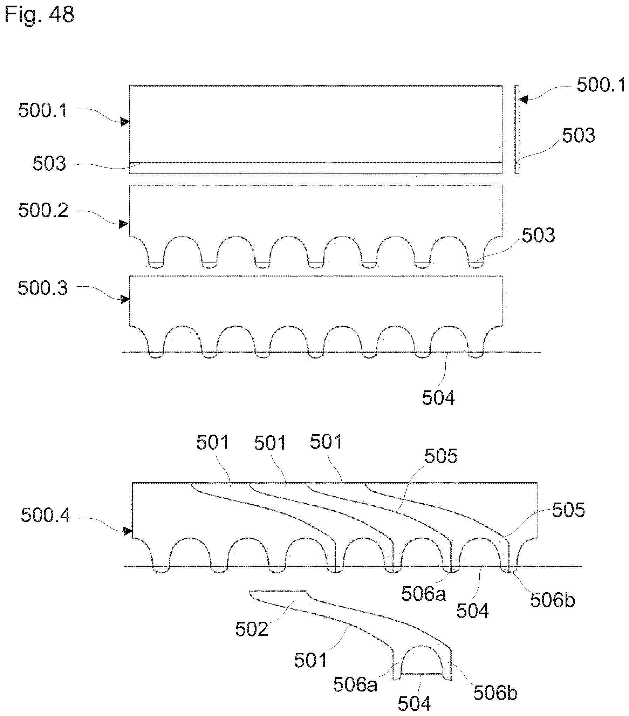

Die anhand von Figur 48 dargestellten Schritte zur Produktion einer weiteren Ausführungsform eines Flossers 501 umfassen in einem ersten Schritt die Herstellung eines flächigen Extrusionsbauteils 500.1 aus Kunststoff. Das Extrusionsprofil 500.1 ist bandförmig ausgebildet und enthält eine mitextrudierte Längsnut 503.

In einem zweiten Schritt werden auf der einen Längsseite des Extrusionsprofils 500.2 nebeneinander und in Abstand voneinander bogenförmige Ausnehmungen ausgestanzt. Zwischen jeweils zwei bogenförmigen Ausnehmungen ergeben sich fingerförmige Anformungen, welche die späteren Halterarme 506a, 506b ausbilden. Die Längsnut 503 ist nun in Form von Längsnutabschnitten in den fingerförmigen Anformungen angeordnet.

In einem dritten Schritt wird der Zahnfaden 504 in die Längsnut 503 des Extrusionsprofils 500.3 eingelegt und in dieser arretiert, z. B. durch Verrastung, Verkleben, etc.

In einem vierten Schritt werden einzelnen Flosser 501 entlang der Trennlinie 505 aus dem vorbereiteten Extrusionsprofil 500.4 ausgestanzt. Die Trennlinie 505 führt durch die fingerförmige Anformung und unterteilt diese in je einen Halterarm 506a, 506b von zwei benachbarten Flosser 501. Die Trennlinie 505 entspricht der Kontur des Stanzmessers beim Ausstanzen.

Der ausgestanzte Flosser 501 enthält zwei Halterarme 506a, 506b, einen zwischen diesen verlaufenden Zahnfaden 504 und einen Griffkörper 502.

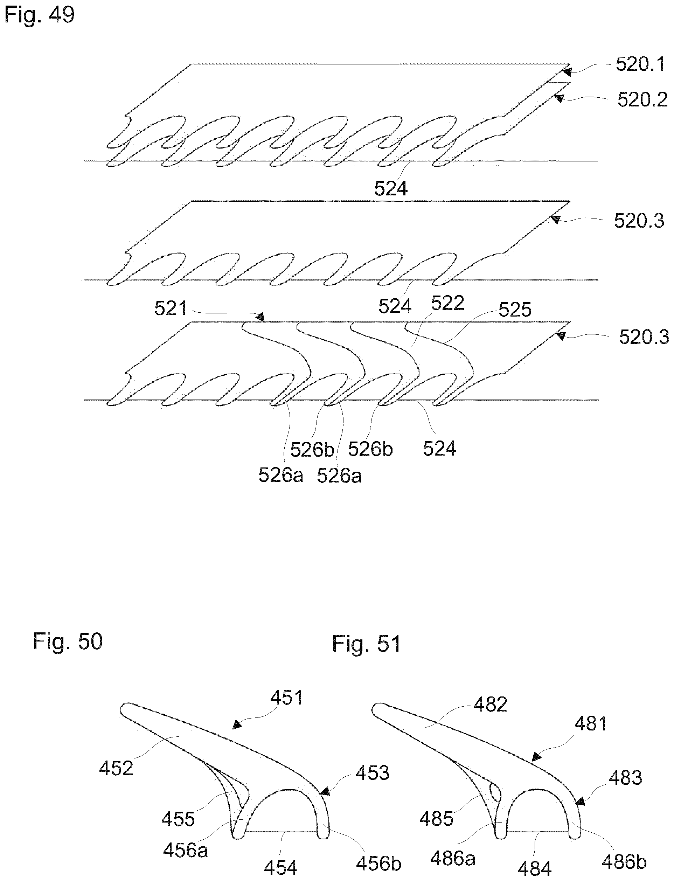

Die anhand von Figur 49 dargestellten Schritte zur Produktion einer weiteren Ausführungsform eines Flossers 521 umfassen in einem ersten Schritt die Herstellung von zwei Kunststoffolien.

In einem zweiten Schritt werden auf der einen Längsseite der Folien nebeneinander und in Abstand voneinander identische bogenförmige Ausnehmungen ausgestanzt. Es entstehen die Folienabschnitte 520.1, 520.2. Zwischen jeweils zwei bogenförmigen Ausnehmungen ergeben sich fingerförmige Anformungen, welche die späteren Halterarme 526a, 526b ausbilden.

In einem dritten Schritt werden die beiden Folienabschnitte 520.1, 520.2 zusammengeführt und flächig verbunden. Die Ausnehmungen in den beiden Folienabschnitte 520.1, 520.2 sind dabei aufeinander ausgerichtet, d.h. in Register.

Vor oder beim Zusammenführen der beiden Folienabschnitte 520.1, 520.2 wird der Zahnfaden 524 im Bereich der Endabschnitte der fingerförmigen Anformungen zwischen die beiden Folienabschnitten 520.1, 520.2 eingelegt und mit den beiden Folienabschnitte 520.1, 520.2 verbunden. Die Verbindung der beiden Folienabschnitte 520.1, 520.2 und entsprechend die Befestigung des Zahnfadens kann mittels Kleben oder Schweissen geschehen.

In einem vierten Schritt werden einzelnen Flosser 521 entlang der Trennlinie 525 aus dem vorbereiteten Extrusionsprofil 520.3 ausgestanzt. Die Trennlinie 525 führt durch die fingerförmige Anformung und unterteilt diese in je einen Halterarm 526a, 526b von zwei benachbarten Flosser 521.

Der ausgestanzte Flosser 521 enthält zwei Halterarme 526a, 526b, einen zwischen diesen verlaufenden Zahnfaden 524 und einen Griffkörper 522.

Die in Figur 50 und 51 gezeigten Ausführungsformen von Flossern 451, 481 enthalten einen Griffkörper 452, 482 sowie einen Halter 453, 483, welcher gegenüber dem Griffkörper 452, 482 abgewinkelt angeordnet ist. Der Halter 453, 483 enthält einen erste und zweiten Halterarm 456a, 456b; 486a, 486b, zwischen welchen ein Zahnfaden 454, 484 gespannt ist

Im Weiteren enthält der Flosser 451, 481 ein Zugelement 455, 485 in Form einer Zugrippe. Das Zugelement 455, 485 ist mit einem Ende am inneren, dem Griffkörper 452, 482 zugewandten Halterarm 456a, 486a des gegenüber dem Griffkörper 452, 482 abgewinkelten Halters 453, 483 angeordnet. Das Zugelement 455, 485 ist mit dem anderen Ende am Griffkörper 452, 482 angebracht. Das Zugelement 455, 485 überspannt die durch den Halterarm 456a, 486a und dem Griffkörper 452, 482 ausgebildete Biegung. Das Zugelement 455, 485 ist zusammen mit dem Flosser 451, 481 spritzgegossen.

Das Zugelement 455, 485 erzeugt beim Abkühlen durch den Schwund eine nach aussen, vom Zahnfaden 454, 484 weg wirkende Zugspannung auf den Halterarm 456a, 486a. Diese Zugspannung bewirkt, dass die Vorspannung des Zahnfadens 454, 484 während der Abkühlung erhalten bleibt oder sogar zunimmt.

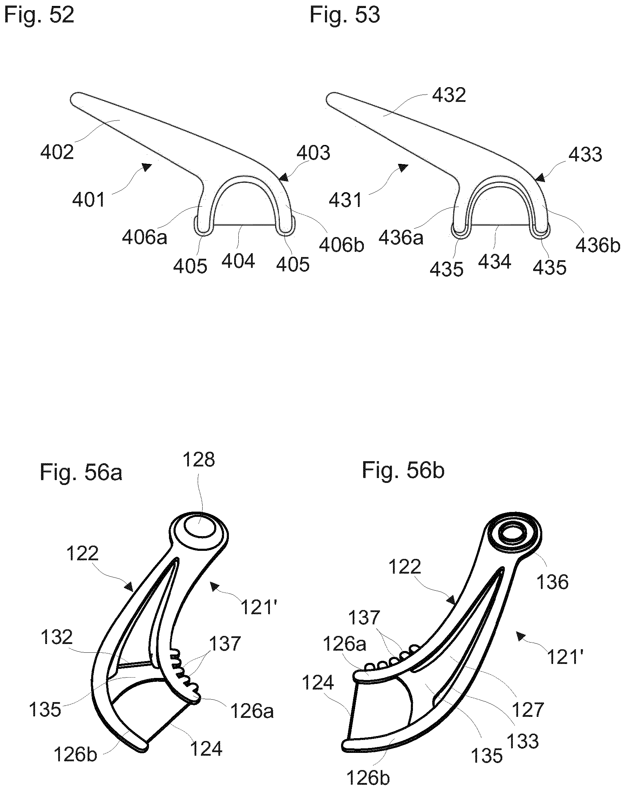

Der Flosser 401, 431 gemäss den Ausführungsformen nach Figur 52 und 53 enthält einen Griffkörper 402, 432 und einen mit dem Griffkörper 402, 432 verbundenen Halter 403, 433. Der Halter 403, 433 enthält einen ersten und zweiten Halterarm 406a, 406b; 436a, 436b, welche über einen Bogenabschnitt miteinander verbunden sind.

Zwischen den beiden Halterarmen 406a, 406b; 436a, 436b erstreckt sich eine Zahnseide 404, 434. Die Halterarme 404, 434 sind gegenüber einer Längsachse des Griffkörpers 402, 432 abgewinkelt. Der Halter 403, 433 enthält ferner ein Dämpfungselement 405, 435.

Das Dämpfungselement 405 gemäss der Ausführungsform nach Figur 52 ist bogenförmig entlang des durch den Bogenabschnitt und die Halterarme 406a, 406b ausgebildeten Innenbogens angeordnet. Das Dämpfungselement ist dabei auf dem Bogenabschnitt und den Halterarmen 406a, 406b angebracht. Das Dämpfungselement 405 erstreckt sich ferner um die Endabschnitte der Halterarmen 406a, 406b zu deren Aussenseiten hin und bedeckt die Endflächen der Halterarme 406a, 406b. Das Dämpfungselement 405 ist als eine Art Lippe ausgebildet.

Das Dämpfungselement 435 gemäss der Ausführungsform nach Figur 53 ist ebenfalls bogenförmig entlang des durch den Bogenabschnitt und die Halterarme 436a, 436b ausgebildeten Innenbogens, d.h. entlang des Bogenabschnitts und der Halterarmen 436a, 436b angeordnet. Ferner erstreckt sich das Dämpfungselement 435 ebenfalls um die Endabschnitte der Halterarmen 436a, 436b zu deren Aussenseiten hin und bedeckt die Endflächen der Halterarme 436a, 436b.

Im Gegensatz zur Ausführungsform nach Figur 52 ist das Dämpfungselement 435 entlang des Innenbogens als frei liegendes, lippenartiges Element ausgebildet, welches lediglich mit seinen Endabschnitten auf der Aussenseite der Halterarme 436a, 436b im Bereich ihrer Endabschnitte an diese befestigt ist.

Das Dämpfungselement 405, 435 gemäss den Figuren 52 und 53 besteht zum Beispiel aus einer Weichkomponente der oben genannten Art. Das Dämpfungselement 405, 435 wird insbesondere in einem separaten Spritzgussschritt gespritzt.

Die Zahnseide durchdringt das Dämpfungselement 405, 435 oder ist von diesem wenigstens teilweise umgeben.

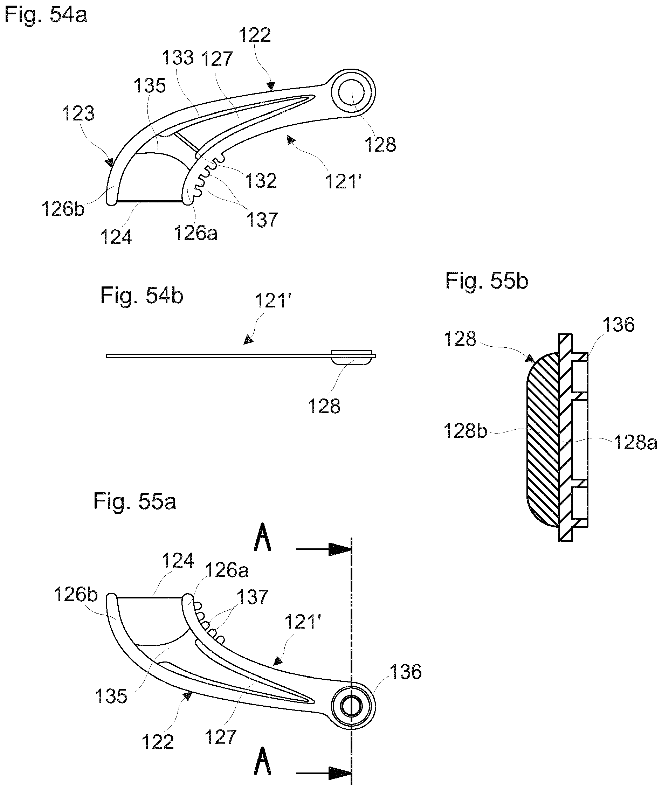

Der Flosser 121' gemäss dem Ausführungsbeispiel nach Figur 54a, 54b, 55a, 55b, 56a und 56b entspricht mit Ausnahme der nachfolgend beschriebenen Merkmalen der Ausführungsform gemäss den Figuren Figur 25a, 25b, 26a, 26b, 27a und 27b. Entsprechen sind in den vorliegenden Figuren gleiche Merkmale mit den identischen Bezugszeichen versehen. Bezüglich der Beschreibung dieser Merkmale wird auf die Beschreibung zu den erwähnten Figuren Figur 25a, 25b, 26a, 26b, 27a und 27b verwiesen.

Am inneren, dem Griffkörper 122 zugewandten Halterarm 126a des sichelförmig gekrümmten Flossers 121' ist ein weiterer Zungenreiniger angeordnet. Dieser ist in Form von in einer Reihe nebeneinander am Halterarm 126a angeordneten Noppen 137 ausgebildet.

Die gemachten Beschreibungen zu den spezifischen Figuren lassen sich selbstverständlich auch auf andere Figuren übertragen, die gleiche oder ähnliche Ausprägungen zeigen, und in welchen die Ausprägungen nicht im gleichen Detail beschrieben sind.

## Patentansprüche

1. Flosser (1) mit einem Griffkörper (2),
einem mit dem Griffkörper verbundenen Halter (3)
mit einem ersten und zweiten Halterarm (6a, 6b) und einem am ersten und zweiten
Halterarm befestigten und sich zwischen den beiden Halterarmen erstreckenden Zahnzwischenraumreinigungselement (4),
und der Flosser im Griffkörper einen
Zahnstocher (7)
enthält, wobei der Griffkörper zwei Armabschnitte ausbildet,
welche einen Zwischenraum (13)
ausbilden und der Zwischenraum den Zahnstocher
in einer Passivposition aufnimmt, und der Flosser mit dem Griffkörper flach ausgebildet ist und der Zahnstocher in der Passivposition in einer Ebene mit dem Griffkörper liegt,
**dadurch gekennzeichnet, dass**
ein als Schutzteil ausgebildeter, wegschwenkbarer Teil des Griffkörpers über ein im Griffkörper angeordnetes Filmscharnier mit einem Schwenkwinkel von 180° weggeschwenkt werden kann, so dass der Zahnstocher aus dem Griffkörper freigelegt wird, wobei das Schutzteil einen Schutz für den Zahnstocher in der Passivposition ausbildet und das Schutzteil in einer Funktionsposition, in welcher der Zahnstocher aus dem Griffkörper freigelegt ist, durch ein oder mehrere Verbindungsmittel (9, 10)
fixiert ist, wobei die Verbindungsmittel zur
Ausbildung einer formschlüssigen Verbindung ausgelegt sind, und ein erstes Verbindungsmittel eine Vertiefung oder einen Durchbruch und ein zweites Verbindungsmittel eine Erhöhung in Form eines Noppens oder eines Zapfens enthält.

2. Flosser gemäss Anspruch 1, **dadurch gekennzeichnet, dass** die beiden Elemente Vertiefung bzw. Durchbruch und Noppe dazu ausgelegt sind, im Zusammenspiel eine Klemmung oder Rastung auszubilden.

3. Flosser gemäss Anspruch 1 oder 2, **dadurch gekennzeichnet, dass** die Noppe zylinderförmig ausgebildet ist.

4. Flosser gemäss einem der Ansprüche 1 bis 3, **dadurch gekennzeichnet, dass** die Noppe konisch ausgebildet ist.

5. Flosser gemäss einem der Ansprüche 1 bis 4, **dadurch gekennzeichnet, dass** die Noppe im Endabschnitt konisch ausgebildet ist.

6. Flosser gemäss einem der Ansprüche 1 bis 5, **dadurch gekennzeichnet, dass** die Noppe eine Höhe von 0.8 bis 3 mm aufweist.

7. Flosser gemäss Anspruch 1, **dadurch gekennzeichnet, dass** die Armabschnitte in dem vom Halter entfernten Endabschnitt des Griffkörpers miteinander verbunden sind.

8. Flosser gemäss einem der Ansprüche 1 bis 7, **dadurch gekennzeichnet, dass** das Schutzteil ein weiteres Funktionselement, insbesondere einen Zungenreiniger (8), enthält.

9. Flosser gemäss einem der Ansprüche 1 bis 8, **dadurch gekennzeichnet, dass** der Halter bzw. dessen Halterarme gegenüber dem Griffkörper derart angeordnet sind, dass das Zahnzwischenraumreinigungselement in einem Winkel von kleiner 90° und grösser 0° gegenüber dem Griffkörper verläuft.

10. Flosser gemäss einem der Ansprüche 1 bis 9, **dadurch gekennzeichnet, dass** auf dem Halter, insbesondere auf einem Halterarm, ein Zungenreiniger (8) angeordnet ist, und der Zungenreiniger eine Schaberkante (8b), insbesondere aus einem Hartmaterial, umfasst.

11. Flosser gemäss einem der Ansprüche 1 bis 10, **dadurch gekennzeichnet, dass** auf dem Zahnstocher ein Zungenreiniger (8) angeordnet ist, und der Zungenreiniger insbesondere mehrere Noppen (8a) enthält, welche ein Noppenfeld ausbilden.

## Claims

1. A flosser (1) with a grip body (2), with a holder (3) which is connected to the grip body and has a first and a second holder arm (6a, 6b), and with an interdental space cleaning element (4) which is fastened to the first and second holder arm and extends between the two holder arms, and the flosser in the grip body comprises a toothpick (7), wherein the grip body forms two arm sections which form an intermediate space (13) and the intermediate space receives the toothpick in a passive position, and the flosser with the grip body is designed in a flat manner and the toothpick in the passive position lies in a plane with the grip body,
**characterised in that**
a pivotable part of the grip body which can be pivoted away and which is designed as a protective part can be pivoted away with a pivoting angle of 180° via a film hinge which is arranged in the grip body, so that the toothpick can be exposed out of the grip body, wherein the protective part forms a protection for the toothpick in the passive position, and the protective part in a function position, in which the toothpick is exposed out of the grip body, is fixed by way of one or more connection means (9), wherein the connection means are designed for forming a positive connection, and a first connection means comprises a recess or an opening and a second connection means a prominence in the form of a nub or pin.

2. A flosser according to claim 1, **characterised in that** the two elements recess or opening and nub are designed to form a clamping or latching on interaction.

3. A flosser according to claim 1 or 2, **characterised in that** the nub is designed is a cylinder-shaped manner.

4. A flosser according to one of the claims 1 to 3, **characterised in that** the nub is designed in a conical manner.

5. A flosser according to one of the claims 1 to 4, **characterised in that** the nub is designed conically in the end section.

6. A flosser according to one of the claims 1 to 5, **characterised in that** the nub has a height of 0.8 to 3 mm.

7. A flosser according to claim 1, **characterised in that** the arm sections are connected to one another in the end section of the grip body which is remote from the holder.

8. A flosser according to one of the claims 1 to 7, **characterised in that** the protective part comprises a further function element, in particular a tongue cleaner (8).

9. A flosser according to one of the claims 1 to 8, **characterised in that** the holder or its holder arms are arranged with respect to the grip body in a manner such that the interdental space cleaning element runs at an angle of smaller than 90° and larger than 0° with respect to the grip body.

10. A flosser according to one of the claims 1 to 9, **characterised in that** a tongue cleaner (8) is arranged on the holder, in particular on a holder arm, and the tongue cleaner comprises a scraper edge (8b), in particular of a hard material.

11. A flosser according to one of the claims 1 to 10, **characterised in that** a tongue cleaner (8) is arranged on the toothpick, and the tongue cleaner in particular comprises several nubs (8a) which form a nub field.

## Revendications

1. Porte-fil dentaire (1) présentant un corps de poignée (2), un support (3) relié avec le corps de poignée et doté d'un premier et d'un deuxième bras de support (6a, 6b) ainsi qu'un élément (4) de nettoyage des espaces interdentaires, fixés au premier et au deuxième bras de support (6a, 6b) et s'étendre entre les deux bras de support,
le porte-fil dentaire contenant un cure-dents (7) situé dans le corps de poignée, le corps de poignée formant deux sections de bras qui définissent un espace intermédiaire (13), l'espace intermédiaire reprenant le cure-dents lorsque ce dernier est en position passive, le cure-dents ayant avec le corps de poignée une configuration plate et le cure-dents étant coplanaire avec le corps de poignée lorsqu'il est en position passive,
**caractérisé en ce que**
une partie pivotante du corps de poignée configurée comme partie de protection peut être pivotée vers l'extérieur sur un angle de pivotement de 180° par l'intermédiaire d'une charnière en film disposée dans le corps de poignée, de telle sorte que le cure-dents peut être sorti du corps de poignée,
**en ce que** la partie de protection assure la protection du cure-dents lorsque ce dernier est en position passive,
**en ce que** la partie de protection est fixée par un ou plusieurs moyens de liaison (9, 10) dans une position fonctionnelle dans laquelle le cure-dents est sortie du corps de poignée,
**en ce que** les moyens de liaison sont conçus pour former une liaison en correspondance géométrique et
**en ce qu'**un premier moyen de liaison contient un creux ou une perforation et un deuxième moyen de liaison contient un rehaussement en forme de bouton ou de tourillon.

2. Porte-fil dentaire selon la revendication 1, **caractérisé en ce que** les deux éléments que sont le creux ou la perforation et le bouton sont conçus pour former en collaboration un pinçage ou un encliquetage.

3. Porte-fil dentaire selon les revendications 1 ou 2, **caractérisé en ce que** le bouton est de forme cylindrique.

4. Porte-fil dentaire selon les revendications 1 à 3, **caractérisé en ce que** le bouton est de forme conique.

5. Porte-fil dentaire selon les revendications 1 à 4, **caractérisé en ce que** la section d'extrémité du bouton est conique.

6. Porte-fil dentaire selon les revendications 1 à 5, **caractérisé en ce que** la hauteur du bouton est de 0.8 à 3 mm.

7. Porte-fil dentaire selon la revendication 1, **caractérisé en ce que** les sections de bras sont reliées l'une à l'autre dans la section d'extrémité du corps de poignée éloignée du support.

8. Porte-fil dentaire selon les revendications 1 à 7, **caractérisé en ce que** la partie de protection contient un autre élément fonctionnel, en particulier un nettoie-langue (8).

9. Porte-fil dentaire selon les revendications 1 à 8, **caractérisé en ce que** le support ou ses bras de support sont disposés par rapport au corps de poignée de telle sorte que l'élément de nettoyage des espaces interdentaires forme avec le corps de poignée un angle inférieur à 90° et supérieur à 0°.

10. Porte-fil dentaire selon les revendications 1 à 9, **caractérisé en ce qu'**un nettoie-langue (8) est disposé sur le support et en particulier sur un bras de support et **en ce que** le nettoie-langue comporte une arête de raclage (8b), en particulier en matériau dur.

11. Porte-fil dentaire selon les revendications 1 à 10, **caractérisé en ce qu'**un nettoie-langue (8) est disposé sur le cure-dents et **en ce que** le nettoie-langue contient plusieurs boutons (8a) qui forment un champ de boutons.
